# EUROPEAN PATENT SPECIFICATION

(11) **EP 1 066 337 B1**
(45) Date of publication and mention of the grant of the patent: **03.11.2004**
(21) Application number: 99912859.8
(22) Date of filing: 24.03.1999
(51) Int. Cl.: C08K 5/09

(54) **OXYGEN SCAVENGERS WITH REDUCED OXIDATION PRODUCTS FOR USE IN PLASTIC FILMS AND BEVERAGE AND FOOD CONTAINERS**
SAUERSTOFFAUFNEHMER MIT REDUZIERTEN OXYDATIONPRODUKTEN UND VERWENDUNG IN EINER KUNSTSTOFFOLIE, IN GETRÄNKE UND IN BEHÄLTER FÜR LEBENSMITTEL
DESOXYGENANTS DEGAGEANT MOINS DE PRODUITS D'OXYDATION ET DESTINES A DES FILMS DE PLASTIQUE ET DES RECIPIENTS POUR BOISSONS ET ALIMENTS

(30) Priority: 25.03.1998 NZ 33007798; 31.07.1998 US 127316
(43) Date of publication of application: 10.01.2001
(73) Proprietor: CHEVRON PHILLIPS CHEMICAL COMPANY LP, Houston, TX 77010 (US); Sealed Air (NZ) Limited, Hamilton (NZ)
(72) Inventor: CHING, Ta, Yen, Novato, CA 94945 (US); CAI, Gangfeng, Danville, CA 94526 (US); DEPREE, Craig, Palmerston North (NZ); GALLAND, Mark, Steven, Orange, TX 77632 (US); GOODRICH, Joseph, L., Lafayette, CA 94549 (US); LEONARD, James, P., San Rafael, CA 94901 (US); MATTHEWS, Andrew, Greer, SC 29650 (US); RUSSELL, Kenneth, W., Orange, TX 77632 (US); YANG, Hu, San Ramon, CA 94583 (US)
(74) Representative: Nash, David Allan
(86) International application number: PCT/US1999/006379
(87) International publication number: WO 1999/048963

(56) References cited:
- EP-A- 0 040 983
- EP-A- 0 418 011
- WO-A-95/02616
- WO-A-96/40799
- DE-A- 1 900 181

## Description

### Field of the Invention

The present invention is directed to oxygen scavengers for use in plastics materials, and in particular plastics films. Emphasis is given to scavengers which produce low or negligible levels of oxidation by-products which may contaminate the head space in a package. This invention also relates to a composition useful in scavenging oxygen from environments containing oxygen-sensitive products, particularly food and beverage products. More specifically, the oxygen scavenging composition includes a polymer having ethylenic unsaturation contained within a cyclic moiety, a transition metal compound and, optionally, a photoinitiator. The present invention also relates to compositions for use in areas such as food packaging, and with minimal effect on odor and taste of packaged contents. The invention preferably uses ethylene acrylate copolymers which are modified with selected cyclic allylic pendent groups for use in oxygen scavenging packaging materials. The present invention also relates to rigid polymeric food or beverage containers comprising polyester such as polyester terephthalate or polyester naphthalate and oxygen scavenging polymer.

### Background of the Invention

The majority of plastic films produced are employed in some form of packaging. The present invention is primarily concerned with those films used for applications requiring a low level of oxygen in a package, though may also find other uses.

Limiting the exposure of oxygen-sensitive products to oxygen maintains and enhances the quality and shelf life of many products. For instance, by limiting the oxygen exposure of oxygen-sensitive food products in a packaging system, the quality of the food product can be maintained and spoilage retarded. In addition, such packaging also keeps the product in inventory longer, thereby reducing costs incurred from waste and having to restock.

In the food packaging industry, several techniques for limiting oxygen exposure have been developed. Common techniques include those where oxygen is consumed within the packaging environment by some means other than the packaged article or the packaging material (e.g., through the use of oxygen scavenging sachets), those where reduced oxygen environments are created in the package (e.g., modified atmosphere packaging (MAP) and vacuum packaging), and those where oxygen is prevented from entering the packaging environment (e.g., barrier films).

The art dealing with barrier packaging, and the low oxygen or modified packaging of products is relatively well developed. This includes the use of films and inserts containing oxygen scavenging compounds able to extract a majority of any residual oxygen after packaging occurs.

Oxygen scavenging compounds for use in plastic films are relatively well known. Typically these comprise unsaturated compounds in combination with a transition metal catalyst. In response to some form of initiation―usually exposure to light or radiation―the scavengers react with available oxygen in the package.

### For instance:

Michael Rooney, "Oxygen scavenging: a novel use of rubber photooxidation", *Chemistry and Industry*, March 20, 1982, pp. 197-198, describes the use of ethylenically unsaturated compounds as oxygen scavengers on exposure to light. However, systems describing the use of transition metal catalysts are not described.

US 4,908,151 to Mitsubishi describes sachets containing unsaturated fatty acid (i.e., an ethylenically unsaturated hydrocarbon) in combination with a transition metal compound in a basic substance. However, there is no description of these materials in the form of a film nor the use of photoexposure as an initiating mechanism.

Japanese patent JP5032277 to Kuwa describes the use of radical containing resin layers in packages. The invention comprises an oxidizable polymer whose oxygen scavenging abilities is photoinitiated.

New Zealand patent application NZ241802 to W R Grace and also NZ243077 also to W R Grace, claim oxygen scavenging compositions comprising ethylenically unsaturated hydrocarbons with transition metal catalysts. A wide range of ethylenically unsaturated compounds are discussed in the texts of these specifications though there is no mention of the problems to which the present invention is directed, nor the compounds and products encompassed by the present invention.

Sachets containing an oxygen scavenging compositions can contain ferrous compositions, which oxidize to their ferric state, unsaturated fatty acid salts on an absorbent, and/or a metal-polyamide complex. See, e.g., U.S. Patent Nos. 4,908,151 and 5,194,478. The disadvantages of sachets include the need for additional packaging steps (to add the sachet to the package), the potential for contamination of the packaged article should the sachet break and the danger of ingestion by a consumer.

Oxygen scavenging materials also have been incorporated directly into the packaging structure. This technique (hereinafter referred to as "active oxygen barrier") can provide a uniform scavenging effect throughout the package and can provide a means of intercepting and scavenging oxygen as it passes through the walls of a package, thereby maintaining the lowest possible oxygen level throughout the package. Active oxygen barriers have been formed by incorporating inorganic powders and/or salts as part of the package. See, e.g., U.S. Patent Nos. 5,153.038, 5,116,660, 5,143,769, and 5,089,323. However, incorporation of such powders and/or salts can degrade the transparency and mechanical properties (e.g., tear strength) of the packaging material and can complicate processing, especially where thin films are desired. Also, these compounds as well as their oxidation products can be absorbed by food in the container, which can result in the food product failing to meet governmental standards for human consumption.

EP 0 519 616 discloses an oxygen scavenging composition that includes a blend of an epoxide, a first polymeric component grafted with an unsaturated carboxylic anhydride and/or acid, a second polymeric component including OH, SH, or NHR² groups where R² is H, C₁-C₃ alkyl, or substituted C₁-C₃ alkyl moiety, and a metal salt capable of catalyzing the reaction between oxygen and the second polymeric component. The first polymeric component is present in an amount sufficient to ensure that the blend is non-phase separated. A blend of polymers is utilized to obtain oxygen scavenging, and the second polymeric component is preferably a (co)polyamide such as MXD6.

Another type of active oxygen barrier is illustrated in EP-A-0 301 719, EP-A-0 380 319, PCT Publication No. WO 90/00578, and PCT Publication No. WO 90/00504. See also U.S. Patent Nos. 5,021,515 5,194,478, and 5,159,005. The disclosed oxygen scavenger includes polyamide-transition metal catalyst compositions. Through catalyzed scavenging by the polyamide, the package wall regulates the amount of oxygen reaching the interior of the package. However, the onset of useful oxygen scavenging (i.e., up to about 5.8 x 10⁻⁵ cm³/m²•24 hours at ambient conditions) can take as long as 30 days to occur. Therefore, this technique is not acceptable for many applications. Further, polyamides typically are incompatible with many thermoplastic polymers commonly used to make flexible packaging materials (e.g., ethylene/vinyl acetate copolymers, low density polyethylene, etc.) or, when used by themselves, are difficult to process and result in inappropriately stiff structures.

Oxygen scavenging compositions that include transition metal catalysts and ethylenically unsaturated hydrocarbon polymers which have an ethylenic double bond content of from 0.01 to 10 equivalents per 100 grams of polymer are disclosed in U.S. Patent No. 5,399,289. Various conventional homopolymers, copolymers, and polymer blends are disclosed. Because these polymers are amorphous, they can be difficult to blend and process with film-forming semicrystalline polymers conventionally used to make flexible packaging materials.

The use of a transition metal and a photoinitiator to facilitate initiation of effective scavenging activity of ethylenically unsaturated compounds is taught in U.S. Patent No. 5,211, 875, which is incorporated herein by reference as if set forth in full.

PCT Publication Nos. WO 95/02616 and WO 96/40799 disclose a scavenger composition that includes a transition metal salt and a copolymer (of ethylene and a vinyl monomer) having ether, amino, carboxylic acid, ester, or amide functionalities pendent therefrom. Although these compositions can provide oxygen scavenging activity, the particular advantages of having ethylenic unsaturation contained within a cyclic moiety are not disclosed. Because the compositions of this invention are significantly cleaner than those described in the prior art, they do not require the use of high levels of adjuncts to absorb the undesirable byproducts. Such absorbent additives are known in the art, for example see U.S. 5,834,079 and U.S. 08/857,276. It is also well known in the art that such additives (zeolites and silicas) adversely affect the haze and clarity of packaging structures.

PCT Application WO 96/40799 from Chevron describes the use of a variety of ethylenic materials with benzylic, allylic or ether containing side chains. Some of these materials may be prepared by esterification or transesterification of a polymer melt. The use of pendent cyclic groups containing allylic unsaturation is generally referred to, but there is only one such example, wherein Nopol, a bicyclic alcohol, is used in a transesterification reaction and oxygen absorbing films are formulated from the product. There is no reference to the benefits of cyclic allylic compounds as described in this invention i.e., on oxidation they produce very low levels of oxidation byproducts when compared to comparable linear allylic systems. Because of its bicyclic nature, Nopol is not expected to produce these benefits.

While the prior art compounds may effectively scavenge oxygen they introduce other problems into packaging. For instance, in summary the prior art incorporates into film structures compounds which are ethylenically unsaturated but which often cleave as a consequence of the reactions of the oxygen scavenging process. For example, films containing unsaturated compounds such as squalene or vegetable oils produce large amounts of volatile aldehydes and ketones upon oxidation. Unfortunately, many of these volatile compounds are not contained within the film structure and find their way into the head space of the package. Here they can represent more of a problem than the oxygen which they have replaced and have the potential to contaminate comestible products.

This problem represents a significant problem yet has been downplayed or overlooked by the published prior art. As a consequence, those searching the prior art for a solution to this problem find no answer the art appears to be directed primarily along a narrow track of improving on scavenging efficiencies, or physical properties of scavenging films, rather than recognizing or addressing other associated problems.

Accordingly the present invention seeks to address the problems associated with scission products of oxygen scavengers, and seeks also to provide a group of compounds and substances (as well as films and plastics materials including same) which have an advantage over the prior art in terms of reduced quantities of scission products.

Ideally, a polymeric material for use in an oxygen scavenging composition should exhibit good processing characteristics, be able to be formed into useful packaging materials or have high compatibility with those polymers commonly used to make packaging materials, and not produce byproducts which detract from the color, taste, or odor of the packaged product. It has been found that when the ethylenic unsaturation is contained within a cyclic group, substantially fewer and less byproducts are produced upon oxidation as compared to analogous non-cyclic materials. Optimally, a packaging material formed from such a composition can retain its physical properties after significant oxygen scavenging.

New polymer compositions having properties that are particularly tailored for specific applications are required in response to more specific and sophisticated end uses. It can be difficult to make these compositions directly by polymerization from monomers or via solution esterification or transesterification, but manufacturing them in melt mixing equipment such as an extruder has provided an efficient, economical and viable means to supply increasingly complex polymers to meet the needs in specialized markets.

It is well known that regulating the exposure of oxygen-sensitive products to oxygen maintains and enhances the quality and "shelf-life" of the product. For instance, by limiting the exposure of oxygen sensitive food products to oxygen in a packaging system, the quality or freshness of food is maintained, spoilage reduced and the food shelf life extended. In the food packaging industry, several means for regulating oxygen exposure have already been developed. These means include modified atmosphere packaging (MAP) and oxygen barrier film packaging.

One method currently being used is "active packaging", whereby the package containing the food product has been modified in some manner to regulate the food's exposure to oxygen. One form of active packaging uses oxygen-scavenging sachets which contain a composition which scavenges the oxygen through oxidation reactions. One type of sachet contains iron-based compositions which oxidize to their ferric states. Another type of sachet contains unsaturated fatty acid salts on a particulate adsorbent. Yet another sachet contains metal/polyamide complex. However, one disadvantage of sachets is the need for additional packaging operations to add the sachet to each package. A further disadvantage arising from the iron-based sachets is that certain atmospheric conditions (e.g., high humidity, low CO₂ level) in the package are sometimes required in order for scavenging to occur at an adequate rate. Further, the sachets can present a problem to consumers if accidentally ingested.

Another means for regulating exposure of a packaged product to oxygen involves incorporating an oxygen scavenger into the packaging structure itself. A more uniform scavenging effect through the package is achieved by incorporating the scavenging material in the package instead of adding a separate scavenger structure (e.g., a sachet) to the package. This may be especially important where there is restricted airflow inside the package. In addition, incorporating the oxygen scavenger into the package structure provides a means of intercepting and scavenging oxygen as it permeates the walls of the package (herein referred to as an "active oxygen barrier"), thereby maintaining the lowest possible oxygen level in the package.

One attempt to prepare an oxygen-scavenging wall involves the incorporation of inorganic powders and/or salts. However, incorporation of these powders and/or salts causes reduction of the wall's optical transparency, discoloration after oxidation, and reduced mechanical properties such as tear strength. In addition, these compounds can lead to processing difficulties, especially when fabricating thin films. The oxidation products may migrate into food at levels which would not be regarded as safe or can impart unacceptable taste or smell to food.

An oxygen-scavenging composition comprising a blend of a first polymeric component comprising a polyolefin is known, the first polymeric component having been grafted with an unsaturated carboxylic anhydride or an unsaturated carboxylic acid, or combinations thereof, or with an epoxide; a second polymeric component having -OH, -SH, or -NHR² groups where R² is H, C₁-C₃ alkyl, substituted C₁-C₃ alkyl; and a catalytical amount of metal salt capable of catalyzing the reaction between oxygen and the second polymeric component, the polyolefin being present in an amount sufficient so that the blend is not phase-separated. A blend of polymers is utilized to obtain oxygen scavenging, and the second polymeric component is preferably a polyamide or a copolyamide such as the copolymer of m-xylylene-diamine and adipic acid (MXD6).

Some oxygen scavenging systems produce an oxygen-scavenging wall. This is done by incorporating a metal catalyst-polyamide oxygen scavenging system into the package wall. Through catalyzed oxidation of the polyamide, the package wall regulates the amount of oxygen which reaches the interior volume of the package (active oxygen barrier) and has been reported to have oxygen scavenging rate capabilities up to about 5 cubic centimeters (cc) oxygen per square meter per day at ambient conditions. However, this system suffers from significant disadvantages.

One particularly limiting disadvantage of polyamide/catalyst materials can be a low oxygen scavenging rate. Adding these materials to a high-barrier package containing air can produce a package which is not generally suitable for creating an internal oxygen level of less than 0.1% within seven days at storage temperatures, as is typically required for headspace oxygen scavenging applications.

There are also disadvantages to having the oxygen-scavenging groups in the backbone or network structure in this type of polyamide polymer. The basic polymer structure can be degraded and weakened upon reaction with oxygen. This can adversely affect physical properties such as tensile or impact strength of the polymer. The degradation of the backbone or network of the polymer can further increase the permeability of the polymer to those materials sought to be excluded, such as oxygen.

Moreover, polyamides previously used in oxygen scavenging materials, such as MXD6, are typically incompatible with thermoplastic polymers used in most flexible packaging walls, such as ethylene-vinyl acetate copolymers and low density polyethylene. Even further, when such polyamides are used by themselves to make a flexible package wall, they may result in inappropriately stiff structures. They also incur processing difficulties and higher costs when compared with the costs of thermoplastic polymers typically used to make flexible packaging. Even further, they are difficult to heat seal. Thus, all of these are factors to consider when selecting materials for packages, especially multi-layer flexible packages and when selecting systems for reducing oxygen exposure of packaged products.

Another approach to scavenging oxygen is an oxygen-scavenging composition comprising an ethylenically unsaturated hydrocarbon and a transition metal catalyst. Ethylenically unsaturated compounds such as squalene, dehydrated castor oil, and 1,2-polybutadiene are useful oxygen scavenging compositions, and ethylenically saturated compounds such as polyethylene and ethylene copolymers are used as diluents. Compositions utilizing squalene, castor oil, or other such unsaturated hydrocarbon typically have an oily texture as the compound migrates toward the surface of the material. Further, polymer chains which are ethylenically unsaturated in the backbone would be expected to degrade upon scavenging oxygen, weakening the polymer due to polymer backbone breakage, and generating a variety of off-odor/off-taste by-products.

Other oxidizable polymers recognized in the art include "highly active" oxidizable polymers such as poly(ethylene-methyl acrylate-benzyl acrylate), EMBZ, and poly(ethylene-methyl acrylate-tetrahydrofurfuryl acrylate), EMTF, as well as poly(ethylene-methyl acrylate-nopol acrylate), EMNP. Although effective as oxygen scavengers, these polymers have the drawback of giving off large amounts of volatile by-products and/or strong odors after oxygen scavenging.

Also known are oxygen-scavenging compositions which comprise a transition-metal salt and a compound having an ethylenic backbone and having allylic pendent or terminal moieties which contain a carbon atom that can form a free radical that is resonance-stabilized by an adjacent group. Such a polymer needs to contain a sufficient amount and type of transition metal salt to promote oxygen scavenging by the polymer when the polymer is exposed to an oxygen-containing fluid such as air. Although effective as oxygen scavengers, upon oxidation, we have found that allylic pendent groups on an ethylenic backbone tend to generate considerable amounts of organic fragments. We believe this is a result of oxidative cleavage. We believe these fragments can interfere with the use of allylic pendent groups as oxygen scavengers in food packaging.

Multilayer rigid container structures, which utilize an oxygen scavenging composition, are known. In the container wall, base polymers such as polyethylene terephthalate have been used along with an oxygen scavenger. The resulting multilayer package wall includes at least an oxygen scavenger core layer as well as inner and outer layers having high oxygen barrier qualities. The oxygen scavenger core layer is a combination of at least an oxygen scavenging polymer with post consumer polyethylene terephthalate (PC-PET). The inner and outer layers include at least oxygen barrier quality PET.

Furthermore, multilayered plastic bottles having oxygen scavenging capacity sufficient to maintain substantially zero or near zero presence of oxygen in the bottle cavity under specified storage conditions have also been disclosed. The multilayered bottle wall has at least three layers. The inner and outer layers are PET or another bottling polyester, which define the bottle cavity and the outside skin of the bottle respectively. Between the inner and outer layers is an oxygen scavenging copolyester layer.

Condensation copolymers used for making bottles with polyester such as PET or polyethylene naphthalate (PEN) have also been disclosed. The condensation copolymers comprise predominantly polyester segments and an oxygen scavenging amount of polyolefin oligomer segments. The copolymers are preferably formed by transesterification during reactive extrusion and typically comprise about 0.5 to about 12 wt. % of polyolefin oligomer segments. In a preferred embodiment, a bottle is provided having a multilayer wall of at least three layers. The outer and inner layers are of unmodified PET and the oxygen scavenging layer in between the outer and inner layer is made of the condensation copolymers described above having an oxygen scavenging amount of polyolefin oligomers.

A transparent oxygen-scavenging article for packaging oxygen sensitive products is also known, the oxygen-scavenging article having a multilayered wall including at least three layers, an inner and outer layer of biaxially-oriented aromatic polyester polymers such as PET or PEN and an oxygen-scavenging aromatic ester polymer compatible with the polyester polymer. The oxygen-scavenging aromatic ester polymer must include ketone carbonyl groups to provide the oxygen-scavenging functionality and aromatic and ester groups for compatibility with the polyester.

PET containers have been disclosed that have a container wall of stretched plastic material with high oxygen barrier properties and an activating metal incorporated into the plastic material. The plastic material is PET in admixture with a polyamide and the metal is either added to the mixture or contained in one or both of the polymers.

A container containing at least one layer containing a plastics material and ions of at least one metal has also been disclosed. The plastics material in the layer consists of at least a partially split or degraded polyamide which has increased sensitivity to reaction with oxygen in the presence of metal thus giving the layer improved oxygen barrier properties.

A container has been disclosed with a wall having high oxygen barrier properties comprising a molded polymer composition, the composition comprising a granular mixture of (1) a first polymer providing essential strength for the container wall and (2) an active component comprising a metal compound capable of scavenging oxygen and consisting essentially of a metal ion having complexing properties and a polymer to which said metal ion is combined as a metal complex in the molded polymer composition of said wall to scavenge oxygen. There is also disclosed a method of producing the polymer composition which can be molded into containers, the method being to treat a polymer with a metal compound dissolved or slurried in a volatile solvent composition during refluxing conditions for obtaining the active component having capacity to scavenge oxygen.

An article has been disclosed with oxygen barrier properties comprising at least partly a molded polymer composition formed by melting granules of the composition and molding the melted composition to produce the article. The composition comprises a granular mixture of (1) a first polymer composition providing strength for the article and (2) a second polymer composition compatible with the first polymer composition. The second polymer composition is obtainable by reacting a polyamide or copolyamide with a solution of a transition metal compound in a volatile solvent under refluxing conditions. The polymer of the first polymer composition can be any polymer and the metal of the metal compound reacted with the polyamide or copolyamide can be any transition metal. The amount of metal in the second polymer composition is at least 500 ppm.

A polymer material having increased sensitivity to reaction with oxygen has also been disclosed, the polymer material comprising a polyamide, which has been reacted with a nucleophilic reagent and possibly an activator. The nucleophilic reagent is selected from the group consisting of compounds containing at least one hydroxyl group, compounds containing at least one alkoxide group, phosphate compounds, pyrophosphate compounds, polyphosphate compounds, salts of organic acids and a copolymer of vinyl alcohol and ethylene. The activator is in the form of a hydrogen donor. A process is also disclosed for producing the polymer material, which has increased sensitivity of reaction with oxygen. In the process, a polyamide reacts with the nucleophilic reagent under such conditions that the polymer material is obtained.

Such polymeric containers of PET, PEN and/or polyamide as described above utilize oxidizable components to react with and decrease the amount of oxygen in contact with oxygen sensitive materials packaged in containers. All of these oxidizable materials have the disadvantage of imparting unpleasant odor and/or taste to the packaged materials because of the byproducts given off during the oxidation of the oxidizable materials. Another problem is the uncontrolled oxidation fragmentation from the polymer backbone which leads to chain secession, thus weakening the physical integrity of the multilayer container structures.

The present invention solves many of the problems of the prior art, especially with an oxygen scavenging packaging material incorporating polymers comprising cyclic allylic (olefinic) pendent groups which produce little or no migration of oxidation by-products adversely affecting odor or taste, thus minimizing organoleptic problems in food packaging. This is because the cyclic allylic structures are less likely to fragment or cleave after oxidation than the conventional open chain allylic (olefinic) groups used in oxygen scavenging packaging material.

Such polymeric containers of PET, PEN and/or polyamide as described above utilize oxidizable components to react with and decrease the amount of oxygen in contact with oxygen sensitive materials packaged in containers. All of these oxidizable materials have the disadvantage of imparting unpleasant odor and/or taste to the packaged materials because of the byproducts given off during the oxidation of the oxidizable materials. Another problem is the uncontrolled oxidation fragmentation from the polymer backbone which leads to chain secession, thus weakening the physical integrity of the multilayer container structures.

In contrast, the present invention achieves a rigid beverage and food container comprising PET and/or PEN, the container incorporating an oxygen scavenging component of cyclic olefin which does not give off odor and or taste as a result of its oxygen scavenging function. The oxidation also does not cause a change in molecular weight. This is because the cyclic olefin oxygen scavenging component does not fragment as it oxidizes, thus avoiding the problem of imparting oxidation byproducts to the packaged material while maintaining the structural integrity.

It is an object of the present invention to address the foregoing problems or at least to provide the public with a useful choice.

Further aspects and advantages of the present invention will become apparent from the ensuing description, which is given by way of example only.

### SUMMARY OF INVENTION

According to a first aspect of the invention, there is provided a composition suitable for scavenging oxygen comprising a mixture of: (a) a polymer or oligomer compromising a polymeric backbone, cyclic olefinic pendent groups, linking groups linking the olefinic pendent groups to the backbone, wherein the polymeric backcone, linking groups and cyclic olefinic pendent groups comprimise repeating units, each unit having a structure (III) as follows: 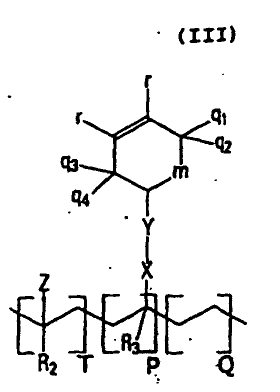 wherein P+T+Q is 100 mol % of the total composition; P is greater than 0 mol % of the total composition; Z is selected from the group consisting of an aryl group; -(C=O)OR₁;-O(C=O)R₁; and an alkyl aryl group of the structure: 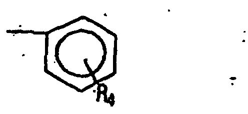 wherein R₄ is selected from the group consisting of -CH₃, -C₂H₅, and -H; R₁ is selected from the group consisting of -H,-CH₃, -C₂H₅, -C₂H₇, and -C₄H₉; R₂ and R₃ are selected from the group consisting of -H and -CH₃; X is selected from the group consisting of -O-, -NH-, -(C=O)O-, -(C=O)NH-, -(C=O)S-, -O(C=O)- and -(CHR)_{ℓ}; ℓ is an integer in the range from 1 to 6; Y is -(CHR)ₙ- or, when X is -(C=O)O-, Y is -(CHR)ₙ- or CHOH-CH₂-O-, where n is an integer in the range from 0 to 12, R being selected from the group consisting of -H, -CH₃ and -C₂H₅; where q₁, q₂, q₃, q₄ and r are selected from the group consisting of -H, -CH₃, and -C₂H₅; and where m is -(CH₂)ₙ- and where n is an integer in the range from 0 to 4; and wherein when r is -H, at least one of q₁, q₂, q₃, q₄ is -H; and (b) a transition metal catalyst.

The composition may produce only low levels of volatile or extractable (from a plastics material in which it is incorporated) products as a consequence of oxygen scavenging.

The composition may be substantially stable with respect to reaction with oxygen until triggered by an external event, for example, electromagnetic radiation. The oxygen scavenging composition may include one or more trigger enhancing components making the scavenger susceptible to triggering from an external event. The trigger-enhancing component may be benzophenone or substituted benzophenone.

The transition metal catalyst may be a transition metal salt, compound or complex.

The oxygen scavenging composition may be in the form of a plastics resin. The plastics resin may be a resin suitable for use in the manufacture of plastics films such as a polyester resin.

The oxygen scavenging composition may be present in a plastics film or layer thereof. The oxygen scavenging composition may be use as a polymeric material of a plastics film, a layer thereof, and/or a coating thereof, or in a plastics material. The oxygen scavenging composition may be dispersed throughout a plastics film, a layer thereof, and/or a coating thereon, or in a plastics material.

The composition may be prepared from the reaction (e.g. by heating) of a tetrahydrophthalic anhydride or tetrahydrophthalic acid with at least one of a diol, a hydroxy compound or polyhydroxy compound, in the presence of or absence of an esterification catalyst. The anhydride may comprise 1,2,3,6-tetrahydrophthalic anhydride or tetrahydrophthalic anhydride monomer derivable from butadiene. The composition may be prepared from an ester or diester of a tetrahydrophthalic anhydride, in the presence of or absence of a transesterification or esterification catalyst. The anhydride may comprise 1,2,3,6-tetrahydrophthalic anhydride or tetrahydrophthalic anhydride monomer derivable from butadiene, 2,3-Dimethyl-1,3-butadiene or isoprene.

The composition may be prepared from the reaction of a tetrahydrobenzyl alcohol with one or more compounds having one or more of the following functionalities: carboxylic acid, acid halide, ester, anhydride, and isocyanate. The alcohol may comprise tetrahydrobenzyl alcohol. The compounds with which the alcohol is reacted may include a styrene maleic anhydride copolymer, and/or a polyfunctional isocyanate.

The oxygen scavenging composition may be prepared from a cyclohexene dimethanol compound.

The oxygen scavenging polymer may includine at least one pendant cyclohexene group prepared by a reactive extrusion process. The reactive extrusion process may comprise an esterification or transesterification step. Suitable catalyst include acids, bases and organometallic compounds such as the titanium alkoxides.

The oxygen scavenging polymer may be prepared by a route including a cyclohexene anhydride.

The oxygen scavenging polymer may be prepared by a route including the reaction of a diene monomer, or hydroxy containing monomer, with a cyclic anhydride. The cyclic anhydride may be a maleic anhydride.

The oxygen scavenger may includine a pendant cyclic alkene group prepared via a method including a Diels Alder addition reaction. The preferred dienes for use in the Diels Alder reaction is substituted and/or unsubstituted 1,3 butadiene. The preferred dienophile for use in the Diels Alder reaction include unsaturated acids, anhydrides, and esters. The cyclic alkene may be cyclohexene

The present invention also provide an article which include at least one layer formed from a blend that includes the foregoing composition as well as a method of scavenging oxygen in which a packaging article, at least one layer of which is formed from a blend that includes the foregoing composition, is exposed to actinic or e-beam radiation so as to activate the composition.

According to another aspect of the present invention, there is provided an oxygen scavenger or oxygen scavenging composition, substantially as described above, in the compounds with which the alcohol is reacted may include a styrene maleic anhydride copolymer, and/or a polyfunctional isocyanate.

According to another aspect of the present invention, there is provided an oxygen scavenger or oxygen scavenging composition, prepared from a cyclohexene dimethanol compound.

According to another aspect of the present invention, there is provided an oxygen scavenging polymer including at least one pendant cyclohexene group prepared by a reactive extrusion process.

According to a further aspect of the present invention, there is provided an oxygen scavenger or oxygen scavenging polymer, substantially as described above, in which the reactive extrusion process comprises an esterification or transesterification step. Suitable catalyst include acids, bases and organometallic compounds such as the titanium alkoxides.

According to another aspect of the present invention, there is provided an oxygen scavenger or oxygen scavenging polymer prepared by a route including a cyclohexene anhydride.

According to another aspect of the present invention, there is provided an oxygen scavenger or oxygen scavenging polymer prepared by a route including the reaction of a diene monomer, or hydroxy containing monomer, with a cyclic anhydride.

According to another aspect of the present invention, there is provided an oxygen scavenger or oxygen scavenging polymer, substantially as described above, in which the cyclic anhydride is a maleic anhydride.

According to a further aspect of the present invention, there is provided an oxygen scavenger including a pendant cyclic alkene group prepared via a method including a Diels Alder addition reaction.

According to another aspect of the present invention, there is provided an oxygen scavenger, substantially as described above, in which the preferred dienes for use in the Diels Alder reaction is substituted and/or unsubstituted 1,3 butadiene.

According to another aspect of the present invention, there is provided an oxygen scavenger, substantially as described above, in which the preferred dienophile for use in the Diels Alder reaction include unsaturated acids, anhydrides, and esters.

According to another aspect of the present invention, there is provided an oxygen scavenger, substantially as described above, in which the cyclic alkene is cyclohexene.

In other aspects, the present invention provides an article which include at least one layer formed from a blend that includes the foregoing composition as well as a method of scavenging oxygen in which a packaging article, at least one layer of which is formed from a blend that includes the foregoing composition, is exposed to actinic or e-beam radiation so as to activate the composition.

The oxygen scavenging composition may be prepared from a tetrahydrophthalic anhydride and a polymer or lower molecular weight compound containing at least one amine group.

The oxygen scavenging composition may be prepared from diglcidyltetrahydrophthalate.

The oxygen scavenging composition may be prepared from the reaction of tetrahydrobenzyl alcohol, methyl or dimethyl substituted tetrahydrobenzyl alcohol with one or more compounds having one or more of the following functionalities: carboxylic acid, acid halide, ester, anhydride, epoxide and isocyanate.

The tetrahydrobenzyl alcohol or substituted tetrahydrobenzyl alcohol may react with one or more of the following materials:
ethylene (meth)acrylic acid and other acid containing polymers and acid containing lower molecular weight materials;
styrene maleic anhydride copolymers; alpha olefin maleic anhydride copolymers such as octadecene maleic anhydride; ethylene and ethylene alpha olefin maleic anhydride terpolymers; ethylene alkyl (meth) acrylate maleic anhydride terpolymers and other like anhydride containing polymers or anhydride containing lower molecular weight materials;
polymeric or lower molecular weight materials containing acid halide functionality such as poly acryloyl chloride;
ethylene alkyl (meth)acrylate copolymers and terpolymers and alternative polymers or lower molecular weight materials containing lower alkyl ester functionality;
epoxy resins;
isocyanate functional material such as prepolymers and oligomers derived from the common diisocyanates such as MDI, TDI and the like.

The oxygen scavenging composition may be prepared from a dihydroxy cyclohexene compound. For example, 3 Cyclohexene-1,1-dimethanol or its substituted derivatives may be used to prepare polyurethane and polyester resins.

The composition may be prepared from a cyclohexene carboxylic acid. Such materials may be prepared from acrylic acid and substituted and unsubstituted butadienes. A typical example would be tetrahydrobenzoic acid, derived from acrylic acid and butadiene. This may be reacted with the following materials:
hydroxyl functional materials such as poly(vinyl alcohol) and polyethylene-vinyl alcohol, hydroxyl functional oligomers such as poly(ethylene glycol), the polyester polyols and other lower molecular weight hydroxyl functional materials;
amine functional polymers and lower molecular weight compounds;
polyvalent metal ions.

The oxygen scavenger composition may be prepared from a cyclohexene functional acid chloride. Example 9 utilizes 3-cyclohexene-1-carbonyl chloride.

The oxygen scavenging composition may be prepared from tetrahydrobenzaldehyde and its substituted derivatives. These may be prepared from reaction of butadiene or the methyl substituted butadienes with acrolein.

The tetrahydrobenzaldehydes may be reacted with hydroxyl functional polymers such as poly(vinyl alcohol) and polyethylene-vinyl alcohol to form polyvinyl acetals.

The following definitions apply herein throughout unless a contrary intention is expressly indicated:
"polymer" means the polymerization product of one or more monomers and includes homopolymers, as well as copolymers;
"copolymer" means the polymerization product of two or more kinds of monomers;
"(meth)acrylate" means acrylate or methacrylate;
"photoinitiator" means a substance which, when activated by actinic radiation, enhances and/or facilitates the initiation of one or more properties (e.g., oxygen scavenging) in another compound, thus resulting in a shorter induction period and/or an increase in the rate of oxygen uptake of the overall system;
"induction period" means the length of time beginning with the initiation of the active components of a composition and ending with the onset of one or more useful properties (e.g., oxygen scavenging); and
"antioxidant" means a material which can inhibit oxidative degradation and/or crosslinking of a poly polymer so as to, for example, prolong the useful lifetime of the polymer, to stabilize a polymer-containing composition during processing (e.g., extrusion, coating, lamination, etc.); and/or to prolong the shelf-life of the composition (prior to exposure thereof to actinic or e-beam radiation).

The present invention is directed to a composition suitable for scavenging oxygen. The oxygen scavengers will be characterized in that they will be able to react with oxygen in their near vicinity, enabling the removal of oxygen from a closed system.

While the actual form of the oxygen scavengers may vary. a characteristic that they each share is they include cyclic alkene groups or functionalities, which are able to react with oxygen to provide the desired oxygen scavenging properties and which comprise a cyclohexene group i.e. a six-membered ring with double bond between two adjacent carbon atoms. It is acceptable that some carbons of the cyclohexene group may also form a part of other ring structures within the molecule, and/or form part of the skeleton of the molecule. It is not necessary that the entire C₆ ring be dangling free of the remainder of the molecule to which it is attached. A consideration however is that the group should be so positioned and incorporated into the structure that the double bond is available for reaction with oxygen.

The present invention is implemented by the formation or modification of polymers to contain the desired scavenging functionalities and groups. In such cases, the film or plastics material itself will possess oxygen scavenging properties. It is envisaged that such materials may exist as layers in multi-layer films. Such polymers may also be introduced as copolymers or blends in film and plastics manufacturing methods.

The above instances of how embodiments of the present invention may be used are illustrative only. It is noted that the use of oxygen scavenging materials is known in the art, and that art may be drawn upon to further expand the illustrative examples given within this specification.

Embodiments of the present invention based on cyclohexene groups appear to afford significant advantage over the prior art. This advantage is in the number and nature of the oxidation product once the scavenging is completed. In the prior art, heavily reliance is made on straight chain alkenes, such as for instance fatty acids. The problem however, is that film containing unsaturated compounds such as squalene or vegetable oils produce large amounts of volatile aldehydes and ketones upon oxidation. These tend to be released, or leach, from the plastics material over time, usually find their way into the head space of the packaged material. The presence of these foreign substances can represent a significant problem, which the use of cyclohexene scavenging groups addresses at least partially.

In comparison, there are significantly less scission products from oxidation reactions involving cyclohexene groups―the oxidation of the cyclohexene group does not normally involve ring breakage. If the remainder of the molecule to which the cyclohexene group is attached is bound or linked to the polymeric structure of the material in which it is incorporated or affixed, or otherwise bound or held in place to the material through which it is dispersed or incorporated, then there is little chance of there being any free scission products able to find their way from the film or material structure.

Other aspects of the present invention to some extent parallel the prior art. For instance, it is desirable that the oxygen scavenging materials are relatively stable (with respect to scavenging) until required. In many cases, catalysis and/or triggering of any reaction is required. Photo-initiators such as benzophenone may be included. Initiating or triggering by electromagnetic irradiation (often in the visible through UV regions) is convenient form of triggering and already used in some types of film manufacture. It is also used for triggering many prior art oxygen scavengers and thus employing these features and techniques of the prior art with the present invention is envisaged.

As for most other oxygen scavengers relying on alkenes, some form of catalyst is also required for the oxygen scavenging reactions to proceed effectively. Typically transition metal catalysts are used, including their salts, complexes, and other compounds. These are well documented in the prior art and may also be used with the present invention as appropriate.

The present invention provides an article of manufacture which is suitable as a container, the container inhibiting oxidation of contents of the container by removing oxygen from the container and by inhibiting ingress of oxygen into the container from outside the container, the article comprising an oxygen scavenging composition as described above.

The oxygen scavenging composition may be provided in the form of a layer.

In another aspect of the present invention there is provided a process of making a Polymer material selected from the group consisting of esterification, transesterification, amidation, transamidation and direct polymerizationwherein the polymer material comprises a polymeric backbone, cyclic olefinic pendent groups, and linking groups linking the backbone with the pendent groups, wherein the polymeric backcone, linking groups and cyclic olefinic pendent groups comprimise repeating units, each unit having a structure (III) as follows: 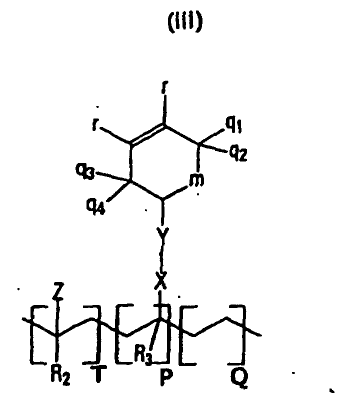 wherein P+T+ Q is 100 mol % of the total composition; P is greater than 0 mol % of the total composition; Z is selected from the group consisting of an aryl group; -(C=O)OR₁; -O (C=O) R₁; and an alkyl aryl group of the structure: 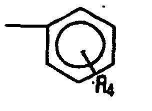 wherein R₄ is selected from the group consisting of -CH₃, -C₂H₅, and -H; R₁ is selected from the group consisting of -H,-CH₃, -C₂H₅, -C₂H₇, and -C₄H₉; R₂ and R₃ are selected from the group consisting of -H and -CH₃; X is selected from the group consisting of -O-, -NH-, -(C=O)O-, -(C=O)NH-, -(C=O)S-, -O(C=O)- and -(CHR)_{ℓ}; ℓ is an integer in the range from 1 to 6; Y is -(CHR)ₙ- or, when X is -(C=O)O-, Y is -(CHR)ₙ- or CHOH-CH₂-O-, where n is an integer in the range from 0 to 12, R being selected from the group consisting of -H, -CH₃ and -C₂H₅; where q₁, q₂, q₃, q₄ and r are selected from the group consisting of -H, -CH₃, and -C₂H₅; and where m is -(CH₂)ₙ- and where n is an integer in the range from 0 to 4; and wherein when r is -H, at least one of q₁, q₂, q₃, q₄ is -H.

The polymeric backbone of the above compositions, article, layer and process may be ethylenic and the linking groups are selected from the group consisting of:
-O- (CHR)ₙ-; -(C=O)-O-(CHR)ₙ-; -NH-(CHR)ₙ-; -O-(C=O)-(CHR)ₙ-; -(C=O)-NH-(-CHR)ₙ-; and -(C=O)-O-CHOH-CH₂-O-;
wherein R is hydrogen or an alkyl group selected from the group consisting of methyl, ethyl, propyl and butyl groups and where n is an integer in the range from 1 to 12.

The cyclic olefinic pendent groups of the above compositions, article, layer and process may have the structure (II): 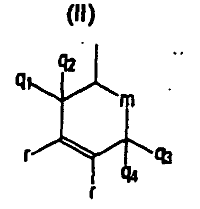 where q₁, q₂, q₃, q₄, and r are selected from the group consisting of -H, -CH₃, and -C₂H₅; and where m is -(CH₂)ₙ- with n being an integer in the range from 0 to 4; and wherein, when r is -H, at least one of q₁, q₂, q₃ and q₄ is -H.

The polymeric backbone of the above compositions, article, layer and process may comprise monomers selected from the group consisting of ethylene and styrene.

The cyclic olefinic pendent groups of the above compositions, article, layer and process may be grafted onto the linking groups of the polymeric backbone by an esterification. transesterification, amidation or transamidation reaction. The esterification, transesterification, amidation or transamidation reaction of the above compositions, article, layer and process may be a solution reaction or a reactive extrusion. The esterification, transesterification, amidation or transamidation reaction of the above compositions, article, layer and process may be catalysed by a catalyst selected from the group consisting of strong non-oxidizing acids, tertiary amine, Group I alkoxides, Group IVB alkoxides, and Group IVA organometallics.

The catalyst the above compositions, article, layer and process may be selected from a group consisting of toluene sulfonic acid, sodium methoxide, tetrabutyl titanate, teraisopropyl titanate, tetra-n-propyl titanate, tetraethyl titanate, 2-hydroxy-pyridine and dibutyltin dilaurate.

In still another preferred embodiment of the invention, the polymeric backbone, linking. groups and cyclic olefin pendent groups of the above compositions, article, layer and process comprise repeating units, each unit having a structure (III) as follows: 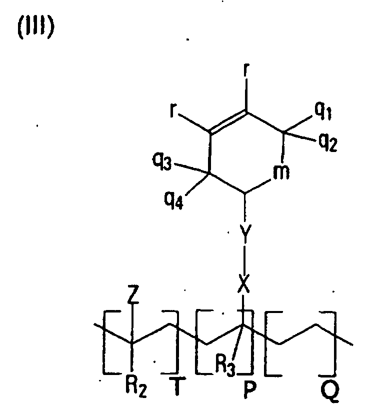 wherein P+T+ Q is 100 mol % of the total composition; P is greater than 0 mol % of the tot al composition; Z is selected from the group consisting of an aryl group; -(C=O)OR₁; -O(C=O)R₁; and an alkyl aryl group, structure (IV): 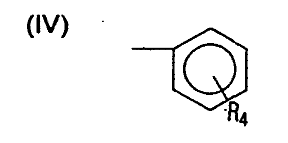 where R₄ is selected from the group consisting of -CH₃, -C₂H₅, and -H; R₁ is selected from the group consisting of -H, -CH₃, -C₂H₅, -C₃H₇ and -C₄H₉; R₂ and R₃ are selected from the group consisting of -H and -CH₃; X is selected from the group consisting of -O-, -NH-, -(C=O)O-, -(C=O)NH-, -(C=O)S-, -O(C=O)- and -(CHR)_{ℓ}-; ℓ is an integer in the range from 1 to 6; Y is -(CHR)ₙ-, where n is an integer in the range from 0 to 12, R being selected from the group consisting of -H, -CH₃ and -C₂H₅; where q₁, q₂, q₃, q₄, and r are selected from the group consisting of -H, -CH₃, and -C₂H₅; and where m is -(CH₂)ₙ-.

In another preferred embodiment of the invention, the cyclic olefinic pendent groups of the above compositions, article, layer and process are selected from the group consisting of cyclohexene-4-methylene radical, 1-methyl cyclohexene-4-methylene radical, 2-methyl cyclohexene-4-methylene radical, 5-methyl cyclohexene-4-methylene radical, 1,2-dimethyl cyclohexene-4-methylene radical, 1,5-dimethyl cyclohexene-4-methylene radical, 2,5-dimethyl cyclohexene-4-methylene radical, 1,2,5-trimethyl cyclohexene-4-methylene radical, cyclohexene-4-ethylene radical, 1-methyl cyclohexene-4-ethylene radical, 2-methyl cyclohexene-4-ethylene radical, 5-methyl cyclohexene-4-ethylene radical, 1,2-dimethyl cyclohexene-4-ethylene radical, 1,5-dimethyl cyclohexene-4-ethylene radical, 2,5-dimethyl cyclohexene-4-ethylene radical, 1,2,5-trimethyl cyclohexene-4-ethylene radical, cyclohexene-4-propylene radical, 1-methyl cyclohexene-4-propylene radical, 2-methyl cyclohexene-4-propylene radical, 5-methyl cyclohexene-4-propylene radical, 1 ,2-dimethyl cyclohexene-4-propylene radical, 1,5-dimethyl cyclohexene-4-propylene radical, 2,5-dimethyl cyclohexene-4-propylene radical, 1,2,5-trimethyl cyclohexene-4-propylene radical, cyclopentene-4-methylene radical, 1-methyl cyclopentene-4-methylene radical, 3-methyl cyclopentene-4-methylene radical, 1,2-dimethyl,cyclopentene-4-methylene radical, 3,5-dimethyl cyclopentene-4-methylene radical, 1,3-dimethyl cyclopentene-4-methylene radical, 2,3-dimethyl cyclopentene-4-methylene radical, 1,2,3-trimethyl cyclopentene-4-methylene radical, 1,2,3,5-tetramethyl cyclopentene-4-methylene radical, cyclopentene-4-ethylene radical, 1-methyl cyclopentene-4-ethylene radical, 3-methyl cyclopentene-4-ethylene radical, 1,2-dimethyl cyclopentene-4-ethylene radical, 3,5-dimethyl cyclopentene-4-ethylene radical, 1,3-dimethyl cyclopentene-4-ethylene radical, 2,3-dimethyl cyclopentene-4-ethylene radical, 1,2,3-trimethyl cyclopentene-4-ethylene radical, 1,2,3,5-tetramethyl cyclopentene-4-ethylene radical, cyclopentene-4-propylene radical, 1-methyl cyclopentene-4-propylene radical, 3-methyl cyclopentene-4-propylene radical, 1,2-dimethyl cyclopentene-4-propylene radical, 3,5-dimethyl cyclopentene-4-propylene radical, 1,3-dimethyl cyclopentene-4-propylene radical, 2,3-dimethyl cyclopentene-4-propylene radical, 1,2,3-trimethyl cyclopentene-4-propylene radical, and 1,2,3,5-tetramethyl cyclopentene-4-propylene radical.

The composition of the above compositions, article, layer and process may be ethylene/methyl acrylate/cyclohexenyl methyl acrylate terpolymer, a cyclohexenyl methyl acrylate/ethylene copolymer, a cyclohexenyl methyl methacrylate/styrene copolymer, a cyclohexenyl methyl acrylate homopolymer or a methyl acrylate/cyclohexenyl methyl acrylate copolymer.

The odor and taste characteristics of products packaged with material comprised of the above compositions, article, layer and process are desirably not adulterated as a result of oxidation of the composition.

Further, no significant fragmentation of the olefinic pendent groups and linking groups from the polymeric backbone may desirably result from oxidation of the above compositions, article, layer and process.

The transition metal catalyst of the above oxygen scavenging composition, article of manufacture, layer and process may be a metal salt.

The metal in the metal salt of the above oxygen scavenging composition, article of manufacture, layer and process may be cobalt.
The metal salt of the above oxygen scavenging composition, article of manufacture, layer and process may be selected from the group consisting of cobalt neodecanoate, cobalt 2-ethylhexanoate, cobalt oleate and cobalt stearate.

The composition of the above oxygen scavenging composition, article of manufacture, layer and process may further comprise at least one triggering material to enhance initiation of oxygen scavenging.

The triggering material of the above oxygen scavenging composition, article of manufacture, layer and process may be a photo initiator.

The above article of manufacture may be a package.

The package article of the above article of manufacture may comprise a flexible film having a thickness of at most 10 mil or a flexible sheet having a thickness of at least 10 mil.

The oxygen scavenging composition of the package article of the above article of manufacture may comprise at least one additional layer selected from among oxygen barrier layers, polymeric selective layers, and heat seal layers.

The above article of manufacture may be a package with a food product located within the package. The above article of manufacture may be a package for packaging a cosmetic, chemical, electronic device, pesticide or a pharmaceutical composition.

A multi-layer film may comprises the article of the above article of manufacture and the film may have at least one additional functional layer.

The multi-layer film of the above article of manufacture may have at least one additional layer selected from among oxygen barrier layers, polymeric selective barrier layers, structural layers and heat seal layers.

The multi-layer film of the above article of manufacture may have at least one additional layer which is an oxygen barrier layer.

The multi-layer film of the above article of manufacture may further comprise at least one polymeric selective barrier layer.

The multi-layer film of the above article of manufacture may further comprise at least one heat seal layer.

The multi-layer film of the above article of manufacture may further comprise at least one structural layer.

The above article of manufacture may be a rigid container, sealing gasket, patch, container closure device, bottle cap, bottle cap insert or molded or thermoformed shape.

The molded or thermoformed shape of the above article of manufacture may be a bottle or tray.

The above layer in addition may comprise polymeric diluent.

The diluent of the above layer may be a thermoplastic polymer.

The above layer may be adjacent to one or more additional layers.

At least one of the additional layers adjacent to the above layer may be an oxygen barrier.

The oxygen barrier of the above layer may comprise a member of the group consisting of poly(ethylenevinyl alcohol), polyacrylonitrile, poly(vinyl chloride), polyamides, poly(vinylidene dichloride), poly(ethylene terephthalate), silica, metal foil and metalized polymeric films.

The one or more of said additional layer or layers of the above layer may be coextruded with the above layer.

The one or more of said additional layer or layers of the above layer may be laminated onto the above layer.

The one or more of said additional layer or layers of the above layer may be coated onto the above layer.

The above layer may be flexible.

The above layer may be transparent.

An article for packaging may comprise the above layer.

The above process of making the oxygen scavenging packaging material may comprise the steps of:
(a) selecting polymers from the group consisting of styrene/maleic anhydride, ethylene/maleic anhydride, ethylene/acrylic acid, ethytene/methacrytic acid, acrylic acid, methacrylic acid, styrene/methacrylic acid, ethylene/methyl acrylate, ethylene/ethyl acrylate, ethylene/butyl acrylate, methyl methacrylate, methyl acrylate, and styrene/methyl methacrylate to form a mixture and combining the polymers with an esterifying/transesterifying compound selected from the group consisting of cyclohexene-4-methanol, 1-methyl cyclohexene-4-methanol, 2-methyl cyclohexene-4-methanol, 5-methyl cyclohexene-4-methanol, 1,2-dimethyl cyclohexene-4-methanol, 1,5-dimethyl cyclohexene-4-methanol, 2,5-dimethyl cyclohexene-4-methanol, 1,2,5-trimethyl cyclohexene-4-methanol, cyclohexene-4-ethanol, 1-methyl cyclohexene-4-ethanol, 2-methyl cyclohexene-4-ethanol, 5-methyl cyclohexene-4-ethanol, 1,2-dimethyl cyclohexene-4-ethanol, 1,5-dimethyl cyclohexene-4-ethanol, 2,5-dimethyl cyclohexene-4-ethanol, 1,2,5-trimethyl cyclohexene-4-ethanol, cyclohexene-4-propanol, 1-methyl cyclohexene-4-propanol, 2-methyl cyclohexene-4-propanol, 5-methyl cyclohexene-4-propanol, 1,2-dimethyl cyclohexene-4-propanol, 1,5-dimethyl cyclohexene-4-propanol, 2,5-dimethyl cyclohexene-4-propanol, 1,2,5-trimethyl cyclohexene-4-propanol, cyclopentene-4-methanol, 1-methyl cyclopentene-4-methanol, 3-methyl cyclopentene-4-methanol, 1,2-dimethyl cyclopentene-4-methanol, 3,5-dimethyl cyclopentene-4-methanol, 1,3-dimethyl cyclopentene-4-methanol, 2,3-dimethyl cyclopentene-4-methanol, 1,2,3-trimethyl cyclopentene-4-methanol, 1,2,3,5-tetramethyl cyclopentene-4-methanol, cyclopentene-4-ethanol, 1-methyl cyclopentene-4-ethanol, 3-methyl cyclopentene-4-ethanol, 1,2-dimethyl cyctopentene-4-ethanol, 3,5-dimethyl cyclopentene-4-ethanol, 1,3-dimethyl cyclopentene-4-ethanol, 2,3-dimethyl cyclopentene-4-ethanol, 1,2,3-trimethyl cyclopentene-4-ethanol, 1,2,3,5-tetramethyl cyclopentene-4-ethanol, cyclopentene-4-propanol, 1-methyl cyclopentene-4-propanol, 3-methyl cyclopentene-4-propanol, 1,2-dimethyl cyclopentene-4-propanol, 3,5-dimethyl cyclopentene-4-propanol, 1,3-dimethyl cyclopentene-4-propanol, 2,3-dimethyl cyclopentene-4-propanol, 1,2,3-trimethyl cyclopentene-4-propanol, and 1,2,3,5-tetramethyl cyclopentene-4-propanol;
(b) heating the polymers and esterifying/transesterifying compounds selected in (a) to form a polymer melt;
(c) processing the melt in an extruder under esterification/transesterification conditions with esterification/transesterification catalysts and antioxidants protecting the melt from oxidation during extrusion, so that the polymer melt undergoes esterification of polymeric anhydrides with cyclic olefin pendent groups, esterification of polymeric acids with cyclic olefin pendent groups or exchange of alkyl groups of polymeric esters with cyclic olefin pendent groups; and
(d) removing volatile organic products and by-products from the melt.

The above process of making the oxygen scavenging packaging material may comprise the steps of:
(a) selecting polymers from the group consisting of styrene/maleic anhydride, ethylene/maleic anhydride, ethylene/acrylic acid, ethylene/methacrylic acid, acrylic acid, methacrylic acid, styrene/methacrylic acid, ethylene/methyl acrylate, ethylene/ethyl acrylate, ethylene/butyl acrylate, methyl methacrylate, methyl acrylate, and styrene/methyl methacrylate to form a mixture and combining the polymers with an amidizing/transamidizing compound selected from the group consisting of cyclohexene-4-methyl amine, 1-methyl cyclohexene-4-methyl amine, 2-methyl cyclohexene-4-methyl amine, 5-methyl cyclohexene-4-methyl amine, 1,2-dimethyl cyclohexene-4-methyl amine, 1,5-dimethyl cyclohexene-4-methyl amine, 2,5-dimethyl cyclohexene-4-methyl amine, 1,2,5-trimethyl cyclohexene-4-methyl amine, cyclohexene-4-ethyl amine, 1-methyl cyclohexene-4-ethyl amine, 2-methyl cyclohexene-4-ethyl amine, 5-methyl cyclohexene-4-ethyl amine, 1,2-dimethyl cyclohexene-4-ethyl amine, 1,5-dimethyl cyclohexene-4-ethyl amine, 2,5-dimethyl cyclohexene-4-ethyl amine, 1,2,5-trimethyl cyclohexene-4-ethyl amine, cyclohexene-4-propyl amine, 1-methyl cyclohexene-4-propyl amine, 2-methyl cyclohexene-4-propyl amine, 5-methyl cyclohexene-4-propyl amine, 1,2-dimethyl cyclohexene-4-propyl amine, 1,5-dimethyl cyclohexene-4-propyl amine, 2,5-dimethyl cyclohexene-4-propyl amine, 1,2,5-trimethyl cyclohexene-4-propyl amine, cyclopentene-4-methyl amine, 1-methyl cyclopentene-4-methyl amine, 3-methyl cyclopentene-4-methyl amine, 1,2-dimethyl cyclopentene-4-methyl amine, 3,5-dimethyl cyclopentene-4-methyl amine, 1,3-dimethyl cyclopentene-4-methyl amine, 2,3-dimethyl cyclopentene-4-methyl amine, 1,2,3-trimethyl cyclopentene-4-methyl amine, 1 ,2,3,5-tetramethyl cyclopentene-4-methyl amine, cyclopentene-4-ethyl amine, 1-methyl cyclopentene-4-ethyl amine, 3-methyl cyclopentene-4-ethyl amine, 1 ,2-dimethyl cyclopentene-4-ethyl amine, 3,5-dimethyl cyclopentene-4-ethyl amine, 1,3-dimethyl cyclopentene-4-ethyl amine, 2,3-dimethyl cyclopentene-4-ethyl amine, 1,2,3-trimethyl cyclopentene-4-ethyl amine, 1,2,3,5-tetramethyl cyclopentene-4-ethyl amine, cyclopentene-4-propyl amine, 1-methyl cyclopentene-4-propyl amine, 3-methyl cyclopentene-4-propyl amine, 1 ,2-dimethyl cyclopentene-4-propyl amine, 3,5-dimethyl cyclopentene-4-propyl amine, 1,3-dimethyl cyclopentene-4-propyl amine, 2,3-dimethyl cyclopentene-4-propyl amine, 1,2,3-trimethyl cyclopentene-4-propyl amine, and 1,2,3,5-tetramethyl cyclopentene-4-propyl amine;
(b) heating the polymers and amidizing/transamidizing compounds selected in (a) to form a polymer melt;
(c) processing the melt in an extruder under amidation/transamidation conditions with amidation/transamidation catalysts and antioxidants protecting the melt from oxidation during extrusion, so that the polymer melt undergoes amidation of polymeric anhydrides with cyclic olefin pendent groups, amidation of polymeric acids with cyclic olefin pendent groups or exchange of alkyl groups of polymeric esters with cyclic olefin pendent groups; and
(d) removing volatile organic products and by-products from the melt. The above process of making of the oxygen scavenging packaging material may comprise the steps of:

(a) adding to an autoclave, ethylene and a vinyl monomer comprising a pendent cyclohexene;
(b) stirring the ethylene and the vinyl monomer in the autoclave to achieve a mixture;
(c) adding a polymerization initiator before, during or after the stirring step;
(d) polymerizing the mixture to achieve a polymer; and
(e) isolating and purifying the polymer.

In the above process, in step (a), an alpha-olefin may be added to the autoclave along with the ethylene and the vinyl monomer and, in step (b), the alpha-olefin may be stirred with the ethylene and the vinyl monomer to achieve the mixture.

The present invention also relates to a non-odorous oxygen scavenging polymer composition comprising: (1) monomers derived from cyclic hydrocarbon moieties having at least one cyclic allylic or cyclic benzylic hydrogen and (2) a transition metal oxidation catalyst. The present invention also relates to a rigid container for food or beverage, the container being molded from a resin comprising the above-described non-odorous oxygen scavenging polymer composition. The present invention also relates to the above-described rigid container further comprising a tinted ultraviolet protection layer, which may or may not be the food contact layer, located between the layer comprising the non-odorous oxygen scavenging composition and the inside of the rigid container.

In the above non-odorous oxygen scavenging polymer composition, the composition may comprise a vinyl polymer selected from the group consisting of ethylene polymer, ethylene copolymer, propylene polymer, propylene copolymer, styrene polymer, styrene copolymer and mixtures thereof.

In the above non-odorous oxygen scavenging polymer composition, the composition may comprise condensation polymers selected from the group consisting of polyesters, polyamides, polycarbonate, polyurethane, polyureas and polyether.

The above composition may comprise condensation polymers, and the composition may be thermoplastic.

The above composition may comprise condensation polymers, and the composition may be thermoset.

In the above composition comprising condensation polymers, the composition may be a multilayered structure with other layers being an aromatic polyester or copolyester selected from the group consisting of polyethylene terephthalate, polyethylene naphthalate, polypropylene terephthalate, polybutylene terephthalate, polyethylene isophthalate, polycyclohexanedimethanol terephthalate, polybutylene naphthalate, polycyclohexanedimethanol naphthalate, and copolymers and blends thereof.

In the above composition comprising condensation polymers, the composition may be a multilayered structure with other layers being polyamides or copolyamides selected from the group consisting of Nylon 6, Nylon 66, Nylon 610 and mixtures thereof.

In the above composition comprising condensation polymers, the composition may be a multilayered structure with other layers being bisphenol A carbonate.

In the above composition comprising condensation polymers, the composition may be a multilayered structure with other layers being vinylic polymers or copolymers selected from the group consisting of ethylene polymer, ethylene copolymer, propylene polymer, propylene copolymer, styrene polymer, styrene copolymer, acrylate polymer, acrylate copolymer, vinyl chloride polymer, vinyl chloride copolymer, divinyl chloride polymer, divinyl chloride copolymer, fluorinated vinyl polymer, fluorinated vinyl copolymer and mixtures thereof.

In the above composition comprising condensation polymers, the composition may be blended with an aromatic polyester or copolyester selected from the group consisting of polyethylene terephthalate, polyethylene naphthalate, polypropylene terephthalate, polybutylene terephthalate, polyethylene isophthalate, polycyclohexandedimethanol terephthalate, polybutylene naphthalate, polycyclohexanedimethanol naphthalate, and copolymers and blends thereof.

In the above composition comprising condensation polymers, the composition may be blended with polyamides or copolyamides selected from the group consisting of Nylon 6, Nylon 66, Nylon 610 and mixtures thereof.

In the above composition comprising condensation polymers, the composition may be blended with bisphenol A polycarbonate.

In above composition comprising condensation polymers, the composition may be a blend comprising vinylic polymers or copolymers selected from the group consisting of ethylene polymer, ethylene copolymer, propylene polymer, propylene copolymer, styrene polymer, styrene copolymer, acrylate polymer, acrylate copolymer, vinyl chloride polymer, vinyl chloride copolymer, divinyl chloride polymer, divinyl chloride copolymer, fluorinated vinyl polymer, fluorinated vinyl copolymer and mixtures thereof.

In the above composition comprising condensation polymers, the composition may be laminated or adhering onto a substrate selected from the group consisting of paper, foil, high temperature film, metallized film, polyamide films, ethylene vinyl alcohol film, silica coated film, nylon/EVOH/nylon, oriented polypropylene, polyester film, polyethylene, polypropylene, polyester, oriented polyethylene terephthalate and cellophane.

In the above non-odorous oxygen scavenging polymer composition, the cyclic allylic monomers may be selected from the group consisting of structure (V), structure (VI) and structure (VII): 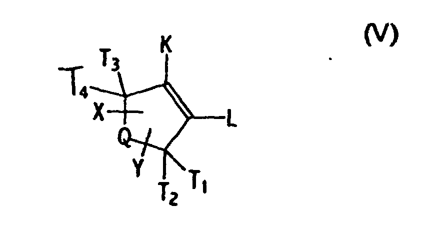 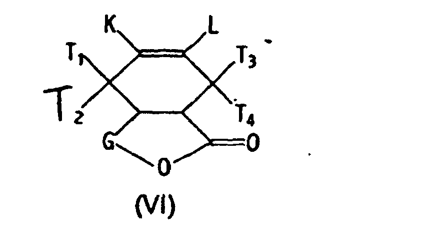 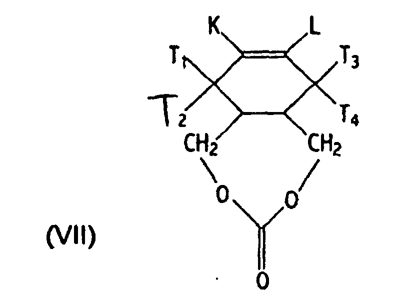 with K, L, T₁, T₂, T₃, and T₄ being selected from the group consisting of -C_{q}H_{2q+1} with q being an integer in the range from 0 to 12 and wherein, when either K or L is -H, at least one of T₁, T₂, T₃ and T₄ is -H; and with X and Y being selected from the group consisting of -(CH₂)ₙ-OH, -(CH₂)ₙ-NH₂, -(CH₂)ₙNC=O and -(CH₂)ₘ-(C=O)-A with n being an integer in the range from 1 to 12 and m being an integer in the range from 0 to 12 and A being selected from the group consisting of -OH, -OCH₃, -OC₂H₅, -OC₃H₇ and halides; and Q being selected from the group consisting of -(CₜH₂ₜ₋₂) with t being an integer in the range from 1 to 4;
and with G being selected from -(C=O)- and -(CₙH₂ₙ₊₁)- with n being an integer from 0 to 12.

In the above non-odorous oxygen scavenging polymer composition, the cyclic benzylic monomers may be selected from the group consisting of structure (VIII), structure (IX), structure (X), structure (XI), structure (XII), and structure (XIII) 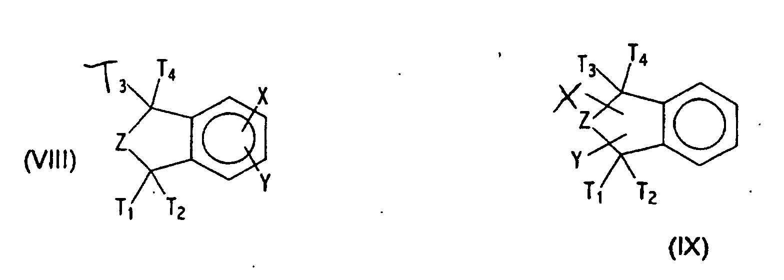 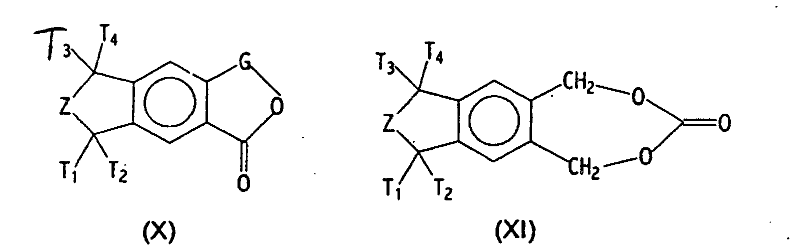 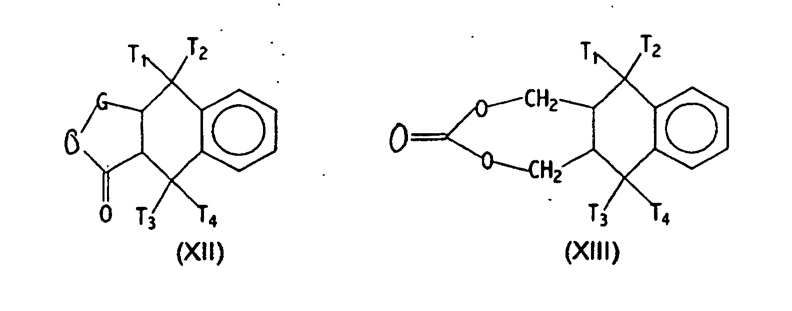 where X and Y are selected from the group consisting of -(CH₂)ₙ-OH, -(CH₂)ₙ-NH₂ and -(CH₂)ₘ-(C=O)-R₁ with n being an integer in the range from 1 to 12, and with m being an integer in the range from 0 to 12 and with R₁ being selected from the group consisting of -OH, -OCH₃, -OC₂H₅, -OC₃H₇ and halides;
with T₁, T₂, T₃, and T₄ being selected from the group consisting of -C_{q}H_{2q+1} with q being an integer in the range from 0 to 12 and at least one of T₁, T₂, T₃ and T₄ being -H;
and with X and Y being selected from the group consisting of -(CH₂)ₙ-OH, -(CH₂)ₙ-NH₂, -(CH₂)ₙNC=O, and -(CH₂)ₘ-(C=O)-A with n being an integer in the range from 1 to 12, and m being an integer in the range from 0 to 12 and A being selected from the group consisting of -OH, -OCH₃, -OC₂H₅, -OC₃N₇ and halides; and Z being selected from the group consisting of -(CₜH₂ₜ₋₂)-, -O-, -NR₂-, -S-, with t being an integer in the range from 1 to 4 and R₂ being selected from the group consisting of -OH, -OCH₃, -OC₂H₅, -OC₃H₇ and halides;
and with G being selected from -(C=O)- and -(CₙH₂ₙ₊₁)- with n being an integer from 0 to 12.

The composition of the resin of the above-described rigid container may be a single layer.

The composition of the resin of the above-described rigid container may be multilayered.

The composition of the resin of the above-desenbed rigid container may comprise an outer air contact layer and an inner oxygen scavenging layer.

The outer air contact layer of the composition of the resin of the above-described rigid container may comprise an oxygen barrier resin selected from the group consisting of polyethylene terephthalate, polyethylene naphthalate and a mixture of polyethylene terephthalate and polyethylene naphthalate.

The composition of the resin of the above-described rigid container may further comprise at least one of an inner food contact layer, a tie layer, and a tinted ultraviolet protection layer.

The inner food contact layer of the composition of the resin of the above-described rigid container may comprise an oxygen barrier resin selected from the group consisting of polyethylene terephthalate, polyethylene naphthalate and a mixture of polyethylene terephthalate and polyethylene naphthalate.

The oxygen scavenging of the composition of the resin of the above-described rigid container may be initiated by moisture or actinic radiation.
The transition metal catalyst of the composition of the resin of the above-described rigid container may be a metal salt.

The metal in the metal salt of the transition metal catalyst of the composition of the resin of the above-described rigid container may be cobalt.

The metal salt of the transition metal.catalyst of the composition of the resin of the above-described rigid container may be selected from the group consisting of cobalt neodecanoate, cobalt 2-ethythexanoate, cobalt oleate and cobalt stearate.

The composition of the resin of the above-described rigid container may further comprise at least one triggering material to enhance initiation of oxygen scavenging.

The triggering material of the resin of the composition of the above-described rigid container may be a photoinitiator.

The photoinitiator of the resin of the composition of the above-described rigid container may have an ultraviolet absorption window above 320 nm.

The above-described rigid container may be suitable for packaging oxygen sensitive drinks for extended freshness and shelf life.

The above-described rigid container may be suitable for packaging beer.

### DESCRIPTION OF THE DRAWINGS

Figure 1 is a schematic showing the overall process leading to the transesterification of ethylene methyl acrylate copolymers (EMAC) to give modified EMAC having cyclic pendent olefins.

Figure 2 is a graph comparatively plotting percent oxygen in headspace at 4°C (initially at 1% oxygen) against time in days for two 3-layer film extrusions based on Dowtex® 3010/EMCM/Dowlex® 3010 films (EMCM being an acronym for ethylene/methyl acrylate/cyclohexenyl methyl acrylate terpolymer also referred to as poly(ethytene/methyl acrylate/cyclohexene-methyl acrylate)), both including the EMCM inner layer and one of them having 50 ppm of a non-volatile antioxidant Irganox® 1010 in the EMCM layer and one of them having 100 ppm Irganox® 1010 in the EMCM layer.

Figure 3 is a graph comparatively plotting percent oxygen in headspace at 4°C (initially at 1% oxygen) against time in days for an EMCM film and two EBAC blended EMCM films, one of them having 3:1 EBAC:EMCM and one of them having 1:1 EBAC:EMCM.

Figure 4 is a graph comparatively plotting the oxygen scavenging rates and capacities at 25°C in which the initial headspace oxygen was 21% (air) for an EMCM film and a 2:1 EBAC:EMCM film.

Figure 5 is a graph showing the taste ratings in a comparative taste test between food stored in two oxygen scavenging packages (EMCM and SBS) and a control package (no oxygen scavenger).

### DETAILED DESCRIPTION OF THE INVENTION

We have found that materials containing certain cyclohexenyl functionalities are excellent oxygen absorbers when compounded with a transition metal salt and optionally a photoinitiator, and that when these materials oxidize they produce very low levels of oxidation byproducts. This is in marked contrast to the known art, where excellent oxygen absorbers can be obtained from the use of linear unsaturated compounds compound with a transition metal salt, and a photoinitiator, but where the levels of oxidation byproducts are excessively high. It is thought that this improvement is obtained because mild oxidation of cyclohexene does not break bonds on the ring structure whilst oxidation of linear unsaturated material such as linoleic acid or vegetable oil under similar conditions produces smaller molecules by chain scission. When incorporated into polymers, the cyclohexene containing systems are found to produce considerably less volatile byproducts than the linear unsaturated materials.

The compositions of this invention are significantly cleaner than those described in the prior art, they do not require the use of high levels of adjuncts to absorb the undesirable byproducts. Such absorbent additives are known in the art, for example see U.S. 5,834,079 and U.S. 08/857,276. It is also well known in the art that such additives (zeolites and silicas) adversely affect the haze and clarity of packaging structures.

The oxygen scavenging compositions may consist of:
(a) a polymer or oligomer comprising a polymeric backbone, cyclic olefinic pendant groups, and linking groups linking the olefinic pendant groups to the polymeric backbone, wherein the polymeric backbone, linking groups and cyclic olefin pendant groups comprise repeating units, each unit having a structure (III) as follows: 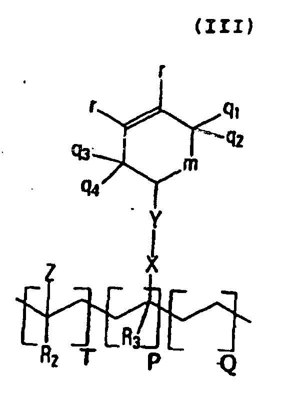 wherein P+T+Q is 100 mol % of the total composition, P is greater than 0 mol % of the total composition; Z is selected from the group consisting of an aryl group; -(C=O)OR₁;-O(C=O)R₁; and an alkyl aryl group of the structure: 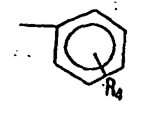 wherein R₄ is selected from the group consisting of -CH₃, -C₂H₅, and -H; R₁ is selected from the group consisting of -H, -CH₃, -C₂H₅, -C₂H₇, and -C₄H₉; R₂ and R₃ are selected from the group consisting of -H and -CH₃; X is selected from the group consisting of -O-, -NH-, -(C=O)O-, -(C=O)NH-, -(C=O)S-, -O(C=O)- and -(CHR)_{ℓ}; ℓ is an integer in the range from 1 to 6; Y is -(CHR)ₙ- or, when X is -(C=O)O-, Y is -(CHR)ₙ- or CHOH-CH₂-O-, where n is an integer in the range from 0 to 12, R being selected from the group consisting of -H, -CH₃ and -C₂H₅; where q₁, q₂, q₃, q₄ and r are selected from the group consisting of -H, -CH₃, and -C₂H₅; and where m is -(CH₂)ₙ- and where n is an integer in the range from 0 to 4; and wherein when r is -H, at least one of q₁, q₂, q₃, q₄ is -H;
(b) a transition metal catalyst.

The compositions are polymeric in nature. They may be blended with further polymers or other additives. For example, the compositions may be compounded with a carrier resin before use. This mixture may further contain at least one photoinitiator. The following examples represent some applications of various embodiments of the present invention currently envisaged by the patentee. These examples are not meant to be limiting nor exhaustive but merely illustrative of how the present invention may be used, or applied to address problems associated with the prior art.

The compositions of this invention can be used in a wide range of packaging materials, and are not restricted to flexible packaging films and articles such as pouches produced from such films. The compositions may also be used in the preparation of rigid and semi rigid packaging materials. Typical rigid and semi rigid articles include plastic, paper or cardboard cartons, bottles such as juice containers, thermoformed trays, or cups with wall thicknesses of about 100 to 2000 microns. The walls of such articles comprise single or multiple layers of materials. The compositions can be used as the sole polymeric material from which one or more layers of a film are formed (i.e., the film can be a multilayer film having, for example, a gas barrier layer, a seal layer, etc.), it can be blended with other polymeric oxygen scavenging agents (such as polybutadiene) or it can be blended with one or more diluent polymers which are known to be useful in the formation of packaging film materials and which often can render the resultant film more flexible and/or processable. Suitable diluent polymers include, but are not limited to, polyethylene such as, for example, low density polyethylene, very low density polyethylene, ultra-low density polyethylene, high density polyethylene, and linear low density polyethylene; polyesters such as, for example, polyethylene terephthalate (PET); polyvinyl chloride (PVC); polyvinylidene chloride (PVDC); and ethylene copolymers such as ethylene/vinyl acetate copolymer, ethylene/alkyl (meth)acrylate copolymers, ethylene/(meth)acrylic acid copolymers, and ionomers. Blends of different diluent polymers also can be used.

The compositions of this invention can also be used in non integral packaging components such as coatings, bottle cap liners, adhesive and non adhesive sheet inserts, coupons, gaskets, sealants or fibrous mass inserts.

Generally, the foregoing diluent polymers are semi-crystalline materials. Advantageously, the polymeric component of the composition of the present invention can be crystalline or semi-crystalline at ambient conditions and, accordingly, can be especially compatible with such diluent polymers. Selection of a particular diluent polymer(s) depends largely on the article to be manufactured and the end use thereof. For instance, certain polymers are known by the ordinarily skilled artisan to provide clarity, cleanliness, barrier properties, mechanical properties, and/or texture to the resultant article.

In combination with the polymeric component, the oxygen scavenging composition of the present invention includes a transition metal compound as an oxygen scavenger catalyst. The transition metal catalyst can be a salt which includes a metal selected from the first, second, or third transition series of the Periodic Table. The metal preferably is Rh, Ru, or one of the elements in the series of Sc to Zn (i.e., Sc, Ti, V, Cr, Mn, Fe, Co, Ni, Cu, and Zn), more preferably at least one of Mn, Fe, Co, Ni, and Cu, and most preferably Co. Suitable anions for such salts include, but are not limited to, chloride, acetate, oleate, stearate, palmitate, 2-ethylhexanoate, neodecanoate, and naphthenate. Representative salts include cobalt (II) 2-ethylhexanoate, cobalt oleate, and cobalt (II) neodecanoate. (The metal salt also can be an ionomer, in which case a polymeric counterion is employed.)

When used in forming a packaging article, the oxygen scavenging composition of the present invention can include only the above-described polymers and a transition metal catalyst. However, photoinitiators can be added to further facilitate and control the initiation of oxygen scavenging properties. Adding a photoinitiator or a blend of photoinitiators to the oxygen scavenging composition can be preferred, especially where antioxidants have been added to prevent premature oxidation of the composition during processing and storage.

Suitable photoinitiators are known to those skilled in the art. See, e.g., PCT Publication WO 97/07161, WO 97/44364, WO 98/51758, and WO 98/51759, the teachings of which are incorporated herein by reference as if set forth in full. Specific examples of suitable photoinitiators include, but are not limited to, benzophenone, and its derivatives, such as methoxybenzophenone, dimethoxybenzophenone, dimethylbenzophenone, diphenoxybenzophenone, allyloxybenzophenone, diallyloxybenzophenone, dodecyloxybenzophenone, dibenzosuberone, 4,4'-bis(4-isopropylphenoxy)benzophenone, 4-morpholinobenzophenone, 4-aminobenzophenone, tribenzoyl triphenylbenzene, tritoluoyl triphenylbenzene, 4,4'-bis(dimethylamino)benzophenone, acetophenone and its derivatives, such as, o-methoxyacetophenone, 4'-methoxyacetophenone, valerophenone, hexanophenone, α-phenyl-butyrophenone, p-morpholinopropiophenone, benzoin and its derivatives, such as, benzoin methyl ether, benzoin butyl ether, benzoin tetrahydropyranyl ether, 4-o-morpholinodeoxybenzoin, substituted and unsubstituted anthraquinones, α-tetralone, acenaphthenequinone, 9-acetylphenanthrene, 2-acetyl-phenanthrene, 10-thioxanthenone, 3-acetyl-phenanthrene, 3-acetylindole, 9-fluorenone, 1-indanone, 1,3,5-triacetylbenzene, thioxanthen-9-one, isopropylthioxanthen-9-one, xanthene-9-one, 7-H-benz[de]anthracen-7-one, 1'-acetonaphthone, 2'-acetonaphthone, acetonaphthone, benz[de]anthracen-7-one, 1'-acetonaphthone, 2'-acetonaphthone, acetonaphthone, benz[a]anthracene-7,12-dione, 2,2-dimethoxy-2-phenylacetophenone, α,α-diethoxyacetophenone, α,α-dibutoxyacetophenone, 4-benzoyl-4'-methyl(diphenyl sulfide) and the like. Single oxygen-generating photosensitizers such as Rose Bengal, methylene blue, and tetraphenylporphine as well as polymeric initiators such as poly(ethylene carbon monoxide) and oligo[2-hydroxy-2-methyl-1-[4-(1-methylvinyl)phenyl]propanone] also can be used. However, photoinitiators are preferred because they generally provide faster and more efficient initiation. When actinic radiation is used, photoinitiators can provide initiation at longer wavelengths which are less costly to generate and present less harmful side effects than shorter wavelengths.

When a photoinitiator is present, it can enhance and/or facilitate the initiation of oxygen scavenging by the composition of the present invention upon exposure to radiation. The amount of photoinitiator can depend on the amount and type of cyclic unsaturation present in the polymer, the wavelength and intensity of radiation used, the nature and amount of antioxidants used, and the type of photoinitiator used. The amount of photoinitiator also can depend on how the scavenging composition is used. For instance, if a photoinitiator-containing composition is in a film layer, which underneath another layer is somewhat opaque to the radiation used, more initiator might be needed. However, the amount of photoinitiator used for most applications ranges from about 0.01 to about 10% (By wt.) of the total composition. Oxygen scavenging can be initiated by exposing an article containing the composition of the present invention to actinic or electron beam radiation, as described below.

One or more antioxidants can be incorporated into the scavenging composition of the present invention to retard degradation of the components during compounding and film formation. Although such additives prolong the induction period for oxygen scavenging activity to occur in the absence of irradiation, the layer or article (and any incorporated photoinitiator) can be exposed to radiation at the time oxygen scavenging properties are required. Suitable antioxidants include 2,6-di(t-butyl)-4-methylphenol(BHT), 2,2'-methylene-bis(6-t-butyl-p-cresol), triphenylphosphite, tris-(nonylphenyl)phosphite, dilaurylthiodipropionate, vitamin E (α-tocopherol), octadecyl 3,5,-di-tert-butyl-4-hydroxyhydrocinnamate, tetrakis[methylene(3,5-di-tert-butyl-4-hydroxyhydrocinnamate)]methane and the like.

When an antioxidant is included as part of the composition of the present invention, it preferably is present in an amount which prevents oxidation of the components of the oxygen scavenging composition as well as other materials present in a resultant blend during formation and processing; however, the amount preferably is less than that which interferes with the scavenging activity of the resultant layer, film, or article after initiation has occurred. The amount needed in a given composition can depend on the components present therein, the particular antioxidant used, the degree and amount of thermal processing used to form the shaped article, and the dosage and wavelength of radiation applied to initiate oxygen scavenging. Typically, such antioxidant(s) are used in an amount of from about 0.01 to about 1% (by wt.).

Other additives that also can be included in the oxygen scavenging composition of the present invention include, but are not necessarily limited to, fillers, pigments, dyestuffs, processing aids, plasticizers, antifog agents, antiblocking agents, and the like.

The amounts of the components used in the oxygen scavenging composition of the present invention can affect the use and effectiveness of this composition. Thus, the amounts of polymer, transition metal catalyst, and any photoinitiator, antioxidant, polymeric diluents, additives, etc., can vary depending on the desired article and its end use. For example, one of the primary functions of the polymer described above is to react irreversibly with oxygen during the scavenging process, while a primary function of the transition metal catalyst is to facilitate this process. Thus, to a large extent, the amount of polymer present affects the oxygen scavenging capacity of the composition, i.e., the amount of oxygen that the composition can consume, while the amount of transition metal catalyst affects the rate at which oxygen is consumed as well as the induction period.

The composition of the present invention can provide oxygen scavenging properties at a desirable rate and capacity while having good processing and compatibility properties relative to compositions including conventional non-cyclic ethylenically unsaturated polymers. Thus, the present composition can be used to provide, by itself or as a blend with diluent film-forming polymers such as polyolefins and the like, a packaging material or film that can be manufactured and processed easily. Further, the subject oxygen scavenging composition will deplete the oxygen within a package cavity without substantially detracting from the color, taste, and/or odor of the product contained therein.

The amount of the polymeric scavenging component contained in the subject composition can range from about 1 to almost about 100%, preferably from about 5 to about 97.5%, more preferably from about 10 to 95%, even more preferably from about 15 to about 92.5%, still more preferably from about 20 to about 90%, (with all the foregoing percentages being by weight) of the composition or layer made therefrom. Typically, the amount of transition metal catalyst can range from 0.001 to 1% (by wt.) of the scavenging composition, based on the metal content only (i.e., excluding ligands, counterions, etc.). Where one or more other scavenging compounds and/or diluent polymers are used as part of the composition, such other materials can make up as much as 99%, preferably up to about 75%, by weight of the scavenging composition. Any further additives employed normally do not make up more than 10%, preferably no more than about 5%, by weight of the scavenging composition.

As indicated above, the composition of the present invention can be used to produce a scavenging mpnolayer film, a scavenging layer of a multilayer film, or other articles for a variety of packaging applications. Single layer articles can be prepared readily by extrusion processing. Multilayer films typically are prepared using coextrusion, coating, lamination or processing. Multilayer films typically are prepared using coextrusion, coating, lamination or extrusion/lamination as taught in, for example, U.S. Patents 5,350,622 and 5,529,833, the teachings of which are incorporated herein by reference as if set forth in full. At least one of the additional layers of multilayer article can include a material having a permeance to oxygen of no more than about 5.8 x 10⁻⁸ cm³/m²•s•Pa (i.e., about 500 cm³/m²•24 hours•atm) at about 25°C. Polymers which are commonly used in such oxygen barrier layers include poly(ethylene/vinyl alcohol), poly(vinyl alcohol), polyacrylonitrile, PVC, PVDC, PET, silica, and polyamides such as nylon 6, MXD6, nylon 66, as well as various amide copolymers. (Metal foil layers can also provide oxygen barrier properties.) Other additional layers can include on or more layers which are permeable to oxygen. In one preferred packaging construction, especially flexible packages for food, the layers can include (in order starting from the outside of the package to the innermost layer of the package) (a) an oxygen barrier layer, (b) a scavenging layer, i.e. one that includes the scavenging composition described supra, and optionally, (c) an oxygen permeable layer. Control of the oxygen barrier property of layer (a) provides a means to regulate the scavenging life of the package by limiting the rate of oxygen entry to the scavenging layer (b), thus limiting the rate of consumption of scavenging capacity. Control of the oxygen permeability of layer (c) provides a means to set an upper limit on the rate of oxygen scavenging for the overall structure independent of the composition of scavenging layer (b). This can serve the purpose of extending the handling lifetime of the film in the presence of air prior to sealing of the package. Furthermore, layer (c) can provide a barrier to migration of the individual components or byproducts of the scavenging layer into the package interior. The term "exposed to the interior" refers to a portion of a packaging article having the subject scavenging composition which is either directly exposed or indirectly exposed (via layers which are O₂ permeable) to the interior cavity having oxygen sensitive product. Even further, layer (c) also can improve the heat sealability, clarity, and/or resistance to blocking of the multilayer film. Further additional layers such as the layers, easy open layers, and seal layers can also be used. Polymers typically used in such tie layers include, for example, anhydride functional polyolefins.

The method of the present invention includes exposing the above-described composition to a package cavity having an oxygen sensitive product therein. A preferred embodiment provides for including a photoinitiator as part of the subject composition and subjecting a film, layer, or article that includes such a composition to radiation so as to initiate oxygen scavenging at desired rates. The thermal radiation used in heating and processing polymers typically used in packaging films (e.g., 100-250°C) advantageously does not trigger the oxygen scavenging reaction.

The initiating radiation preferably is actinic, e.g., UV or visible light having a wavelength of from about 200 to about 750 nm, preferably of from about 200 to 600 nm, and most preferably from about 200 to 400 nm. Such light can be delivered in a continuous or pulsed manner. The layer, film, etc., containing the oxygen scavenging composition preferably is exposed to such radiation until it receives at least about 1 J/g of radiation, more preferably until it receives a dose in the range of about 10 to about 2000 J/g. The radiation also can be electron-beam radiation at a dosage of at least about 2 kiloGray (kG), preferably from about 10 to about 100 kG. Other potential sources of radiation include ionizing radiation such as gamma, X-ray, and corona discharge. Duration of exposure depends on several factors including, but not limited to, the amount and type of photoinitiator present, thickness of the layers to be exposed, thickness and opacity of intervening layers, amount of any antioxidant present, and the wavelength and intensity of the radiation source.

When using oxygen scavenging layers or articles, irradiation can occur during or after the layer or article is prepared. If the resulting layer or articles is to be used to package an oxygen sensitive product, exposure can be just prior to, during, or after packaging. For best uniformity of radiation, exposure preferably occurs at a processing stage where the layer or article is in the form of a flat sheet. For further information on initiation via irradiation, the reader is directed to PCT publications WO 98/05555 and WO 98/05703, as well as PCT 97/13598, 97/13370, 97/13369, the teachings of which are incorporated herein by reference.

Determining the oxygen scavenging rate and capacity of a given oxygen scavenging composition contemplated for a particular use can be beneficial. To determine the rate, the time elapsed before the scavenger depletes a certain amount of oxygen from a sealed container is measured. In some instances, the rate can be determined adequately by placing a film containing the desired scavenging composition in an air-tight, sealed container of an oxygen containing atmosphere, e.g., air which typically contains 20.6% (by vol.) O₂. Over time, samples of the atmosphere inside the container are removed to determine the percentage of oxygen remaining. (Usually, the specific rates obtained vary under different temperature and atmospheric conditions. Atmospheres having lower initial oxygen content and/or maintained under low temperature conditions provide a more stringent test of the scavenging ability and rate of a composition. The rates which follow are at room temperature and one atmosphere of air, unless otherwise specified.) When an active oxygen barrier is needed, a useful scavenging rate can be as low as about 0.05 cm³ oxygen per gram of the polymer in the scavenging composition per day in air at 25°C and at 1 atm (101.3 kPa). However, in most instances, the present composition has a rate equal to or greater than about 5.8 x 10⁻⁸ cm³/g•s(0.5 cm³/g•day), even up to or greater than about 5.8 x 10⁻⁵ cm³/g•s (5 cm³/g•day). Further, films or layers including the subject composition are capable of a scavenging rate greater than about 1.2 x 10⁻⁴ cm³/m²•s (10 cm³/m²•day) and under some conditions, greater than about 2.9 x 10⁻⁴ cm³/m²•s (25 cm³/m²•day). (Generally, films or layers generally deemed suitable for use as an active oxygen barrier can have a scavenging rate as low as 1.2 x 10⁻⁵ cm³/m²•s (1 cm³/m²•day) when measured in air at 25°C and 101 kPa (1 atm). Such rates make those layers suitable for scavenging oxygen from within a package, as well as suitable for active oxygen barrier applications.

When the method of the present invention is to be used in an active oxygen barrier application, the initiated oxygen scavenging activity, in combination with any oxygen barriers, preferably creates an overall oxygen permeance of less than about 1.1 x 10⁻¹⁰ cm³/m²•s•Pa (1.0 cm³/m²•day•atm) at 25°C. The oxygen scavenging capacity preferably is such that this value is not exceeded for at least two days.

Once scavenging has been initiated, the scavenging composition, layer, or article prepared therefrom preferably is able to scavenge up to its capacity, i.e., the amount of oxygen which the scavenger is capable of consuming before it becomes ineffective. In actual use, the capacity required for a given application can depend on the quantity of oxygen initially present in the package, the rate of oxygen entry into the package in the absence of the scavenging property, and the intended shelf life for the package. When using scavengers that include the composition of the present invention, the capacity can be as low as 1 cm³/g, but can be 50 cm³/g or higher. When such scavengers are in a layer of a film, the layer preferably has an oxygen capacity of at least about 9.8 cm³/m² per µm thickness (1200 cm³/m² per mil).

The composition of the present invention has been found to be capable of providing a film, layer or article which substantially retains its physical properties (eg., tensile strength and modulus) even after substantial oxygen scavenging has occurred. In addition, the present composition does not provide significant amounts of byproducts and/or effluents, which can impart an undesired taste, color, and/or odor to the packaged product.

This invention relates to an oxygen scavenging polymer composition comprising cyclic allylic pendent groups which can be used in oxygen scavenging packaging material which have either no or low volatile oxidation by-products. Minimizing volatile by-products reduces the problem of organoleptics in oxygen scavenging food packaging.

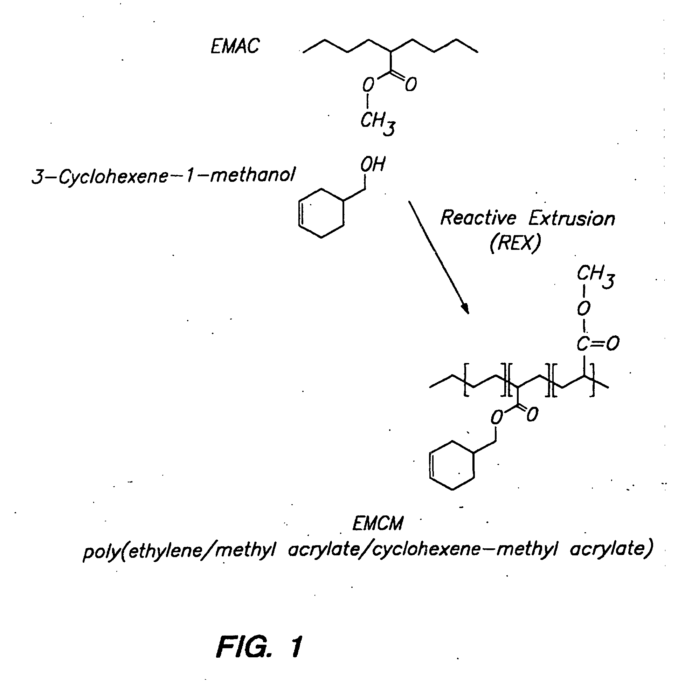

The polymer composition with cyclic allylic pendent groups can be made by grafting methyl cyclohex-1-ene-4-methanol, cyclohex-1-ene-4-methanol (1,2,5,6-tetrahydrobenzyl alcohol) and cyclohex-1-ene-4-propanol onto EMAC resins by transesterification of the corresponding alcohols or transamidation of the corresponding amines with the methyl esters on EMAC to give modified EMAC having pendent cyclic olefins (see Figure 1). The composition can also be made by direct polymerization.

The esterification, transesterification, amidation or transamidation reaction can be a solution reaction or by reactive extrusion. The catalysts can be any one of strong non-oxidizing acids, tertiary amines, Group I alkoxides, Group IVB alkoxides and Group IVA metal organics. The level of olefin in the final products can be controlled by the level of transesterification and the methyl ester content of the start EMAC. The molecular weight of the polymers largely depends on the molecular weight of the EMAC feeds.

In a preferred embodiment, these products are combined with a transition-metal salt to catalyze the oxygen scavenging properties of the materials. A transition-metal salt, as the term is used here, comprises an element chosen from the first, second and third transition series of the periodic table of the elements, particularly one that is capable of promoting oxidation reactions. This transition-metal salt is in a form which facilitates or imparts scavenging of oxygen by the composition of this invention. A plausible mechanism, not intended to place limitations on this invention, is that the transition element can readily inter-convert between at least two oxidation states and facilitates formation of free radicals. Suitable transition-metal elements include, but are not limited to, manganese II or III, iron II or III, cobatt II or III, nickel II or III, copper I or II, rhodium II, III or IV, and ruthenium. The oxidation state of the transition-metal element when introduced into the composition is not necessarily that of the active form. It is only necessary to have the transition-metal element in its active form at or shortly before the time that the composition is required to scavenge oxygen. The transition-metal element is preferably iron, nickel or copper, more preferably manganese and most preferably cobalt.

Suitable counter-ions for the transition metal element are organic or inorganic anions. These include, but are not limited to, chloride, acetate, stearate, oleate, palmitate, 2-ethylhexarioate, citrate, glycolate, benzoate, neodecanoate or naphthenate. Organic anions are preferred. Particularly preferable salts include cobalt 2-ethylhexanoate, cobalt benzoate, cobalt stearate, cobalt oleate and cobalt neodecanoate. The transition-metal element may also be introduced as an ionomer, in which case a polymeric counter-ion is employed.

The composition of the present invention when used in forming a oxygen scavenging packaging article can be composed solely of the above described polymer and transition metal catalyst. However, components, such as photoinitiators, can be added to further facilitate and control the initiation of oxygen scavenging properties. For instance, it is often preferable to add a photoinitiator, or a blend of different photoinitiators, to the oxygen scavenger compositions, especially when antioxidants are included to prevent premature oxidation of that composition during processing.

Suitable photoinitiators are well known in the art. Such photoinitiators are discussed in U.S. Patent No. 5,211,875. It is also discussed in U.S. Patent Application Serial No. 08/857,325, in which some of the present inventors were contributing inventors and which is incorporated herein by reference. Specific examples include, but are not limited to, benzophenone, o-methoxy-benzophenone, acetophenone, o-methoxy-acetophenone, acenaphthenequinone, methyl ethyl ketone, valerophenone, hexanophenone, α-phenyl-butyrophenone, p-morpholinopropiophenone, dibenzosuberone, 4-morphotinobenzophenone, benzoin, benzoin methyl ether, 4-o-morpholinodeoxybenzoin, p-diacetylbenzene, 4-aminobenzophenone, 4'-methoxyacetophenone, substituted and unsubstituted anthraquinones, α-tetralone, 9-acetylphenanthrene, 2-acetyl-phenanthrene, 10-thioxanthenone, 3-acetyl-phenanthrene, 3-acetylindole, 9-fluorenone, 1-indanone, 1 ,3,5-triacetylbenzene, thioxanthen-9-one, xanthene-9-one, 7-H-benz[de]anthracen-7-one, benzoin tetrahydropyranyl ether, 4,4'-bis(dimethylamino)-benzophenone, 1'-acetonaphthone, 2'-acetonaphthone, acetonaphthone and 2,3-butanedione, benz[a]anthracene-7,12-dione, 2,2-dimethoxy-2-phenylacetophenone, α,α-diethoxy-acetophenone, α,α-dibutoxyacetophenone, etc. Singlet oxygen generating photosensitizers such as Rose Bengal, methylene blue, and tetraphenyl porphine may also be employed as photoinitiators. Polymeric initiators include polyethylene carbon monoxide and oligo[2-hydroxy-2-methyl-1-[4-(1-methylvinyl)phenyl]propanone]. Use of a photoinitiator is preferable because it generally provides faster and more efficient initiation.

When a photoinitiator is used, its primary function is to enhance and facilitate the initiation of oxygen scavenging upon exposure to radiation. The amount of photoinitiator can vary. In many instances, the amount will depend on the amount and type of oxygen scavenging polymer in the present invention, the wavelength and intensity of radiation used, the nature and amount of antioxidants used, as well as the type of photoinitiator used. The amount of photoinitiator also depends on how the scavenging composition is used. For instance, if the photoinitiator-coating composition is placed underneath a layer which is somewhat opaque to the radiation used, more initiator may be needed. For most purposes, however, the amount of photoinitiator, when used, will be in the range of 0.01 to 10% by weight of the total composition. The initiating of oxygen scavenging can be accomplished by exposing the packaging article to actinic or electron beam radiation, as described below.

Antioxidants may be incorporated into the scavenging compositions of this invention to control degradation of the components during compounding and shaping. An antioxidant, as defined herein, is any material which inhibits oxidative degradation or cross-linking of polymers. Typically, such antioxidants are added to facilitate the processing of polymeric materials and/or prolong their useful shelf-life.

Antioxidants such as Vitamin E, Irganox® 1010, Irganox® 1076, 2,6-di(t-butyl)-4-methyl-phenol(BHT), 2,6-di(t-butyl)-4-ethyl-phenol (BHEB), 2,2'-methylene-bis(6-t-butyl-p-cresol), triphenylphosphite, tris-(nonylphenyl)phosphite and dilaurylthiodipropionate would be suitable for use with this invention.

When an antioxidant is included as part of the present composition, it should be used in amounts which will prevent oxidation of the scavenger composition's components as well as other materials present in a resultant blend during formation and processing but the amount should be less than that which would interfere with the scavenging activity of the resultant layer, film or article. The particular amount needed will depend on the particular components of the composition, the particular antioxidant used, the degree and amount of thermal processing used to form the shaped article, and the dosage and wavelength of radiation applied to initiate oxygen scavenging and can be determined by conventional means. Typically, they are present in about 0.01 to 1% by weight.

Other additives which may also be included in oxygen scavenger layers include, but are not necessarily limited to, fillers, pigments, dyestuffs, stabilizers, processing aids, plasticizers, fire retardants, anti-fog agents, etc.

The amounts of the components which are used in the oxygen scavenging compositions, or layers have an effect on the use, effectiveness and results of this method. Thus, the amounts of polymer, transition metal catalyst and any photoinitiator, antioxidant, polymeric diluents and additives, can vary depending on the article and its end use.

For instance, one of the primary functions of the polymer described above is to react irreversibly with oxygen during the scavenging process, while the primary function of the transition metal catalyst is to facilitate this process. Thus, to a large extent, the amount of polymer present will affect the oxygen scavenging capacity of the composition, i.e., affect the amount of oxygen that the composition can consume. The amount of transition metal catalyst will affect the rate at which oxygen is consumed. Because it primarily affects the scavenging rate, the amount of transition metal catalyst may also affect the onset of oxygen scavenging (induction period).

It has been found that the subject polymers, when used as part of the present composition, provide oxygen scavenger properties at desirable rate and capacity while causing the composition to have enhanced processability and compatibility properties over conventional ethylenically unsaturated polymers. Thus, the present composition can be used to provide, by itself or as a blend with diluent polymers, such as polyolefins and the like, a packaging material or film having enhanced processability properties. Further, the present composition consumes and depletes the oxygen within a package cavity without substantially detracting from the color, taste and/or odor of the product contained within the package cavity.

The amount of the above-described polymer contained as part of the present composition may range from about 1 to 100% by weight of the composition or layer composed of said composition in which both polymer and transition metal catalyst are present (hereinafter referred to as the "scavenging composition", e.g., in a coextruded film or container, the scavenging composition would comprise the particular layer(s) in which both the copolymer and transition metal catalyst components are present together). Typically, the amount of transition metal catalyst may range from 0.001 to 1% (10 to 10,000 ppm) of the scavenging composition, based on the metal content only (excluding ligands, counterions, etc.). In the event the amount of transition metal catalyst is less than 1%, it follows that the polymer and any additives will comprise substantially all of the remainder of the composition. The polymer of the present invention may further be combined with other polymeric oxygen scavenger agents.

Any further additives employed normally will not comprise more than 10% of the scavenging composition, with preferable amounts being less than 5% by weight of the scavenging composition.

Optionally, the compositions and process of this invention can include exposure of the polymer containing the oxygen scavenging-promoting transition metal to actinic radiation to reduce the induction period if any, before oxygen scavenging commences. A method is known for initiating oxygen scavenging by exposing a film comprising an oxidizable organic compound and a transition metal catalyst to actinic radiation. A composition of the present invention which has a long induction period in the absence of actinic radiation but a short or non-existent induction period after exposure to actinic radiation is particularly preferred. They maintain a high capability for scavenging oxygen upon activation with actinic radiation. Thus, oxygen scavenging can be activated when desired.

The radiation used in this method should be actinic, e.g., ultraviolet or visible light having a wavelength of about 200 to 750 nanometers (nm), and preferably having a wavelength of about 200 to 600 nm, and most preferably from about 200 to 400 nm. When employing this method, it is preferable to expose the oxygen scavenger to at least 0.01 Joule per gram of scavenging composition. A typical amount of exposure is in the range of 10 to 2000 Joules per gram. The radiation can also be an electron beam radiation at a dosage of about 2 to 200 kiloGray, preferably about 10 to 100 kiloGray. Other sources of radiation include ionizing radiation such as gamma, X-rays and corona discharge. The duration of exposure depends on several factors including, but not limited to, the amount and type of photoinitiator present, thickness of the layers to be exposed, thickness and opacity of intervening layers amount of any antioxidant present, and the wavelength and intensity of the radiation source. The radiation provided by heating of polyolefin and the like polymers (e.g., 100-250°C) during processing does not cause triggering.

Oxygen-scavenging compositions of the present invention are useful in many ways. The compositions can be dispersed as small particles for absorbing oxygen or can be coated onto materials such as metallic foil, polymer film, metalized film, paper or cardboard to provide, in some embodiments, scavenging properties and/or adhesive properties. The compositions are also useful in making articles such as single or multi-layer rigid thick-walled plastic containers or bottles (typically, between 5 and 100 mils in thickness) or in making single or muiti-layer flexible films, especially thin films (less than 5 mils, or even as thin as about 0.25 mil). Some of the compositions of the present invention are easily formed into films using well-known means. These films can be used alone or in combination with other films or materials.

The compositions of the present invention may be further combined with one or more polymers, such as thermoplastic polymers which are typically used to form film layers in plastic packaging articles. In the manufacture of certain packaging articles, well-known thermosets can also be used as a polymeric diluent.

Selecting combinations of a diluent and the composition of the present invention depends on the properties desired. Polymers which can be used as the diluent include, but are not limited to, polyethylene, low or very low density polyethylene, polypropylene, polyvinyl chloride, and ethylene copolymers such as ethylene-vinyl acetate, ethylene-alkyl acrylates or methacrylates, ethylene-acrylic acid or methacrylic acid, and ethylene-arylic or metharylic acid ionomers. In rigid packaging applications, polystyrene is often used. Blends of different diluents may also be used. However, as indicated above, the selection of the polymeric diluent largely depends on the article to be manufactured and the end use. Such selection factors are well known in the art.

If a diluent polymer such as a thermoplastic is employed, it should further be selected according to its compatibility with the composition of the present invention. In some instances, the clarity, cleanliness, effectiveness as an oxygen-scavenger, barrier properties, mechanical properties and/or texture of the article can be adversely affected by a blend containing a polymer which is incompatible with the composition of the present invention.

A blend of a composition of the present invention with a compatible polymer can be made by dry blending or by melt-blending the polymers together at a temperature in the approximate range of 50°C to 250°C. Alternative methods of blending include the use of a solvent followed by evaporation. When making film layers or articles from oxygen-scavenging compositions, extrusion or coextrusion, solvent casting, injection molding, stretch blow molding, orientation, thermoforming, extrusion coating, coating and curing, lamination or combinations thereof would typically follow the blending.

Layers comprising the composition of the present invention may be in several forms. They may be in the form of stock films, including "oriented" or "heat shrinkable" films, which may ultimately be processed as bags, etc., or in the form of stretch-wrap films. The layers may also be in the form of sheet inserts to be placed in a packaging cavity. In rigid articles such as beverage containers, thermoformed trays or cups, the layer may be within the container's walls. Even further, the layer may also be in the form of a liner placed with or in the container's lid or cap. The layer may even be coated or laminated onto any one of the articles mentioned above.

In multi-layered articles, the scavenging layer comprising the composition of the present invention may be included with layers such as, but not necessarily limited to, "oxygen barriers", i.e., layers of material having an oxygen transmission rate equal to or less than 100 cubic centimeters-mil per square meter (cc-mil/m²) per day per atmosphere pressure at room temperature, i.e., about 25°C. Typical oxygen barriers comprise poly(ethylene vinyl alcohol), polyacrylonitrile, polyvinyl chloride, poly(vinylidene dichloride), polyethylene terephthalate, silica and polyamides. Metal foil layers can also be employed.

Other additional layers may include one or more layers which are permeable to oxygen. In one preferred packaging construction, especially for flexible packaging for food, the layers include, in order starting from the outside of the package to the innermost layer of the package, (i) an oxygen barrier layer, (ii) a scavenging layer, i.e., the scavenging composition as defined earlier, and, optionally, (iii) an oxygen permeable layer. Control of the oxygen barrier property of (i) allows a means to regulate the scavenging life of the package by limiting the rate of oxygen entry to the scavenging composition (ii), and thus limiting the rate of consumption of scavenging capacity. Control of the oxygen permeability of layer (iii) allows a means to set an upper limit on the rate of oxygen scavenging for the overall structure independent of the composition of the scavenging composition (ii). This can serve the purpose of extending the handling lifetime of the films in the presence of air prior to sealing of the package. Furthermore, layer (iii) can provide a barrier to migration of the individual components in the scavenging films or by-products of scavenging into the package interior. Even further, layer (iii) also improves the heat-sealability, clarity and/or resistance to blocking of the multi-layer film.

Further, additional layers such as adhesive layers may also be used. Compositions typically used for adhesive layers include anhydride functional polyolefins and other well-known adhesive layers.

To determine the oxygen scavenging capabilities of a composition, the rate of oxygen scavenging can be calculated by measuring the time that elapsed before the article depletes a certain amount of oxygen from a sealed container. For instance, a film comprising the scavenging component can be placed in an air-tight, sealed container of a certain oxygen containing atmosphere, e.g., air which typically contains 20.9% oxygen by volume. Then, over a period of time, samples of the atmosphere inside the container are removed to determine the percentage of oxygen remaining. The scavenging rates of the composition and layers of the present invention will change with changing temperature and atmospheric conditions.

When an active oxygen barrier is prepared, the scavenging rate can be as low as 0.1 cc oxygen per gram of composition of the present invention per day in air at 25°C and a 1 atmosphere pressure. However, preferable compositions of this invention have rates equal to or greater than 1 cc oxygen per gram per day, thus making them suitable for scavenging oxygen from within a package, as well as suitable for active oxygen barrier applications. Many compositions are even capable of more preferable rates equal to or greater than 5.0 cc O₂ per gram per day.

Generally, film layers suitable for use as an active oxygen barrier can have an oxygen transmission rate as high as 10 cc oxygen per square meter per mil per day when measured in air at 25°C and 1 atmosphere pressure. Preferably, a layer of this invention has an oxygen transmission rate less than about 1 cc oxygen per square meter per mil per day, and more preferably has an oxygen transmission rate less than about 0.2 cc oxygen per square meter per rail per day under the same conditions, thus making it suitable for active oxygen barrier applications as well as for scavenging oxygen from within a package.

In an active oxygen barrier application, it is preferable that the combination of oxygen barriers and any oxygen scavenging activity create an overall oxygen transmission rate of less than about 1.0 cubic centimeter-mil per square meter per day per atmosphere pressure at 25°C. Another definition of acceptable oxygen scavenging is derived from testing actual packages. In actual use, the scavenging rate requirement will largely depend on the internal atmosphere of the package, the contents of the package and the temperature at which it is stored.

In a packaging article made according to this invention, the scavenging rate will depend primarily on the amount and nature of the composition of the present invention in the article, and secondarily on the amount and nature of other additives (e.g., diluent polymer, antioxidant, etc.) which are present in the scavenging component, as well as the overall manner in which the package is fabricated, e.g., surface area/volume ratio.

The oxygen scavenging capacity of an article comprising the invention can be measured by determining the amount of oxygen consumed until the article becomes ineffective as a scavenger. The scavenging capacity of the package will depend primarily on the amount and nature of the scavenging moieties present in the article, as discussed above.

In actual use, the oxygen scavenging capacity requirement of the article will largely depend on three parameters of each application:
(1) the quantity of oxygen initially present in the package;
(2) the rate of oxygen entry into the package in the absence of the scavenging property; and
(3) the intended shelf life for the package.

The scavenging capacity of the composition can be as low as 1 cc oxygen per gram, but is preferably at least 10 cc oxygen per gram, and more preferably at least 50 cc oxygen per gram. When such compositions are in a layer, the layer will preferably have an oxygen capacity of at least 250 cc oxygen per square meter per mil thickness and more preferably at least 500 cc oxygen per square meter per mil thickness.

Other factors may also affect oxygen scavenging and should be considered when selecting compositions. These factors include but are not limited to temperature, relative humidity, and the atmospheric environment in the package.

Applicants have achieved a composition for a rigid beverage and food container comprising PET and/or PEN, the container incorporating an oxygen scavenging component of cyclic olefin which oxidizes oxygen in the interior of the container without giving off odor and/or taste as a result of its oxygen scavenging function, nor does it cause a change in molecular weight. This is because the cyclic olefin oxygen scavenging component does not fragment as it oxidizes, Thus the composition maintains the structural integrity of the container while avoiding the problem of imparting oxidation byproducts to the packaged material.

### EXAMPLES

Objects and advantages of this invention are further illustrated by the following examples. The particular materials and amounts thereof, as well as other conditions and details, recited in these examples should not be used to unduly limit this invention.

### Example 1

Preferred embodiments of the present invention include polymers and oligomers, which contain cyclohexene groups accessible to free oxygen molecules. These polymers or oligomers may be prepared from any of a number of methods though one preferred reaction comprises 1, 2, 3, 6, tetrahydrophthalic anhydride. This anhydride is a low cost monomer derived from butadiene, which makes it particularly attractive on a commercial scale. The anhydride may be used to make polyester resins such as by reaction with diols. It may also be reacted with hydroxy or polyhydroxy compounds to produce half esters suitable for subsequent use in plastic film and materials manufacture.

### Example 2

Non-aromatic alkenyl benzyl alcohols (e.g. tetrahydrobenzyl alcohols) may also be reacted with certain compounds to produce useful scavengers. For instance tetrahydrobenzyl alcohol may be reacted with compounds containing a carboxylic acid, acid halide, ester, anhydride and/or isocyanate functionality. These compounds may be small molecules or oligomers or polymers. For example, tetrahydrobenzyl alcohol may be reacted with styrene, maleic anhydride copolymers or with polyfunctional isocyanates.

### Example 3

Cyclohexene dimethanol compounds may be used to prepare oxygen absorbing polyesters and polyurethanes.

### Example 4

As another example, tetrahydrobenzoic acid and tetrahydrobenzaldehyde may also be used to modify various hydroxyl functional materials.

### Example 5

Reactions such as the functionalization of polymers may be carried out by a reactive extrusion process. For instance this may be a transesterification process.

### Example 6

Cyclohexene anhydride may be used in the preparation of useful oxygen scavengers. These cyclohexene anhydrides may be prepared by from a diene monomer such as butadiene with maleic anhydride. Of commercial attractiveness are their low cost and their ability to be converted into a number of useful intermediates. In addition, they may also be used to functionalize OH containing polymers. The half esters, which form rapidly when a cyclic anhydride reacts with an OH group, may be subsequently neutralized and the resultant materials dispersed in ionomers or ethylene acrylic acid copolymers (for instance).

For ease of use, small functionalized molecules such as the reaction product of four moles of tetrahydrophthalic anhydride with pentaerythritol may be prepared either by heating in a mutual solvent or by a reactive extrusion process. These may then be dispersed into a commodity polymer such as EVA.

The cyclohexene anhydrides may also be converted into linear polyesters by reaction with ethylene glycol and the like.

### Example 7

Useful anhydrides are cyclic anhydrides and in particular the Diels Alder adducts of various alkenes. Typically this will comprise 1, 3 butadiene (and substituted derivatives) with other compounds able to complete a Diels Alder type reaction. The resulting anhydrides may then be used in the manufacture of various oxygen scavengers, and polymers containing same.

### Example 8

Film structures, coatings, and molded articles, as well as sachets and impregnated matrices, are envisaged incorporating oxygen scavengers as discussed previously. Also included are transition metal catalysts such as used in the prior art for catalyzing oxygen scavenging reactions. Optionally initiators or triggers for the reaction may also be included.

### Example 9

### Preparation of a low molecular weight oxidizable oil from 3-Cyclohexene-1-carbonyl chloride and triethylene glycol.

3-Cyclohexene-1-carbonyl chloride was prepared as follows:

50g of thionyl chloride was added to 27.6g of 3-cyclohexene-1-carboxylic acid and the solution was stirred for two hours at 50°C. Excess thionyl chloride was removed under vacuum and the resulting yellow brown oil was purified by distillation under vacuum (bp 80-82°C at 18-19mm Hg).

The oil was then prepared in the following manner:

In a 250 ml flask fitted with a drying tube was placed 18.7g of 3-cyclohexene-1-carbonyl chloride and 40cc of methylene chloride. A solution of 9.6g of triethylene glycol in 20ml of methylene chloride was added and the reaction was stirred for 2 hours at room temperature, by which time the evolution of hydrochloric acid had ceased.

80ml of 10% aqueous sodium bicarbonate was added to the reaction mixture and the mixture was vigorously stirred for 45 minutes. The organic layer was collected, washed with water and then dried with magnesium sulphate. The methylene chloride was removed under reduced pressure giving a colorless. oil.

The cyclohexene oil was compounded into a film with the following parts by weight:

| | |
|---|---|
| Oil | 12 |
| Silica | 5 |
| Benzophenone | 0.3 |
| Cobalt (111) acetylacetonate | 0.28 |
| Ethylene vinyl acetate copolymer (18% EVA) | 90 |

A similar film was prepared using sunflower seed oil in place of the cyclohexene based oil.

Both films were exposed to 4 minutes of UV light, then sealed in oxygen barrier bags and stored in the dark.

Both materials scavenged oxygen after photoexposure and the sunflower oil based material was a faster scavenger than the cyclohexene oil based material. However, gas chromatography of the headspace of the bags post oxidation revealed that there was a very large difference in the levels of volatile components. The cyclohexene based material produced less than 3% of the volatile components produced by the sunflower oil based material.

The cyclohexene based films were stable for more than 300 days if stored at room temperature in the absence of light (i.e., the oxygen concentration in a sealed package containing the film specimens was essentially unchanged after storage for this time period).

A similar cyclohexene based film was prepared, this time using 3,4 dimethyl-3-cyclohexene-1-carbonyl chloride as the starting material. This film was a much faster oxygen absorber than the film prepared from the unsubstituted product. The film form the substituted produced less than 10% of the total volatile components produced from an equivalent film made from sunflower oil.

The dimethyl cyclohexene based films were stable for at least two hundred days when stored at room temperature in the absence of light. The stability of similar vegetable oil based films was limited to around 50 days.

This series of experiments revealed the following:
1. Cyclohexene functionalized materials are effective oxygen absorbers.
2. The speed of reaction may be increased by substituting methyl groups adjacent to the double bond.
3. Cyclic alkene based materials produce much lower levels of volatile oxidation products than linear alkene based materials.
4. The storage stability of cyclohexene containing films is excellent.

### Example 10

### Preparation of an oxidizable polyester resin.

In a three neck round bottom flask equipped with a Dean and Stark trap, reflux condenser and nitrogen inlet/exit were placed the following materials:

| | |
|---|---|
| cis-1,2,3,6-Tetrahydrophthalic anhydride | 35.54g |
| 1,4-Butanediol | 20g |

75ml of xylene was added, so that the trap was full of xylene and the mixture was brought to reflux. The reaction was refluxed for six and a half hours: 0.55g of p-Toluenesulfonic acid monohydrate was added and reflux was continued for a further six and a half hours.

25ml of xylene was removed from the trap and the mixture was refluxed for a further one hour. A very viscous pale colored solution was obtained.

The solution was extracted with methanol to remove the acid catalyst, and was diluted with dichloromethane prior to use.

The polymer was obtained as a 38% w/w solids solution in toluene/dichloromethane. To 12.37 g of the polymer solution was taken 0.0213 g cobalt Ten-Cem® (OMG Inc.) in 5 mL of dichloromethane and 0.0069 g of Quantacure™CPTX (1-chloro-4-propoxy-thioxanthone, Great Lakes Fine Chemicals) was added. The mixture was stirred for a few minutes and a film was cast onto the surface of the another film at a wet thickness of about 1 mm. A second film was formulated as follows and cast as above: 12.64 g polymer solution, 0.0318 g cobalt Ten-Cem® and 0.0074 g 4,4'-dimethoxybenzophenone (DMOBP, Spectrum Quality Products Inc.).

The dried films were irradiated for 2.5 minutes with a combination of germicidal and backlight UV lamps. The approximate dose of UVC was 1350mJcm² and the approximate dose of UVA was 1950mJcm². The irradiated films were sealed in a barrier pouch along with 120cc of air. The oxygen content was monitored with time and the following results were obtained:

| Film #1, 4.7g, 1020 ppm Cobalt and 1470 ppm CPTX | |
|---|---|
| Elapsed Time (days) | Percent Oxygen |
| 0 | 20.6 |
| 1 | 19.2 |
| 2 | 18.4 |
| 3 | 16.9 |

| Film #2, 4.8g, 1500 ppm Cobalt and 1480 ppm DMOBP | |
|---|---|
| Elapsed Time (days) | Percent Oxygen |
| 0 | 20.6 |
| 1 | 19.3 |
| 2 | 18.6 |
| 3 | 17.0 |

This example illustrates that polyesters derived from tetrahydrophthalic anhydride are useful oxygen scavengers.

### Example 11

### Preparation of an oxidizable polymer from 3-Cyclohexene-1-methanol and an alternating copolymer of maleic anhydride and octadecene.

In a three neck round bottom flask equipped with condenser and nitrogen inlet was placed 20 g of poly(maleic anhydride-alt-1-octadecene). 80 cc of methylene chloride was added and the mixture was stirred to dissolve. After a clear solution had been obtained 3.2g of 3-Cyclohexene-1-methanol was added, and washed into the flask with a further 10cc of methylene chloride.

The mixture was refluxed with stirring under nitrogen for two hours, then left overnight at room temperature. The solution was refluxed for a further three hours and allowed to cool to room temperature.

The polymer was obtained as a 21.9 wt. % solution in dichloromethane. To 20.51 g of the polymer solution was added 0.0201 g of cobalt Ten-Cem® (OMG Inc., 22.5% Co by wt.) dissolved in 5 mL of toluene solution and 0.0038 g of Quantacure™ BMS (4-benzoyl-4'-methyl(diphenyl sulfide) available from Great Lakes Fine Chemicals Ltd.). The mixture was stirred for a few minutes and a film was cast using a draw down bar to a wet film thickness of about 1 mm.

A second film was formulated as follows: 20.10 g polymer solution, 0.0474 g cobalt Ten-Cem®, 0.0079 g 4,4'-dimethylbenzophenone (DMBP, from Lancaster Synthesis). A third film was formulated as follows: 20.84 g polymer solution, 0.0398 g cobalt Ten-Cem®, 0.0085 g 2-isopropylthioxanthone (ITX, First Chemical Co.).

The dried films were irradiated for 2.5 minutes with a combination of germicidal and backlight UV lamps. The approximate dose of UVC was 1350 mJ/cm² and the approximate dose of UVA was 1950 mJ/cm². The irradiated films were sealed in a barrier pouch along with about 120 cc of air. The oxygen content was monitored with time as described elsewhere. The following results were obtained:

| Film Sample #1, 1.34g, With 1004 ppm Cobalt and 844 ppm BMS | |
|---|---|
| Elapsed Time (days) | Percent Oxygen |
| 0 | 20.6 |
| 1 | 12.2 |
| 2 | 7.5 |
| 5 | 6.2 |

| Film Sample #2, 3.04g, with 2420 ppm Cobalt and 1795 ppm DMBP | |
|---|---|
| Elapsed Time (days) | Percent Oxygen |
| 0 | 20.6 |
| 1 | 11.8 |
| 2 | 10.0 |
| 5 | 9.7 |

| Film Sample #3, 2.09g, with 1960 ppm Cobalt and 1860 ppm ITX | |
|---|---|
| Elapsed Time (days) | Percent Oxygen |
| 0 | 20.6 |
| 1 | 13.8 |
| 2 | . 10.5 |
| 5 | 10.0 |

The results suggest that the reaction of a polymeric anhydride and tetrahydrobenzyl alcohol is a useful route to oxygen scavenging plastics.

### Example 12

### Preparation of a Cyclohexene containing polymer by transesterification

To a 2L resin kettle was taken 180 g of polyethylene-co-methyl acrylate (EMAC® SP2260, Chevron, 24 wt. % methyl acrylate) and 1 L of toluene. The kettle was equipped with a mechanical overhead stirrer, Dean-Stark trap and a condenser. The kettle was heated to melt the polymer. To the stirred solution was added 28.12 g of 3-cyclohexene-1-methanol, followed by the addition of 2.145 g of 4-(2-hydroxyethoxy)benzophenone. (Note: this benzophenone derivative was prepared by the method of Yoshino et al. *Bull*. *Chem Soc. Japan,* 1973, 46, 553-6 using 4-hydroxybenzophenone, ethylene carbonate and tetraethylammonium iodide.) The catalyst, titanium (IV) isopropoxide (1.05g) was added. The mixture turned yellow and the reflux rate increased. Heat was maintained for 4 hours and about 75 mL of condensate was removed in four fractions. An additional 0.5 g of titanium isopropoxide was added and heat was maintained for an additional 8 hours. Additional toluene was added as needed to maintain the reaction volume. Again an additional 0.5 g of catalyst was added and heat maintained for another 8 hours. Analysis of the condensate showed no more production of methanol. The reaction mixture was cooled to a gel and precipitated into methanol. The polymer was washed with methanol until nothing was extracted into the'methanol fractions.

The above resin containing cyclohexene pendant groups and a covalently bound benzophenone derivative was melt compounded with 500 ppm vitamin E as the antioxidant and 10% of an EVA based cobalt (II) oleate (Shepherd Chemicals) masterbatch. The masterbatch contained 1.0% cobalt metal by weight. Samples were compression molded and cut to 197.56 cm² of UVC light (254 nm) and was sealed in an oxygen barrier pouch (Cryovac P640B) with 300 cc of air and was stored in the dark at room temperature. Headspace oxygen levels were monitored periodically by Withdrawing a.4 cc sample and analyzing using a Mocon model LC 700F oxygen analyzer. The following results were obtained for the 1.9 g (7.8 mil thick) sample.

| Elapsed Time (days) | Percent Oxygen |
|---|---|
| 0 | 20.6 |
| 1 | 15.6 |
| 5 | 5.0 |
| 14 | 2.1 |
| 21 | 1.2 |

This example illustrates excellent oxygen scavenging ability from this type of polymer and the usefulness of a covalently bound photoinitiator.

### Example 13

### Preparation of oxidizable polyurethanes.

In a two necked 250ml flask equipped with reflux condenser and nitrogen inlet/exit were placed the following materials:

| | |
|---|---|
| 1,6-Diisocyanatohexane | 6.5g |
| 3-Cyclohexene-1,1dimethanol | 5.23g |
| 2-Butanone | 70ml |

One drop of dibutyltin dilaurate was added and the mixture was stirred under nitrogen for thirty minutes at room temperature. The mixture was then brought to reflux for a further four hours and one drop of water in 10ml of MEK was added. The mixture was refluxed for a further hour and then allowed to cool to room temperature.

A polyurethane containing cyclic unsaturation was prepared from 1,6-diisocyanatohexane and 3-cyclohexene-1,1-dimethanol. The polymer (3.912 g) was taken into 10 mL dichloromethane and a solution of 0.0243 g of cobalt Ten-Cem® (OMG Inc.) in 5 mL of dichloromethane was added. To the stirred mixture was added 0.0084 g of 4,4'-dimethylbenzophenone (DMBP, Lancaster Synthesis). The mixture was stirred for about 15 minutes. A film was cast from the solution on the surface of another film at a wet thickness of about 1 mm. The dried film was triggered and tested as described in example 3 above.

| 3.9g, with 1400 ppm Cobalt and 2150 ppm DMBP | |
|---|---|
| Elapsed Time (days) | Percent Oxygen |
| 0 | 20.6 |
| 1 | 18.3 |
| 4 | 13.1 |
| 5 | 9.5 |

These results suggest that polyurethanes derived from 3-Cyclohexene-1,1-dimethanol are useful oxygen absorbers. These materials and alternative formulations may be useful in formulating oxygen scavenging adhesive resins for use in flexible packaging i.e., for use in lamination.

### Example 14

### Preparation of a poly (vinyl acetal) from poly(vinyl alcohol) and 3-Cyclohexene-1-carboxaldehyde.

In a 500ml flask equipped with nitrogen inlet/exit and mechanical stirrer was placed 150 ml of a 70/30 mix of dioxane/ethanol and 10g of poly(vinylalcohol). The mixture was stirred and 15.7g of 3-Cyclohexene-1-carboxaldehyde was added, followed by 0.25ml conc. HCl and 5 mg of hydroquinone. The mixture was refluxed for four hours, during which time the poly(vinyl alcohol) dissolved and turned a pale yellow color, 0.5g of sodium acetate was added followed by 2.5g of urea, both in aqueous solution. The polymer precipitated and was purified by addition of further dioxane then precipitation into water. The dried polymer was found to contain approximately 63mole% of acetal groups.

A similar polymer was prepared from 3,4-dimethyl-3-cyclohexene-1-carboxaldehyde and poly(vinyl alcohol) which contained approximately 65 mole% of acetal groups.

A solution of cobalt (III) acetylacetonate (20mg) and benzophenenone (20mg) in methylene chloride was added with stirring to a solution (1g) of each acetal resin dissolved in 15ml of warm dioxane. The solution was poured into a 150mm diameter flat bottom petri dish and the solvent was allowed to evaporate. The resultant film was held under high vacuum for 2-3 hours to remove any residual solvent. A further sample containing 30% of a dibutyl phthalate plasticiser was also prepared using the dimethyl substituted acetal resin described above.

The film samples were exposed to 4 minutes of UVA radiation and then vacuum packed in a barrier bag. 200ml of air was injected into the bag and the puncture point was isolated by heat sealing. The pouch was stored in the absence of light.

The following results were obtained for the unsubstituted resin:

| Elapsed Time (days) | Percent Oxygen |
|---|---|
| 0 | 20.6 |
| 1 | no reading |
| 3 | 9.9 |
| 6 | 7.2 |
| 12 | 1.2 |

The following results were obtained for the disubstituted resin:

| Elapsed Time (days) | Percent Oxygen |
|---|---|
| 0 | 20.6 |
| 1 | 10.2 |
| 3 | 4.3 |
| 6 | 1.4 |
| 21 | 0 |

The following results were obtained from the plasticised resin:

| Elapsed Time (days) | Percent Oxygen |
|---|---|
| 0 | 20.6 |
| 3 | 3.7 |
| 4 | 1.8 |
| 7 | 0.2 |
| 12 | 0 |

These results demonstrate the following principles:
1. Cyclohexene based acetal resins are effective oxygen scavengers.
2. The substituted cyclohexene rings provide faster oxygen scavengers than the unsubstituted resins.
3. A plasticiser tends to increase the rate of oxygen scavenging.

Non-limiting examples are given in Examples 15 and 16 below of experimental conditions that were used for preparation of the polymers. Non-limiting examples of the resin preparation followed by steam stripping as well as compounding the polymers with oxidation catalyst, such as cobalt oleate and a photoinitiator, such as Methanone, [5'-(5'-(4-benzoylphenyl)[1,1':3', 1"-terphenyl]-4,4"-diyl]bis[phenyl- (hereinafter referred to as BBP³), and extruded into a 3-layer film having a PE/oxygen scavenging polymer/PE structure are provided in Examples 17 through 20 below.

Headspace studies of three layer films made by compounding catalyst package with both fresh and aged (20 months stored in air at ambient temperature) resins after UV triggering give a very fast rate of oxygen scavenging and the resulting packages are relatively non-odorous. Non-limiting examples of such studies are given in Examples 21 and 22. Furthermore, the above polymer can be further diluted by a lower cost oxygen permeable resin, such as EBAC or PE or EVA, down to 50 and even 25% of the original concentration and still maintain a high oxygen scavenging rate, as the non-limiting examples in Examples 23 and 24 show.

### Example 15

### Polymer Preparation (C1641-6)

550 ml of decalin® was placed in a flask. To this was added 350 g of Chevron EMAC SP-2260 which has 24 weight % of methyl acrylate (0.9767 moles of methyl acrylate) and 0.48 g of Irganox®1076 (0.1 mole). The temperature of the mixture was gradually raised while stirring. When the temperature reached approximately 120°C, 127.1 g (0.9767 moles) of 3-methyl-cyclohex-1-ene-4-methanol (97%) was added. When the temperature reached approximately 140°C, 4.8 g of the catalyst Ti(OC₂H₅)₄ was added a portion at a time. The temperature was maintained at 170°C while stirring. The course of the reaction was observed by subjecting samples of the mixture to NMR at hourly intervals. The percent conversion is given in Table 1 below. After 5 hours of reaction, the mixture was cooled and 400 ml of CHCl₃ was added and the mixture was then precipitated by adding it to 4 liters of CH₃OH in a Waring blender. The precipitate is filtered and washed with CH₃OH and dried in a vacuum oven at 50°C. The dried mixture yielded 407.5 g of ethylene/methyl acrylate/methyl cyclohexene methyl acrylate (EMCM).

**Table 1**

| Time (hours) | Percent Conversion |
|---|---|
| 1 hour | 50% |
| 2 hours | 62.3% |
| 3 hours | 65.5% |
| 5 hours | 87.1% |

390 grams of a combination of the above prepared polymer and the same polymer prepared under the same conditions in a different batch, which together have a conversion percentage of 68.8%, was solvent coated with 3.25 g cobalt-neodecanoate in 70 ml normal hexane. The mixture was tumble dried for 1.5 hours and residual solvent removed in a vacuum.

### Example 16

### Polymer Preparation

600 ml of decalin was placed in a flask. To this was added 334 grams of Chevron SP-2260 (0.9330 moles of methyl acrylate) and 0.44 g of Irganox® 1010 (0.1% mole). The temperature of the mixture was gradually raised while stirring. When the temperature reached approximately 120°C, 104.6 g (0.93 moles) of cyclohex-1-ene-4-methanol was added. When the temperature reached approximately 140°C, 4.4 g of the catalyst Ti(OC₂H₅)₄ was added a portion at a time. The temperature was maintained at 160°C while stirring. The course of the reaction was observed by subjecting samples of the mixture to NMR at hourly intervals. The percent conversion is given in Table 2 below. After 3 hours of reaction, the mixture was cooled and 400 ml of CHCl₃ was added and the mixture was then precipitated by adding it to 4 liters of CH₃OH in a Waring blender. The precipitate was filtered and washed with CH₃OH and dried in a vacuum oven at 50°C. The dried mixture yielded 380.5 g of polymer.

**Table 2**

| Time (hours) | Percent Conversion |
|---|---|
| 1 hour | 43.8% |
| 2 hours | 56.7% |
| 3 hours | 55.7% |

185 grams of the above-prepared polymer was combined with 45 ml normal hexane and 1.54 g cobalt-neodecanoate resulting in 1000 ppm of cobalt ion and 0.0185 g Irganox® 1010 resulting in 100 ppm Irganox®. The mixture was heated and blended and then dried in a vacuum-oven. The resulting compound was extruded into a film.

Additionally, 185 grams of the above-prepared polymer was combined with 45 ml normal hexane and 1.54 g cobalt-neodecanoate (resulting in 1000 ppm of cobalt ion) and 0.046 g Irganox® 1010 (resulting in 250 ppm Irganox®). The mixture is heated and blended and then dried in a vacuum-oven. The resulting compound is extruded into a film.

### Example 17

### EMCM Made in ZSK-30 Extruder

Ethylene-methyl acrylate copolymer (EMAC) was fed into a Werner & Pfleiderer ZSK-30 twin screw extruder at 6 kg/hr, and the reactants and catalysts were added to the extruder in a subsequent reaction zone. The catalyst Ti(OC₃H₇)₄ was added with the reactants at 3 mol % or at a rate of 148 cc/hr. Irganox®/Toluene solution was added at 4.5 g/900 cc using a Milton Roy 29/290 mini-pump. To obtain 100 ppm of Irganox®, it must be added at 2.2 cc/min. To obtain 50 ppm of Irganox, it must be added at 1.1 cc/min. Cyclohexane methyl alcohol with 1,000 ppm of an antioxidant of BHT was added via a Milton Roy dual head at 1958 cc/hr. Steam is injected into the system at 800 cc H₂O/Hr at the end of the reaction zone.

51 Ibs of EMCM product (100 ppm lrganox® 1010, 59.3% methyl alcohol (MA), 2.98 g/10 min. Melt Flow) was produced over a period of approximately 2 hours.

### Example 18

### EMCM Made in ZSK-30

45 Ibs of EMCM product (100 ppm Irganox®1010, 2.38 g/10 min Melt Index) was extruded over a period of approximately 3 hours. A dual steam stripping setup was used in which pressurized injectors at zones 4 and 11 of the extruder pumped steam at 1076 cc/hr and 728 cc/hr, respectively. Both injectors were Pulse 680 pumps with a pressure of at least 800 psi, except at the first measured time interval when injector (No. 4) was measured at 500-550 psi and injector (No. 11) was measured at 500 psi.

### Example 19

### Co-polymerization of Styrene and 3-Cyclohexene-1-Methanol Methacrylate

In a 1-liter round bottom flask, 65 grams styrene (0.625 mole), 113 grams of 3-cyclohexene-1-methanol methacrylate (0.625 mole), 1.25 grams of Benzoyl peroxide and 450 grams of toluene were mixed and degassed by freeze-thaw cycles. The degassed solution was polymerized at 70-75°C for 48 hours and discharged into 2 liters of methanol in a Waring Blender. The product isolated was dried in a vacuum oven at 50°C for 2 hours to give 155 grams of co-polymer. NMR analysis indicates it contains 48 mole % of styrene and 52 mole % of 3-cyclohexene-1-methanol methacrylate. Tg by DSC is 66°C.

### Example 20

### Oxygen Scavenging Test of Styrene/CHMA Copolymer

90 weight % of the above-mentioned co-polymer and 10 weight % of a EVA based Master batch containing 1 weight % of co-oleate and 1 weight % of a photoinitiator (BBP³) were processed into a 8 mil thick monolayer film. A 100 cm² film was irradiated at both sides to receive 800 mJoules/cm² of 254 nm UV on each side and sealed into a foil bag containing 300 cc of 1% oxygen. The oxygen uptake was monitored up to 11 days at 4°C and at room temperature. The results are shown in Tables 3 (4°C) and 4 (room temperature).

**Table 3**

| Time (days) | O₂ Meas. Vol% | O₂ Meas. Vol, ml | Vol―O₂ Used ml | O₂ Uptake ml/g | O₂ Uptake Avg Rate cc/m²/day | Instant Rate cc/ m²/day | O₂ Capacity cc/m²/mil |
|---|---|---|---|---|---|---|---|
| 0.0 | 1.05 | 3.15 | 0.00 | 0.00 | 0.00 | 0.00 | 0.00 |
| 1.1 | 0.94 | 2.77 | 0.32 | 0.18 | 14.79 | 14.79 | 1.62 |
| 3.9 | 0.49 | 1.42 | 1.63 | 0.92 | 20.73 | 23.03 | 8.15 |
| 4.8 | 0.39 | 1.11 | 1.91 | 1.08 | 19.81 | 15.78 | 9.57 |
| 7.0 | 0.30 | 0.84 | 2.17 | 1.22 | 15.40 | 5.72 | 10.83 |
| 11.0 | 0.09 | 0.25 | 2.74 | 1.54 | 12.43 | 7.22 | 13.72 |

**Table 4**

| Time (days) | O₂ Meas. Vol% | O₂ Meas. Vol, ml | Vol―O₂ Used ml | O₂ Uptake ml/g | O₂ Uptake Avg Rate cc/m²/day | Instant Rate cc/ m²/day | O₂ Capacity cc/m²/mil |
|---|---|---|---|---|---|---|---|
| 0.0 | 1.04 | 3.12 | 0.00 | 0.00 | 0.00 | 0.00 | 0.00 |
| 1.1 | 0.48 | 1.42 | 1.65 | 1.03 | 75.28 | 75.28 | 8.26 |
| 3.9 | 0.09 | 0.26 | 2.78 | 1.73 | 35.40 | 19.96 | 13.92 |
| 4.8 | 0.04 | 0.11 | 2.93 | 1.82 | 30.26 | 7.89 | 14.63 |
| 7.0 | 0.01 | 0.03 | 3.01 | 1.87 | 21.39 | 1.91 | 15.05 |
| 11.0 | 0.01 | 0.03 | 3.01 | 1.87 | 13.64 | 0.00 | 15.05 |

### Example 21

### Polymerization of 3-cyclohexene-1-methanol acrylate

75 grams (0.45 mole) of 3-cyclohexene-1-methanol acrylate (CHAA), 200 ml of toluene and 0.5 grams of Benzoyl peroxide were charged into a 500 ml round-bottomed flask and degassed by freeze-thaw cycles. The degassed solution was polymerized at 70-75°C for 48 hours. The viscous polymer solution was worked up by precipitating in methanol solution in a Waring blender. After vacuum drying at room temperature for 3 days, the product is a rubbery clear polymer which weighs 53 grams.

### Example 22

### Headspace Analysis of O₂ Scavenging in Dowlex® 3010/EMCM/Dowlex® 3010 Films

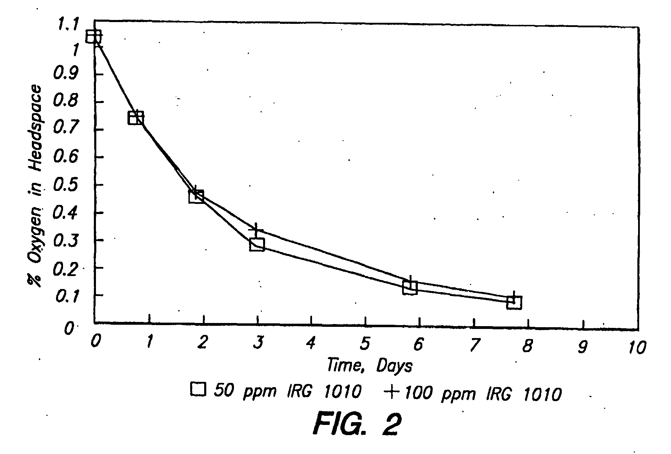

Oxygen scavenging analysis was performed using a Mocon HS750 with a headspace volume of 300 cc. The sample tested was a 0.48 g three-layer film with Dowlex® 3010 film for the two outside layers and steam stripped EMCM (59% converted) for the middle layer (50 ppm Irganox® 1010). The thickness of the layers was 0.5/1/0.5 +/- 0.1 Mil. The oxygen scavenging portion of the middle layer comprised 1000 ppm Cobalt salt, 1000 ppm BBP³ and was exposed for 1.6 minutes to 254 nm UV at 1 inch to receive 800 mJ/cm². The oxygen scavenging was tested with 300 cc 1% O₂ at 4°C. The results of the tests are given below in Table 5. These results are plotted along with the results of Example 20 in Figure 2, which graphically plots % oxygen in headspace against time (days). The oxygen scavenging uptake capacity is based on the total weight of the three-layer film.

**Table 5**

| Time (days ) | O₂ Meas. Vol% | O₂ Meas. Vol, ml | Vol―O₂ Used ml | O₂ Uptake ml/g | O₂ Uptake Avg Rate cc/m²/day | Instant Rate cc/ m²/day | O₂ Capacity cc/m²/mil |
|---|---|---|---|---|---|---|---|
| 0.0 | 1.04 | 3.12 | 0.00 | 0.00 | 0.00 | 0.00 | 0.00 |
| 0.8 | 0.74 | 2.18 | 0.89 | 1.84 | 57.93 | 57.93 | 44.25 |
| 1.9 | 0.46 | 1.33 | 1.70 | 3.54 | 45.85 | 37.36 | 84.85 |
| 3.0 | 0.29 | 0.83 | 2.18 | 4.54 | 36.87 | 21.87 | 109.08 |
| 5.8 | 0.14 | 0.39 | 2.60 | 5.42 | 22.46 | 7.41 | 130.08 |
| 7.8 | 0.09 | 0.25 | 2.74 | 5.71 | 17.67 | 3.51 | 136.95 |

### Example 23

### Headspace Analysis of O₂ Scavenging in Dowlex® 3010/EMCM/Dowlex® 3010 Films

Oxygen scavenging analysis was performed using a Mocon HS750 with a headspace volume of 300 cc. The sample tested was a 0.47 g three-layer film with Dowlex® 3010 film for the two outside layers and steam stripped EMCM for the middle layer (50 ppm Irganox 1010)). The thickness of the layers was 0.5/1/0.5 +/- 0.1 Mil. The oxygen scavenging portion of the middle layer comprised 1000 ppm Cobalt salt, 1000 ppm BBP³ (a photoinitiator) exposed for 1.6 minutes to 254 nm UV at 1 inch to receive 800 mJ/cm². The oxygen scavenging was tested with 300 cc 1% O₂ at 4°C. These results are plotted along with the results of Example 21 in Figure 2, which graphically plots % oxygen in headspace against time (days).

### Example 24

### Headspace Analysis of O₂ Scavenging in Dowlex® 3010/EBAC:EMCM/Dowlex® 3010 Films

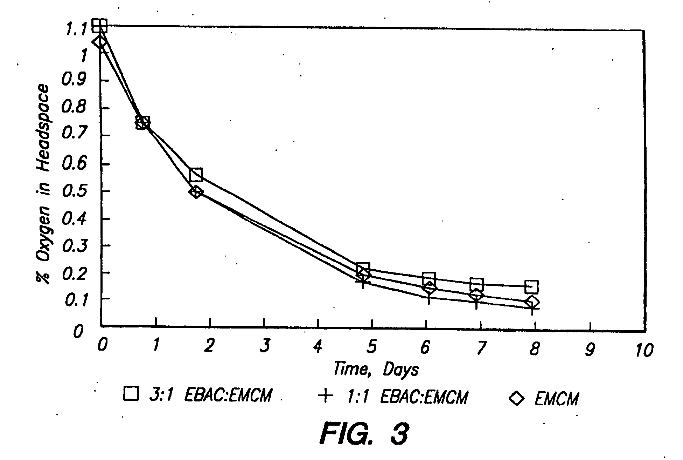

Oxygen scavenging analysis was performed using a Mocon HS750 with a headspace volume of 300 cc. The sample tested was a 0:45 g three-layer film with Dowlex® 3010 film for the two outside layers and 3:1 EBAC (ethylene/butyl acrylate copolymer):EMCM (ethylene/methyl acrylate/cyclohexenyl methyl acrylate) for the middle layer (50 ppm Irganox® 1010)). The thickness of the layers was 0.5/1/0.5 +/- 0.1 Mil. The oxygen scavenging portion of the middle layer comprised 1000 ppm of Cobalt salt, 1000 ppm BBP³ was exposed for 1.6 minutes to 254 nm UV at 1 inch to receive 800 mJ/cm². The oxygen scavenging was tested with 300 cc 1% O₂ at 4°C. These results are plotted along with the results of Example 22 in Figure 3, which graphically plots % oxygen in headspace against time (days).

### Example 25

### Headspace Analysis of O₂ Scavenging in Dowlex® 3010/EBAC:EMCM/Dowlex® 3010 Films

Oxygen scavenging analysis was performed using a Mocon HS750 with a headspace volume of 300 cc. The sample tested was a 0.47 g three-layer film with Dowlex® 3010 film for the two outside layers and 1:1 EBAC:EMCM for the middle layer (50 ppm Irganox®1010)). The thickness of the layers was 0.5/1/0.5 +/- 0.1 Mil. The oxygen scavenging portion of the middle layer comprised 1000 ppm Cobalt Oleate salt, 1000 ppm BBP³ exposed for 1.6 minutes at 254 nm UV at 1 inch to receive 800 mJ/cm². The oxygen scavenging was tested with 300 cc 1% O₂ at 4°C. The results of the tests are given below in Table 6. These results are plotted along with the results of Example 23 in Figure 3, which graphically plots % oxygen in headspace against time (days). The oxygen scavenging uptake capacity is based on the total weight of the 3-layer film.

**Table 6**

| Time (days) | Head-space O₂ (Vol%) | Head-space O₂ (Vol, ml) | Vol-O₂ Used (ml) | O₂ Uptake (ml/g) | O₂ Uptake Avg Rate (cc/m²·day) | Instant Rate (cc/m² day) | O₂ Capacity cc/m² |
|---|---|---|---|---|---|---|---|
| 0.0 | 1.09 | 3.27 | 0.00 | 0.00 | 0.00 | 0.00 | 0.00 |
| 0.8 | 0.74 | 2.18 | 1.03 | 2.20 | 63.00 | 63.00 | 51.63 |
| 1.8 | 0.50 | 1.45 | 1.73 | 3.68 | 48.52 | 36.18 | 86.43 |
| 4.8 | 0.17 | 0.48 | 2.67 | 5.8 | 27.73 | 15.51 | 133.45 |
| 6.1 | 0.12 | 0.34 | 2.81 | 5.98 | 23.17 | 5.60 | 140.45 |
| 6.9 | 0.10 | 0.28 | 2.86 | 6.09 | 20.84 | 3.40 | 143.20 |
| 7.9 | 0.08 | 0.22 | 2.92 | 6.21 | 18.46 | 2.62 | 145.90 |

### Example 26

### Headspace Analysis of O₂ Scavenging Capacity in Dowlex® 3010/EMCM/Dowlex® 3010 Films

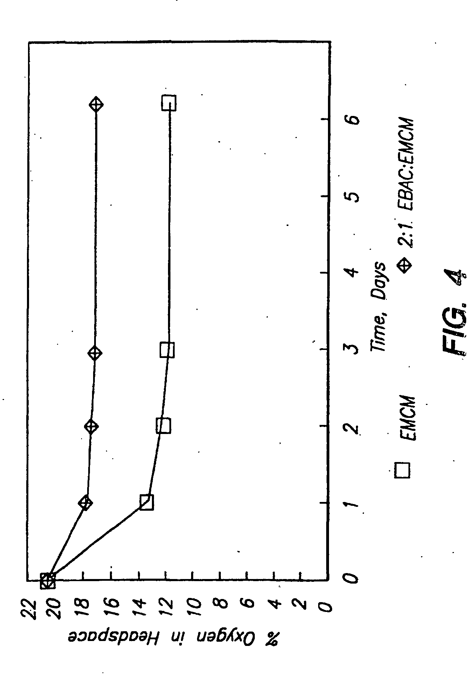

Oxygen scavenging analysis was performed using a Mocon HS750 with a headspace volume of 300 cc. The sample tested was a 0.47 g three-layer film with Dowlex® 3010 film for the two outside layers and steam stripped EMCM for the middle layer (50 ppm Irganox®1010)). The thickness of the layers was 0.5/1/0.5 +/- 0.1 Mil. The oxygen scavenging portion of the middle layer comprised 1000 ppm Cobalt Oleate salt, 1000 ppm BBP³ exposed for 1.6 minutes to 254 nm UV at 1 inch to receive 800 mJ/cm². The oxygen scavenging was tested with 300 cc air at room temperature. The O₂ uptake capacity is based on total weight of the 3-layer film. The results of the tests are given below in Table 7. These results are plotted along with the results of Example 26 in Figure 4, which graphically plots % oxygen in headspace against time (days).

**Table 7**

| Time (days) | Head-space O₂ (Vol%) | O₂ Vol, (ml) | Vol-O₂ Used (ml) | O₂ Uptake (ml/g) | O₂ Uptake Avg Rate (cc/m²·day) | Instant Rate (cc/m²·day) | O₂ Capacity (cc/m²) |
|---|---|---|---|---|---|---|---|
| 0.0 | 20.60 | 61.80 | 0.00 | 0.00 | 0.0 | 0.0 | 0.0 |
| 1.0 | 13.40 | 39.53 | 21.24 | 43.35 | 1058 | 1058 | 1062 |
| 2.0 | 12.20 | 35.38 | 24.72 | 50.45 | 616 | 173 | 1236 |
| 3.0 | 11.80 | 33.63 | 25.86 | 52.78 | 437 | 60 | 1293 |
| 6.2 | 11.80 | 33.04 | 25.86 | 52.78 | 207 | 0.0 | 1293 |

### Example 27

### Headspace Analysis of O₂ Scavenging Capacity in Dowlex® 3010/EBAC:EMCM/Dowlex® 3010 Films

Oxygen scavenging analysis was performed using a Mocon HS750 with a headspace volume of 300 cc. The sample tested was a 0.45 g three-layer film with Dowlex® 3010 film for the two outside layers and 2:1 EBAC:EMCM for the middle layer (50 ppm Irganox 1010)). The width of the layers was 0.5/1/0.5 +/- 0.1 Mil. The oxygen scavenging portion of the middle layer comprised 1000 ppm of Cobalt salts, 1000 ppm BBP³ exposed for 1.6 minutes to 254 nm UV at 1 inch to receive 800 mJ/cm². The oxygen scavenging was tested with 300 cc air at room temperature. The O₂ uptake capacity is based on total weight of the 3-layer film. The results of the tests are given below in Table 8. These results are plotted along with the results of Example 23 in Figure 4, which graphically plots % oxygen in headspace against time (days).

**Table 8**

| Time (days) | Head-space O₂ (Vol%) | Head-space O₂ Vol, (ml) | Vol-O₂ Used (ml) | O₂ Uptake (ml/g) | O₂ Uptake Avg Rate (cc/m²·day) | instant Rate (cc/m²·day) | O₂ Capacity (cc/m²) |
|---|---|---|---|---|---|---|---|
| 0.0 | 20.60 | 61.80 | 0.00 | 0.00 | 0.0 | 0.0 | 0.0 |
| 1.0 | 17.70 | 52.21 | 8.56 | 18.20 | 426 | 426 | 428 |
| 2.0 | 17.40 | 50.46 | 9.43 | 20.05 | 235 | 43 | 471 |
| 3.0 | 17.10 | 48.74 | 10.28 | 21.87 | 174 | 45 | 514 |
| 6.2 | 17.10 | 47.88 | 10.28 | 21.87 | 83 | 0.0 | 514 |

### Example 28

### Taste Preference Test

The organoleptic quality of a film containing EMCM as the scavenging resin in a multi-layer oxygen scavenging packaging structure was evaluated and compared with an SBS (styrene/butadiene/styrene)-based oxygen scavenging packaging structure. Films were triggered with 800 mJ/cm² of 254 nm UV. Packages containing ca. 200 ml of water were made and vacuum/gas flushed to obtain a gas composition of 1% O₂:99% N₂. Packages were stored at 40°F for seven days prior to taste testing. A forced preference double blind Triangle taste test was carried out on water extracts of the EMCM-based and SBS-based films.

Sensory results indicated that there was a significant difference (24 out of 28 respondents) between the EMCM-based and SBS-based structures. All 24 respondents who correctly identified the odd sample in the single test preferred the taste of the water packaged in EMCM over SBS. As shown in Table 9, Day 4 scavenging rates of the EMCM-based structures were lower than the SBS counterpart. On Day 4, both structures had significant oxidation and the obvious difference in flavor perception was attributed to the fewer and less objectionable by-products (fragments after oxidation of EMCM) of the EMCM oxygen scavenging system.
In a second forced preference triangle taste test, water samples in EMCM-based scavenging structures were tested against water samples packaged in a standard barrier laminate film (R660B manufactured by Cryovac Division of Sealed Air Corporation). The packaged water extract samples were submitted to a sensory panel for forced preference double blind taste testing. Samples were tested after 8 days of scavenging. A significant difference in the taste was found between the samples packaged in the EMCM and the control packages. Surprisingly, the preference was towards the EMCM structure. Open comments stated that there was no off-flavor (normally associated with the SBS-based oxygen scavenging films) in the EMCM samples and that EMCM was "pretty close in taste to the control." Headspace oxygen levels reached by the EMCM structure were ca. 0.2% (down from 1%) at Day 8. Scavenging results of the EMCM film used during this test are also listed in Table 9.

**Table 9**

| Oxygen Scavenging Packaging Films | | | | | |
|---|---|---|---|---|---|
| Film Sample | Average Rate (cc/m²·day) | Average Rate (cc/m²·day) | Induction Period (days) | Peak Instantaneous Rate avg. (c) (cc/m²·day) | Peak Instantaneous Rate (cc/m²·day) |
| | Mean | St. dev. | | Mean | St. dev. |
| SBS Film | 51.0^{a} | 7.8 | <1 | 88.4 (1) | 14.1 |
| 1^{st} Sensory test EMCM | 41.6^{a} | 5.3 | <1 | 68.6 (2) | 11.4 |
| 2^{nd} Sensory Test EMCM | 30.5^{b} | 5.9 | <1 | 83.6 (2-3) | 19.4 |

| | | | | | |
|---|---|---|---|---|---|
| ^{a}Rate at 4 days. | | | | | |
| ^{b}Rate at 8 days. ^{c}Time to reach peak rate in days. | | | | | |

### Example 29

### Taste Preference Test

Oxygen scavenging test films, 5 cm x 20 cm, were irradiated with 800 mJ/cm² ultraviolet (254 nm) and heat tacked to the top of the test pouches (one per pouch). The pouches (16 cm x 19 cm) were made from laminated barrier film specifically designed to be oxygen impermeable. 21 gram slices of freshly sliced turkey roll were put into sterilized 9 cm petri dishes (one per dish). The dishes were, in turn, placed into the barrier pouches (one per pouch). The pouches were heat sealed, filled with 300 cc 1% oxygen/99% nitrogen gas, and stored at 4°C for the duration of the test.

Two types of oxygen scavenging polymers were compared in the test against a control (barrier pouch alone, no oxygen scavenger). The oxygen scavenging films were each three layer (ABA) structures in which the outer, "A", layer was 0.5 mil thick LLDPE, and the middle, "B", layer was 1.0 mil thick oxygen scavenging polymer (compounded with 1000 ppm cobalt (as oleate) and 1000 ppm of a photoinitiator (BBP³). The headspace oxygen for the pouches is shown in Table 10. Both of the test oxygen scavenging films scavenged more oxygen than the packaged turkey itself.

**Table 10**

| Oxygen scavenging layer composition | Initial headspace oxygen, % | Headspace oxygen after 3 days @ 4°C, % |
|---|---|---|
| none | 1.02 | 0.72 |
| SBS | 1.00 | 0.08 |
| EMCM | 1.02 | 0.17 |

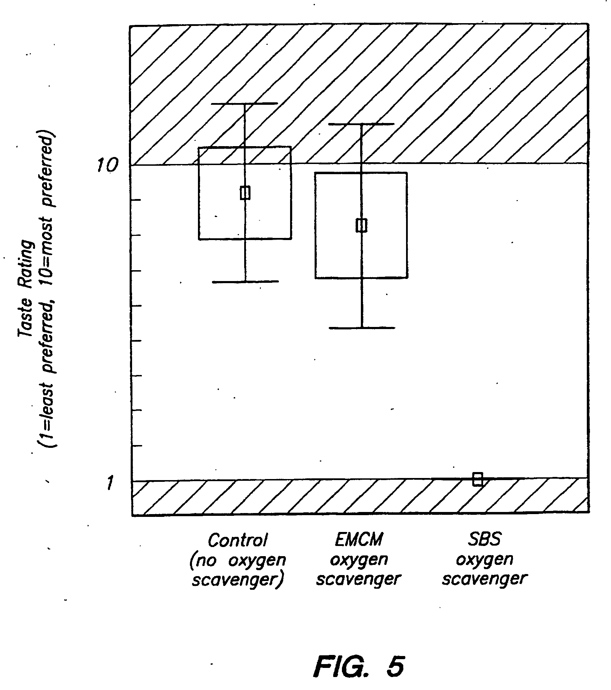

Taste panelists were instructed to force rank the samples according to their taste preference; assigning the least preferred sample a score of 1, and the most preferred sample a score of 10. As is shown in Figure 5, the panelists found the taste of the turkey packaged in control and the EMCM pouches statistically equivalent. The turkey packaged in the SBS pouch was found significantly less preferred than either the control or the EMCM.

### Example 30

Polymerization of EMCM via high pressure autoclave reactor proceeds in a steady-state continuous manner as follows. Ethylene is circulated at a rate of 10,000-14,000 lb/hr by a hypercompressor which compresses the ethylene to 16,500-22,500 psig. The compressed ethylene is injected into the autoclave reactor in various positions along the reactor wall associated with the zone divisions made by the reactor intemals. Simultaneously, acrylate of cyclohexene-1-methanol (CHAA) comonomer is injected into either the first zone or the first and second zones of the reactor at a rate sufficient to produce a copolymer containing from 5 to 40% CHAA, more typically 10%-25% by weight. The reaction is initiated by injection of a solution of di-tert butyl peroxypivalate in an aliphatic solvent which also functions as a chain transfer agent. The initiator is injected at a rate to provide approximately 10-20 ppm (wt) of initiator in the compressed ethylene. The locations of the CHAA injection are critical to the polymer being produced, as is shown in U.S. Patent No. 5,571,878 which details the effects of acrylate injection location on the polymerization of ethylene and an alkyl acrylate comonomer in a high pressure system.

The resultant polymer exits the reactor at a rate of 1000-2000 lb/hr in a multi-phase solution in ethylene to a high pressure separator. The pressure of the product is reduced adiabatically through a valve to 2,000 psig pressure and the unreacted ethylene and unreacted CHAA are recompressed to reactor pressure and reinjected into the reactor for further polymerization. Additional ethylene is added to the cycle via a primary compressor which compresses the ethylene from pipeline pressure to the suction pressure of the hypercompressor at a rate equal to the polymer production rate.
From the high pressure separator, the polymer is reduced in pressure to 4-10 psig for further removal of unreacted ethylene and unreacted comonomer. The polymer is fed into a melt pumping device (either an extruder or a gear pump) and is pelletized and transferred for packaging and shipment.

### Example 31

### Synthesis of 3-Cyclohexene-1,1-Dimethanol

One hundred (100) parts by weight of a formaldehyde aqueous solution (37 wt. % formaldehyde) was charged to a reactor. To this solution, cooled externally with an ice-water bath, was added 118 parts of an aqueous sodium hydroxide solution (25 wt. % sodium hydroxide) by several portions and the temperature of the reaction content was maintained at 20 to 30°C. This was followed by a slow addition of 54 parts of 1,2,5,6-tetrahydrobenzaldehyde at such a rate that the reaction content temperature did not exceed 55°C. After the exotherm dissipated, it was heated at 55°C for two hours with an external heating. The product precipitated out of the solution upon cooling and was collected by suction filtration. The wet-cake was washed thoroughly in the funnel with copious amount of water (5 X 100 parts). The crude product was allowed to dry in air overnight and purified by a recrystallization from toluene. The final product was an off-white colored crystalline material (yield 70%. m.p.: 92-93°C).

### Example 32

### Synthesis of 4-Cyclohexene-1,2-Dimethanol

A solution of one hundred (100) parts by weight of a 1,2,3,6-tetrahydrophthalic anhydride in 500 parts of dry tetrahydrofuran is slowly added to a stirring mixture of 28.75 parts of lithium aluminum hydride and 162 parts of tetrahydrofuran. After the addition is complete, the mixture is refluxed for 24 hours. It is then hydrolyzed by a slow addition of a saturated Rochelle salt solution until it turns white. The mixture is refluxed for an additional 10 hours, allowed to room temperature, and suction filtered. The solvent is removed by a distillation and the viscous liquid crude product is purified by a fractional distillation under vacuum (yield 82%. b.p.: 165-170°C at 12 mm).

### Example 33

### Synthesis of trans-Diethyl 1,2,3,6-Tetrahydrophthalate

One hundred (100) parts by weight of a butadiene is dissolved into a solution of 153 parts of diethyl fumarate in 650 parts of benzene at 0°C. The reaction solution is then heated in a bomb at 50°C for 24 hours. The solvent is removed by a distillation and the liquid crude product is purified by a fractional distillation under vacuum (b.p.: 102-105°C at 2 mm).

### Example 34

### Synthesis Of Polyester Containing 3-Cyclohexene-1,1-Dimethanol

Dimethyl terephthalate (81.9 g), ethylene glycol (43.7 g), 3-cyclohexene-1,1-dimethanol (20.0 g), and titanium butoxide (0.15 g) were charged into a 250 mL 4-necked flask equipped with a distillation column/partial condenser. The agitator and heat were turned on under nitrogen sparge (5 ml/min). When the temperature reached 140-170°C, the methanol collection was started. The temperature was slowly increased to 230°C. The reaction temperature was held at 230-240°C until greater than 95% of the methanol was collected during the course of 2-3 hours at 250-260°C under a full vacuum (0.5-2 mm Hg). The final polyester was discharged into an aluminum pan at about 200°C under nitrogen protection. NMR showed that the polyester contained about 22 wt. % 3-cyclohexene-1,1-dimethanol unit. DSC showed that the polyester was totally amorphous and had a glass transition temperature of 82°C.

### Example 35

### Synthesis Of Polyester Containing 3-Cyclohexene-1,1-Dimethanol

Dimethyl terephthalate (1165.2 g), ethylene glycol (621.0 g), 3-cyclohexene-1,1-dimethanol (284.4 g), zinc acetate dihydrate (2.08 g), and antimony oxide (0.62 g) are charged into a 3-liter reaction kettle equipped with a distillation column/partial condenser. The agitator and heat are turned on under nitrogen sparge (10-30 ml/min). When the temperature reaches 140-170°C, the methanol collection is started. After 1-3 hours at 160-190°C under nitrogen, the temperature is slowly increased to 230°C. The reaction temperature is held at 230-240°C until greater than 95% of the methanol is collected during the course of 2-6 hours. Triphenyl phosphite (1.0 g) is then added. The temperature is increased to 250-270°C, the nitrogen is stopped and vacuum is applied. The reaction mixture is held for 2-4 hours at 250-270°C under a full vacuum (0.5-2 mm Hg). The final polyester is discharged into an aluminum pan at about 200°C under nitrogen protection.

### Example 36

### Synthesis Of Polyester Containing 3-Cyclohexene-1,1-Dimethanol

Following the procedure described in Example 35, dimethyl terephthalate (776.8 g), 1,3-propanediol (304.4 g), 3-cycfohexene-1,1-dimethanol (284.4 g), and titanium butoxide (1.3 g) are charged into a 3-liter reaction kettle equipped with a distillation column/partial condenser. Triphenyl phosphite (0.8 g) is added before increasing the reaction temperature from 230-240°C to over 250°C and applying vacuum.

### Example 37

### Synthesis of Polyester Containing 1,2,3,6-Tetrahydrophthalic Acid

Ethylene glycol (248.1 g), 1,2,3,6-tetrahydrophthalic anhydride (456.6 g), hydrated monobutyltin oxide (0.7 g), and triphenyl phosphite (0.35 g) were charged into a 2-liter reaction flask equipped with a distillation column/partial condenser. The agitator and heat are turned on under nitrogen sparge (10-30 ml/min). When the temperature reaches 160-180°C, the water collection was started. After 1-3 hours at 160-190°C under nitrogen, the temperature was slowly increased to 230°C. The reaction temperature was held at 230-240°C until greater than 95% of the water was collected during the course of 2-6 hours. The temperature was increased to 250-270°C, the nitrogen was stopped and vacuum was applied. The reaction mixture was held for 2-4 hours at 250-270°C under a full vacuum (0.5-2 mm Hg). The final polyester was discharged into an aluminum pan at about 200°C under nitrogen protection. NMR confirmed that the polyester was a tetrahydrophthalic acid/ethylene glycol homopolyester. DSC showed that the polyester was totally amorphous and had a glass transition temperature of 27°C.

### Example 38

### Synthesis Of Polyester Containing 3-Cyclohexene-1,1-Dimethanol and 1,2,3,6-Tetrahydrophthalic Acid

Following the procedure described in Example 37, ethylene glycol (248.4 g), 1,2,3,6-tetrahydrophthalic anhydride (913.2 g), 3-cyclohexene-1,1-dimethanol (839.0 g), and hydrated monobutyltin oxide (1.0 g) are charged into a 3-liter reaction kettle equipped with a distillation column/partial condenser. Triphenyl phosphite (1.0 g) is added before increasing the reaction temperature from 230-240°C to over 250°C and applying vacuum.

### Example 39

### Synthesis Of Polyester Containing 3-Cyclohexene-1,1-Dimethanol and 1,2,3,6-Tetrahydrophthalic Acid

Following the procedure described in Example 37, 2-methyl-1,3-propanediol (360.4 g), 1,2,3,6-tetrahydrophthalic anhydride (913.2 g), 3-cyclohexene-1,1-dimethanol (839.0 g), and hydrated monobutyltin oxide (1.0 g) are charged into a 3-liter reaction kettle equipped with a distillation column/partial condenser. Triphenyl phosphite (1.0 g) is added before increasing the reaction temperature from 230-240°C to over 250°C and applying vacuum.

### Example 40

### Synthesis of Polyester Containing 1,2,3,6-Tetrahydrophthalic Acid

Following the procedure described in Example 37, 2 methyl-1,3-propanediol (720.8 g), 1,2,3,6-tetrahydrophthalic anhydride (913.2 g), and hydrated monobutyltin oxide (0.82 g) are charged into a 3-liter reaction kettle equipped with a distillation column/partial condenser. Triphenyl phosphite (0.82 g) is added before increasing the reaction temperature from 230-240°C to over 250°C and applying vacuum.

### Example 41

### Synthesis of Polyester Containing 1,2,3,6-Tetrahydrophthalic Acid

Following the procedure described in Example 37, 1,3-propanediol (608.8 g), 1,2,3,6-tetrahydrophthalic anhydride (913.2 g), and hydrated monobutyltin oxide (0.76 g) are charged into a 3-liter reaction kettle equipped with a distillation column/partial condenser. Triphenyl phosphite (0.76 g) is added before increasing the reaction temperature from 230-240°C to over 250°C and applying vacuum.

### Example 42

### Synthesis Of Polyester Containing 3-Cyclohexene-1,1-Dimethanol

Following the procedure described in Example 37, 2-methyl-1,3-propanediol (180.2 g), adipic acid (584.4 g), 3-cyclohexene-1,1-dimethanol (569.6 g), and hydrated monobutyltin oxide (0.67 g) are charged into a 3-liter reaction kettle equipped with a distillation column/partial condenser. Triphenyl phosphite (0.67 g) is added before increasing the reaction temperature from 230-240°C to over 250°C and applying vacuum.

### Example 43

### Synthesis Of Polyester Containing 3-Cyclohexene-1,1-Dimethanol

Terephthalic acid (664.4 g), 3-cyclohexene-1,1-dimethanol (284.8 g), 2-methyl-1,3-propandiol (360.4 g), and hydrated monobutyltin oxide (0.75 g) are charged into a 3-liter reaction kettle equipped with a distillation column/partial condenser. The agitator and heat are turned on under nitrogen sparge (10-30 ml/min). When the temperature reaches 200-220°C, the water collection is started. After 3-7 hours at 200-230°C under nitrogen; the temperature is increased to 240°C. The reaction temperature is held at 240°C until greater than 95% of the water is collected during the course of 2-6 hours. Triphenyl phosphite (0.75 g) is then added. The temperature is increased to 250-270°C, the nitrogen is stopped and vacuum is applied. The reaction mixture is held for 2-4 hours at 250-270°C under a full vacuum (0.5-2 mm Hg). The final polyester is discharged into an aluminum pan at about 200°C under nitrogen protection.

### Example 44

Polymer prepared in Example 34 was solvent cast into a 3.5 mil film containing 2 wt. % cobalt in the form of cobalt oleate and 2 wt. % of anthraquinone as a long wavelength photoinitiator. A 5 x 20 cm² size film was cut and irradiated under a 450 watts medium pressure mercury UV lamp for 2 minutes prior to sealing into a foil pouch filled with 300 cc of 1% oxygen. The headspace analysis after 1 day at room temperature showed a reduction in oxygen concentration to 0.91%.

### Example 45

Polymer prepared in Example 37 was solvent cast into 2 mil film containing 0.2 wt.% cobalt in the form of cobalt oleate and 1 wt.% of anthraquinone. Irradiated under a 450 watts medium pressure mercury UV lamp for 2 minutes prior to sealing into a foil pouch filled with 300 cc of 1% oxygen. The headspace analysis after 4 days at room temperature showed a reduction in oxygen concentration to 0.83%.

Also included within this example and the scope of the invention are compositions comprising various combinations of these substances and materials.

Aspects of the present invention have been described by way of example only and it should be appreciated that modifications and additions may be made thereto without departing from the scope thereof.

## Claims

1. A composition suitable for scavenging oxygen comprising a mixture of:
(a) a polymer or oligomer comprising a polymeric backbone, cyclic olefinic pendant groups, and linking groups linking the olefinic pendant groups to the polymeric backbone, wherein the polymeric backbone, linking groups and cyclic olefin pendant groups comprise repeating units, each unit having a structure (III) as follows: 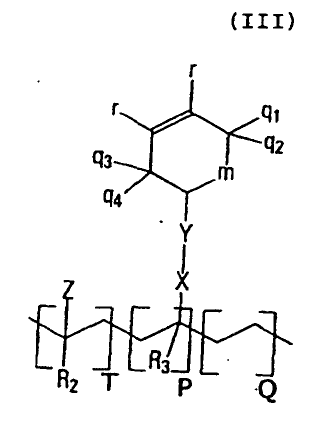 wherein P+T+Q is 100 mol % of the total composition; P is greater than 0 mol % of the total composition; Z is selected from the group consisting of an aryl group; -(C=O)OR₁; -O(C=O)R₁; and an alkyl aryl group of the structure: 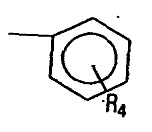 wherein R₄ is selected from the group consisting of -CH₃, -C₂H₅, and -H; R₁ is selected from the group consisting of -H, -CH₃, -C₂H₅, -C₃H₇ and -C₄H₉; R₂ and R₃ are selected from the group consisting of -H and -CH₃; X is selected from the group consisting of -O-, -NH-, -(C=O)O-, -(C=O)NH-, -(C=O)S-, -O(C=O)- and -(CHR)_{ℓ}; ℓ is an integer in the range from 1 to 6; Y is -(CHR)ₙ- or, when X is -(C=O)O-, Y is -(CHR)ₙ- or CHOH-CH₂-O-, where n is an integer in the range from 0 to 12, R being selected from the group consisting of -H, -CH₃ and -C₂H₅; where q₁, q₂, q₃, q₄ and r are selected from the group consisting of -H, -CH₃, and -C₂H₅; and where m is -(CH₂)ₙ- and where n is an integer in the range from 0 to 4; and wherein when r is -H, at least one of q₁, q₂, q₃, q₄ is -H;
(b) a transition metal catalyst.

2. The composition of claim 1 wherein the polymer or oligomer is blended with a carrier resin.

3. The composition according to claim 2 wherein said mixture further contains at least one photoinitiator.

4. The composition of claim 1 wherein the linkage -Y-X- comprises an ester, ether, amide, imide, urethane or acetal group.

5. The composition or claim 1, wherein the transition metal is selected from manganese, cobalt, nickel, copper, rhodium, or ruthenium.

6. The composition of claim 5 further comprising a trigger enhancing component which makes the scavenger susceptible to triggering from an external event.

7. The composition of claim 6, wherein the trigger enhancing component is selected from the group consisting of benzophenone or substituted benzophenone.

8. The composition of claim 6, wherein the external event is irradiation by electromagnetic radiation.

9. The composition of claim 6, wherein the external event is irradiation by UV light.

10. The composition of claim 5, wherein the material is blended with a carrier resin.

11. The composition of claim 5, wherein the oxygen scavenger composition is in the form of a plastics resin.

12. The composition of claim 11, wherein the plastics resin comprises a polyester resin.

13. The composition of claim 11, wherein the plastics resin comprises a resin suitable for use in the manufacture of plastic films.

14. The composition of claim 5 wherein the composition is prepared from the reaction of a tetrahydrophthalic anhydride with at least one of:
i) a diol;
ii) a hydroxy compound; or
iii) a polyhydroxy compound.

15. The composition of claim 14 wherein the composition is prepared by heating tetrahydrophthalic anhydride with at least one of:
i) a diol;
ii) a hydroxy compound; or
iii) a polyhydroxy compound,
in a solvent

16. The oxygen scavenger composition of claim 14 wherein the anhydride comprises 1,2,3,6 tetrahydrophthalic anhydride, or tetrahydrophthalic anhydride monomer derivable from butadiene.

17. The composition of claim 14 wherein the composition is prepared by a reactive extrusion process.

18. The composition of claim 5 prepared from the reaction of a tetrahydrobenzyl alcohol with one or more compounds having one or more of the following functionalities:
i) carboxylic acid;
ii) acid halide;
iii) ester;
iv) anhydride; and
v) isocyanate.

19. The oxygen scavenger composition of claim 18 wherein the composition is prepared by a reactive extrusion process.

20. The oxygen scavenger composition of claim 18 wherein the composition is prepared from the reaction of a tetrahydrobenzyl alcohol with an ester by a transesterification process.

21. The oxygen scavenger composition of claim 18 wherein the compound with the anhydride functionality comprises styrene maleic anhydride copolymer.

22. The oxygen scavenger composition of claim 18 wherein the compound with the isocyanate functionality comprises polyfunctional isocyanate.

23. The oxygen scavenger composition of claim 5 comprising a polyester, wherein the composition is prepared from cyclohexene dimethanol.

24. The oxygen scavenger composition of claim 5, wherein the composition is prepared from tetrahydrobenzoic acid and a hydroxyl functional material.

25. The oxygen scavenger composition of claim 5, wherein the composition is prepared from tetrahydrobenzoic acid and a hydroxyl functional material.

26. The oxygen scavenger composition of claim 5, wherein the composition is prepared from tetrahydrobenzaldehyde and a hydroxyl functional material.

27. The oxygen scavenger composition of claim 5 comprising a polymer or oligomer having at least one cyclohexene group, wherein some carbons of the cyclohexene group form part of other ring structures within the polymer or oligomer.

28. The oxygen scavenger composition of claim 5 comprising a pendant cyclic alkene group, the composition prepared by a method wherein some carbons of the cyclohexene group form part of the skeleton of the polymer or oligomer.

29. The oxygen scavenger composition of claim 5, comprising a pendant cyclohexene group, wherein the composition is prepared by a method including a Diels Alder addition reaction.

30. The oxygen scavenger composition of claim 5 wherein the composition is incorporated in a sachet

31. A composition according to claim 1, wherein the polymeric backbone is ethylenic and the linking groups are selected from the group consisting of:
-O-(CHR)ₙ-; -(C=O)-O-(CHR)ₙ-; -NH-(CHR)ₙ-; -O-(C=O)-(CHR)ₙ-;
-(C=O)-NH-(-CHR)ₙ-; and -(C=O)-O-CHOH-CH₂-O-;
wherein R is hydrogen or an alkyl group selected from the group consisting of methyl, ethyl, propyl and butyl groups and where n is an integer in the range from 1 to 12.

32. The composition of claim 1, wherein the cyclic olefinic pendent groups have the structure (II): 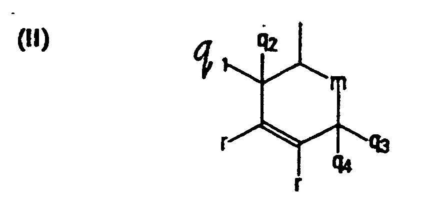 where q₁, q₂, q₃, q₄, and r are selected from the group consisting of -H, -CH₃, and -C₂H₅; and where m is -(CH₂)ₙ- wherein n is an integer in the range from 0 to 4; and wherein, when r is -H, at least one of q₁, q₂, q₃ and q₄ is -H.

33. The composition of claim 1, wherein the cyclic olefinic pendent groups are grafted onto the linking groups of the polymeric backbone by an esterification, transesterification, amidation or transamidation reaction.

34. The composition of claim 33 wherein the esterification, transesterification, amidation or transamidation reaction is a solution reaction or a reactive extrusion.

35. The composition of claim 33, wherein the esterification, transesterification, amidation or transamidation reaction is catalyzed by a catalyst selected from the group consisting of strong non-oxidizing acids, tertiary amines, Group I alkoxides, Group IVB alkoxides, and Group IVA organometallics.

36. The composition of claim 35, wherein the catalyst is selected from a group consisting of toluene sulfonic acid, sodium methoxide, tetrabutyl titanate, tetraisopropyl titanate, tetra-n-propyl-titanate, tetraethyl titanate, 2-hydroxy-pyridine and dibutyltin dilaurate.

37. The composition of claim 1, wherein the cyclic olefinic pendent groups are selected from the group consisting of cyclohexene-4-methylene radical, 1-methyl cyclohexene-4-methylene radical, 2-methyl cyclohexene-4-methylene radical, 5-methyl cyclohexene-4-methylene radical, 1,2-dimethyl cyclohexene-4-methylene radical, 1,5-dimethyl cyclohexene-4-methylene radical, 2,5-dimethyl cyclohexene-4-methylene radical, 1,2,5-trimethyl cyclohexene-4-methylene radical, cyclohexene-4-ethylene radical, 1-methyl cyclohexene-4-ethylene radical, 2-methyl cyclohexene-4-ethylene radical, 5-methyl cyclohexene-4-ethylene radical, 1,2-dimethyl cyclohexene-4-ethylene radical, 1,5-dimethyl cyclohexene-4-ethylene radical, 2,5-dimethyl cyclohexene-4 ethylene radical, 1,2,5-trimethyl cyclohexene-4-ethylene radical, cyclohexene-4-propylene radical, 1-methyl cyclohexene-4-propylene radical, 2-methyl cyclohexene-4-propylene radical, 5-methyl cyclohexene-4-propylene radical, 1,2-dimethyl cyclohexene-4-propylene radical, 9,5-dimethyl cyclohexene-4-propylene radical, 2,5-dimethyl cyclohexene-4-propylene radical, 1,2.5-trimethyl cyclohexene-4-propylene radical, cyclopentene-4-methylene radical, 1-methyl cyclopentene-4-methylene radical, 3-methyl cyclopentene-4-methylene radical, 1,2-dimethyl cyclopentene-4-methylene radical, 3,5-dimethyl cyclopentene-4-methylene radical, 1,3-dimethyl cyclopentene-4-methylene radical, 2,3-dimethyl cyclopentene-4-methylene radical, 1,2,3-trimethyl cyclopentene-4-methylene radical, 1.2.3,5-tetramethyl cyclopentene-4-methylene radical, cyclopentene-4-ethylene radical, 1-methyl cyclopentene-4-ethylene radical, 3-methyl cyclopentene-4-ethylene radical, 1,2-dimethyl cyclopentene-4-ethylene radical, 3,5-dimethyl cyclopentene-4-ethylene radical, 1,3-dimethyl cyclopentene-4-ethylene radical, 2,3-dimethyl cyclopentene-4-ethylene radical, 1,2,3-trimethyl cyclopentene-4-ethylene radical, 1,2,3,5-tetramethyl cyclopentene-4-ethylene radical, cyclopentene-4-propylene radical, 1-methyl cyclopentene-4-propylene radical, 3-methyl cyclopentene-4-propylene radical, 1,2-dimethyl cyclopentene-4-propylene radical, 3,5-dimethyl cyclopentene-4-propylene radical, 1,3-dimethyl cyclopentene-4-propylene radical, 2,3-dimethyl cyclopentene-4-propylene radical, 1,2,3-trimethyl cyclopentene-4-propylene radical, and 1,2,3,5-tetramethyl cyclopentene-4-propylene radical.

38. The composition of claim 1, wherein the composition is an ethylene/methyl acrylate/cyclohexenyl methyl acrylate terpolymer, a cyclohexenyl methyl acrylate/ethylene copolymer, a cyclohexenyl methyl methacrylate/styrene copolymer, a cyclohexenyl methyl acrylate homopolymer or a methyl acrylate/cyclohexenyl methyl acrylate copolymer.

39. The composition of claim 1, wherein odor and taste characteristics of products packaged with material comprised of the composition are not adulterated as a result of oxidation of the composition.

40. The composition of claim 1, wherein there is no significant fragmentation of the olefinic pendent groups and linking groups from the polymeric backbone as a result of oxidation of the composition.

41. The composition of claim 1, wherein the transition metal catalyst is a metal salt.

42. The composition of claim 41, wherein the metal in the metal salt is cobalt.

43. The composition according to claim 41,
wherein the metal salt is selected from the group consisting of cobalt neodecanoate, cobalt 2-ethylhexanoate, cobalt oleate and cobalt stearate.

44. The composition of claim 1, further comprising at least one triggering material to enhance initiation of oxygen scavenging.

45. The composition of claim 44, wherein the triggering material is a photo initiator.

46. An article of manufacture suitable as a container, the container inhibiting oxidation of contents of the container by removing oxygen from the container and by inhibiting ingress of oxygen into the container from outside the container, wherein the article comprises an oxygen scavenging composition according to claim 1.

47. The article of manufacture of claim 46, wherein odor and taste characteristics of products packaged with material comprised of the composition are not adulterated as a result of oxidation of the composition.

48. The article of manufacture of claim 46, wherein there is no significant fragmentation of the olefinic pendent groups and linking groups from the polymeric backbone as a result of oxidation of the composition.

49. The article of manufacture of claim 46 wherein the article is a package.

50. The article of manufacture of claim 49, wherein the package comprises a flexible film having a thickness of at most 10 mil or a flexible sheet having a thickness of at least 10 mil.

51. The article of manufacture of claim 49, wherein the oxygen scavenging system of the package comprises at least one additional layer selected from among oxygen barrier layers, polymeric selective layers, and heat seal layers.

52. The article of manufacture of claim 49, wherein the article is a package with a food product located within the package.

53. The article of manufacture of claim 49, wherein the article is a package for packaging a cosmetic, chemical, electronic device, pesticide or a pharmaceutical composition.

54. A multi-layer film comprising the article of manufacture according to claim 46, and at least one additional functional layer.

55. The multi-layer film according to claim 54, wherein at least one additional layer is selected from among oxygen barrier layers, polymeric selective barrier layers, structural layers and heat seal layers.

56. The multi-layer film according to claim 54, wherein the at least one additional layer is an oxygen barrier layer.

57. The multi-layer film according to claim 56, further comprising at least one polymeric selective barrier layer.

58. The multi-layer film according to claim 56, further comprising at least one heat seal layer.

59. The multi-layer film according to claim 56, further comprising at least one structural layer.

60. The article of claim 46, wherein the article is a rigid container, sealing gasket, patch, container closure device, bottle cap, bottle cap insert or molded or thermoformed shape.

61. The article of claim 60, wherein the molded or thermoformed shape is a bottle or tray.

62. The oxygen scavenging composition according to any one of claims 39-42 which is in the form of a layer.

63. A layer according to claim 62, wherein said layer in addition comprises polymeric diluent.

64. A layer according to claim 63, wherein said diluent is a thermoplastic polymer.

65. A layer according to claim 62, wherein said layer is adjacent to one or more additional layers.

66. A layer according to claim 65, wherein at least one additional layer is an oxygen barrier.

67. A layer according to claim 66, wherein said oxygen barrier comprises a member of the group consisting of poly(ethylene-vinyl alcohol), polyacrylonitrile, poly(vinyl chloride), polyamides, poly(vinylidene dichloride), poly(ethylene terephthalate), silica, metal foil and metalized polymeric films.

68. A layer according to claim 65, wherein one or more of said additional layer or layers is coextruded with said layer.

69. A layer according to claim 65, wherein one or more of said additional layer or layers is laminated onto said layer.

70. A layer according to claim 65, wherein one or more of said additional layer or layers is coated onto said layer.

71. A layer according to claim 65, wherein said layer is flexible.

72. A layer according to claim65, wherein said layer is transparent.

73. An article for packaging wherein the article comprises a layer according to claim 62.

74. A process of making a polymer material by a process selected from the group consisting of esterification, transesterification, amidation, transamidation and direct polymerisation, wherein the polymer material comprises a polymeric backbone, cyclic olefinic pendant groups, and linking groups linking the backbone with the pendant groups, wherein the polymeric backbone, linking groups and cyclic pendant groups comprise repeating units, each unit having a structure (III) as follows: 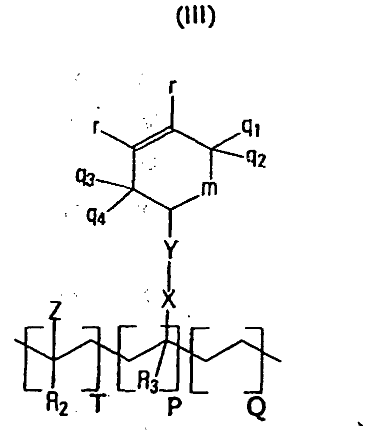 wherein P+T+Q is 100 mol % of the total composition; P is greater than 0 mol % of the total composition; Z is selected from the group consisting of an aryl group; -(C=O)OR₁;-O(C=O)R₁; and an alkyl aryl group of the structure: 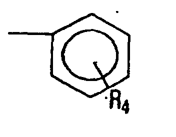 wherein R₄ is selected from the group consisting of -CH₃, -C₂H₅, and -H; R₁ is selected from the group consisting of -H, -CH₃, -C₂H₅, -C₃H₇, and -C₄H₉; R₂ and R₃ are selected from the group consisting of -H and -CH₃; X is selected from the group consisting of -O-, -NH-, -(C=O)O-, -(C=O)NH-, -(C=O)S-, -O(C=O)- and -(CHR)_{ℓ}; ℓ is an integer in the range from 1 to 6; Y is -(CHR)ₙ- or, when X is -(C=O)O-, Y is -(CHR)ₙ- or CHOH-CH₂-O-, where n is an integer in the range from 0 to 12, R being selected from the group consisting of -H, -CH₃ and -C₂H₅; where q₁, q₂, q₃, q₄ and r are selected from the group consisting of -H, -CH₃, and -C₂H₅; and where m is -(CH₂)ₙ- and where n is an integer in the range from 0 to 4; and wherein when r is -H, at least one of q₁, q₂, q₃, q₄ is -H.

75. The process of claim 74, wherein making the polymer material comprises the steps of:
a) selecting polymers from the group consisting of styrene/maleic anhydride, ethylene/maleic anhydride, ethylene/acrylic acid, ethylene/methacrylic acid, acrylic acid, methacrylic acid, styrene/methacrylic acid, ethylenelmethyl acrylate, ethylene/ethyl acrylate, ethylene/butyl acrylate, methyl methacrylate, methyl acrylate, and styrene/methyl methacrylate to form a mixture and combining the polymers with a esterifying/transesterifying compound selected from the group consisting of cyclohexene-4-methanol, 1-methyl cyclohexene-4-methanol, 2-methyl cyclohexene-4-methanol, 5-methyl cyclohexene-4-methanol, 1.2-dimettiyl cyclohexene-4-methanol, 1,5-dimethyl cyclohexene-4-methanol, 2.5-dimethyl cyclohexene-4-methanol, 1,2,5-trimethyl cyclohexene-4-methanol, cyclohexene-4-ethanol, 1-methyl cydohexene-4-ethanol, 2-methyl cyclohexene-4-ethanol, 5-methyl cyclohexene-4-ethanol, 1,2-dimethyl cyclohexene-4-ethanol, 1,5-dimethyl cyclohexene-4-ethanol, 2,5-dimethyl cyclohexene-4-ethanol, 1,2,5-trimethyl cyclohexene-4-ethanol, cyclohexene-4-propanol, 1-methyl cyclohexene-4-propanol, 2-methyl cyclohexene-4-propanol, 5-methyl cyclohexene-4-propanol, 1,2-dimethyl cyclohexene-4-propanol, 1,5-dimethyl cyclohexene-4-propanol, 2,5-dimethyl cyclohexene-4-propanol, 1,2,5-trimethyl cyclohexene-4-propanol, cyclopentene-4-methanol, 1-methyl cyclopentene-4-methanol, 3-methyl cyclopentene-4-methanol, 1,2-dimethyl cyclopentene-4-methanol, 3,5-dimethyl cyclopentene-4-methanol, 1,3-dimethyl cyclopentene-4-methanol, 2,3-dimethyl cyclopentene-4-methanol, 1,2,3-trimethyl cyclopentene-4-methanol, 1,2,3,5-tetramethyl cyclopentene-4-methanol, cyclopentene-4-ethanol, 1-methyl cyclopentene-4-ethanol, 3-methyl cyclopentene-4-ethanol, 1,2-dimethyl cyclopentene-4-ethanol, 3,5-dimethyl cyclopentene-4-ethanol, 1,3-dimethyl cyclopentene-4-ethanol, 2,3-dimethyl cyclopentene-4-ethanol, 1,2,3-trimethyl cydopentene-4-ethanol, 1,2,3,5-tetramethyl cyclopentene-4-ethanol, cyclopentene-4-propanol, 1-methyl cyclopentene-4-propanol, 3-methyl cyclopentene-4-propanol, 1,2-dimethyl cyclopentene-4-propanol, 3,5-dimethyl cyclopentene-4-propanol, 1,3-dimethyl cyclopentene-4-propanol, 2,3-dimethyl cyclopentene-4-propanol, 1,2,3-trimethyl cyclopentene-4-propanol, and 1,2,3,5-tetramethyl cyclopentene-4-propanol;
b) heating the polymers and esterifying/transesterifying compounds selected in (a) to form a polymer melt;
c) processing the melt in an extruder under esterification/transesterification conditions with esterification/transesterification catalysts and antioxidants protecting the melt from oxidation during extrusion, so that the polymer melt undergoes esterification of polymeric anhydrides with cyclic olefin pendent groups, esterification of polymeric acids with cyclic olefin pendent groups or exchange of alkyl groups of polymeric esters with cyclic olefin pendent groups; and
d) removing volatile organic products and by-products from the melt.

76. The process of claim 74, wherein making the polymer material comprises the steps of:
a) selecting polymers from the group consisting of styrene/maleic anhydride, ethylene/maleic anhydride, ethylene/acrylic acid, ethylene/methacrylic acid, acrylic acid, methacrylic acid, styrene/methacrylic acid, ethylene/methyl acrylate, ethylene/ethyl acrylate, ethylene/butyl acrylate, methyl methacrylate, methyl acrylate, and styrene/methyl methacrylate to form a mixture and combining the polymers with a amidizing/transamidizing compound selected from the group consisting of cyclohexene-4-methyl amine, 1-methyl cyclohexene-4-methyl amine, 2-methyl cyclohexene-4-methyl amine, 5-methyl cyclohexene-4-methyl amine, 1,2-dimethyl cyclohexene-4-methyl amine, 1,5-dimethyl cyclohexene-4-methyl amine, 2,5-dimethyl cyclohexene-4-methyl amine, 1,2,5-trimethyl cyclohexene-4-methyl amine, cyclohexene-4-ethyl amine, 1-methyl cyclohexene-4-ethyl amine, 2-methyl cyclohexene-4-ethyl amine, 5-methyl cyclohexene-4-ethyl amine, 1,2-dimethyl cyclohexene-4-ethyl amine, 1,5-dimethyl cyclohexene-4-ethyl amine, 2,5-dimethyl cyclohexene-4-ethyl amine, 1,2,5-trimethyl cydohexene-4-ethyl amine, cyclohexene-4-propyl amine, 1-methyl cyclohexene-4-propyl amine, 2-methyl cyclohexene-4-propyl amine, 5-methyl cyclohexene-4-propyl amine, 1,2-dimethyl cyclohexene-4-propyl amine, 1,5-dimethyl cyclohexene-4-propyl amine, 2,5-dimethyl cyclohexene-4-propyl amine, 1,2,5-trimethyl cyclohexene-4-propyl amine, cyclopentene-4-methyl amine, 1-methyl cyclopentene-4-methyl amine, 3-methyl cyclopentene-4-methyl amine, 1,2-dimethyl cyclopentene-4-methyl amine, 3,5-dimethyl cyclopentene-4-methyl amine, 1,3-dimethyl cyclopentene-4-methyl amine, 2,3-dimethyl cyclopentene-4-methyl amine, 1,2,3-trimethyl cyclopentene-4-methyl amine, 1,2,3,5-tetramethyl cyclopentene-4-methyl amine, cyclopentene-4-ethyl amine, 1-methyl cyclopentene-4-ethyl amine, 3-methyl cyclopentene-4-ethyl amine, 1,2-dimethyl cyclopentene-4-ethyl amine, 3,5-dimethyl cyclopentene-4-ethyl amine, 1,3-dimethyl cyclopentene-4-ethyl amine, 2,3-dimethyl cyclopentene-4-ethyl amine, 1,2,3-trimethyl cyclopentene-4-ethyl amine, 1,2,3,5-tetramethyl cyclopentene-4-ethyl amine, cyclopentene-4-propyl amine, 1-methyl cyclopentene-4-propyl amine, 3-methyl cyclopentene-4-propyl amine, 1,2-dimethyl cyclopentene-4-propyl amine, 3,5-dimethyl cyclopentene-4-propyl amine, 1,3-dimethyl cyclopentene-4-propyl amine, 2,3-dimethyl cyclopentene-4-propyl amine, 1,2,3-trimethyl cyclopentene-4-propyl amine, and 1,2,3,5-tetramethyl cyclopentene-4-propyl amine;
b) heating the polymers and amidizing/transamidizing compounds selected in (a) to form a polymer melt;
c) processing the melt in an extruder under amidation/transamidation conditions with amidation/transamidation catalysts and antioxidants protecting the melt from oxidation during extrusion, so that the polymer melt undergoes amidation of polymeric anhydrides with cyclic olefin pendent groups, amidation of polymeric acids with cyclic olefin pendent groups or exchange of alkyl groups of polymeric esters with cyclic olefin pendent groups; and
d) removing volatile organic products and by-products from the melt.

77. The process of claim 74, wherein the making of the polymer material comprises the steps of:
(a) adding to an autoclave, ethylene and a vinyl monomer comprising a pendent cyclohexene;
(b) stirring the ethylene and the vinyl monomer in the autoclave to achieve a mixture;
(c) adding a polymerization initiator before, during or after the stirring step;
(d) polymerizing the mixture to achieve a polymer; and
(e) isolating and purifying the polymer.

78. The process of claim 77, wherein in step (a) an alpha-olefin is added to the autoclave along with the ethylene and the vinyl monomer and in step (b) the alpha-olefin is stirred with the ethylene and the vinyl monomer to achieve the mixture.

79. The process of claim 75, wherein the polymeric backbone is ethylenic and the linking groups are selected from the group consisting of:
-O-(CHR)ₙ-; -(C=O)-O-(CHR)ₙ-; -NH-(CHR)ₙ-;
-O-(C=O)-(CHR)ₙ-; -(C=O)-NH-(-CHR)ₙ-;
and
-(C=O)-O-CHOH-CH₂-O-;
where R is hydrogen or an alkyl group selected from the group consisting of methyl, ethyl, propyl and butyl groups and where n is an integer in the range from 1 to 12.

80. The process of claim 76, wherein the polymeric backbone is ethylenic backbone and the linking group is:
-(C=O)-NH-(CHR)ₙ
where R is hydrogen or an alkyl group selected from the group consisting of methyl, ethyl, propyl and butyl groups and where n is an integer in the range from 1 to 12.

81. The process of claim 74, wherein the material is an oxygen scavenging composition further comprising a transition metal catalyst.

82. The process of claim 81, wherein the transition metal catalyst is a metal salt.

83. The process of claim 82, wherein the metal in the metal salt is cobalt.

84. The process according to claim 82, wherein the metal salt is selected from the group consisting of cobalt neodecanoate, cobalt 2-ethylhexanoate, cobalt oleate and cobalt stearate.

85. The process of claim 81, wherein the oxygen scavenging composition further comprises at least one triggering material to enhance initiation of oxygen scavenging.

86. The process of claim 85, wherein the triggering material is a photoinitiator.

87. The process of claim 74, wherein the cyclic olefinic pendent groups have the structure (II): 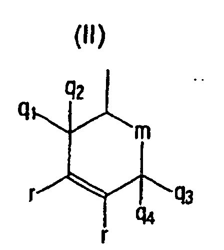 where q₁, q₂, q₃, q₄, and r are selected from the group consisting of -H, -CH₃, and -C₂H₅; and where m is -(CH₂)ₙ- and where n is an integer in the range of from 0 to 4; and wherein when r is -H, at least one of q₁, q₂, q₃ and q₄ is -H.

88. The process of claim 74, wherein the functional groups with attached cyclic olefinic pendent groups are grafted onto the linking backbone by a esterification, transesterification, amidation or transamidation reaction.

89. The process of claim 74, wherein the reaction is a solution reaction or a reactive extrusion.

90. The process of claim 74, wherein the esterification, transesterification, amidation or transamidation reaction is catalyzed by a catalyst selected from the group consisting of strong non-oxidizing acids, tertiary amines, Group I alkoxides, Group IVB alkoxides, Group IVA organometallics.

91. The process of claim 90, wherein the catalyst is selected from the group consisting of toluene sulfonic acid, sodium methoxide, tetrabutyl titanate, tetraisopropyl titanate, tetra-n-propyl-titanate, tetraethyl titanate, 2-hydroxy-pyridine and dibutyltin dilaurate.

92. The process of claim 74, wherein the cyclic olefinic pendent groups are selected from the group consisting of cyclohexene-4-methylene radical, 1-methyl cyclohexene-4-methylene radical, 2-methyl cyclohexene-4-methylene radical, 5-methyl cyclohexene-4-methylene radical. 1,2-dimethyl cyclohexene-4-methylene radical, 1,5-dimethyl cyclohexene-4-methylene radical, 2,5-dimethyl cyclohexene-4-methylene radical, 1,2,5-trimethyl cyclohexene-4-methylene radical, cyclohexene-4-ethylene radical, 1-methyl cyclohexene-4-ethylene radical, 2-methyl cyclohexene-4-ethylene radical, 5-methyl cyclohexene-4-ethylene radical, 1,2-dimethyl cyclohexene-4-ethylene radical, 1,5-dimethyl cyclohexene-4-ethylene radical, 2,5-dimethyl cyclohexene-4-ethylene radical, 1,2,5-trimethyl cyclohexene-4-ethylene radical, cyclohexene-4-propylene radical, 1-methyl cyclohexene-4-propylene radical, 2-methyl cyclohexene-4-propylene radical, 5-methyl cyclohexene-4-propylene radical, 1,2-dimethyl cyclohexene-4-propylene radical, 1,5-dimethyl cyclohexene-4-propylene radical, 2,5-dimethyl cyclohexene-4-propylene radical, 1,2,5-trimethyl cyclohexene-4-propylene radical, cyclopentene-4-methylene radical, 1-methyl cyclopentene-4-methylene radical, 3-methyl cyclopentene-4-methylene radical, 1,2-dimethyl cyclopentene-4-methylene radical, 3,5-dimethyl cyclopentene-4-methylene radical, 1,3-dimethyl cyclopentene-4-methylene radical, 2,3-dimethyl cyclopentene-4-methylene radical, 1,2,3-trimethyl cyclopentene-4-methylene radical, 1,2,3,5-tetramethyl cyclopentene-4-methylene radical, cyclopentene-4-ethylene radical, 1-methyl cyclopentene-4-ethylene radical, 3-methyl cyclopentene-4-ethylene radical, 1,2-dimethyl cyclopentene-4-ethylene radical, 3,5-dimethyl cyclopentene-4-ethylene radical, 1,3-dimethyl cyclopentene-4-ethylene radical, 2,3-dimethyl cyclopentene-4-ethylene radical, 1,2,3-trimethyl cyclopentene-4-ethylene radical, 1,2,3,5-tetramethyl cyctopentene-4-ethyiene radical, cyclopentene-4-propylene radical, 1-methyl cyclopentene-4-propylene radical, 3-methyl cyclopentene-4-propylene radical, 1.2-dimethyl cyclopentene-4-propylene radical, 3,5-dimethyl cyclopentene-4-propylene radical, 1,3-dimethyl cyclopentene-4-propylene radical, 2,3-dimethyl cyclopentene-4-propylene radical, 1,2,3-trimethyl cyclopentene-4-propylene radical, and 1,2,3,5-tetramethyl cyclopentene-4-propylene radical.

93. The process of claim 74, wherein the composition is a ethylene/methyl acrylate/cyclohexenyl methyl acrylate terpolymer, a cyclohexenyl methyl acrylate/ethylene copolymer, a cyclohexenyl methyl methacrylate/styrene copolymer, a cyclohexenyl methyl acrylate homopolymer or a methyl acrylate/cyclohexenyl methyl acrylate copolymer.

94. The article of manufacture of claim 46, wherein the article is a multilayer rigid container for food or beverage packaging comprising at least an inner layer, an outer layer and a core layer between the inner layer and the outer layer, wherein the inner and outer layers are comprised of aromatic polyesters or copolyesters, and wherein the core layer is comprised of the oxygen scavenging composition.

95. The article of manufacture of claim 94, wherein the inner layer and the outer layer comprise aromatic polyesters or copolyesters selected from the group consisting of polyethylene terephthalate, polyethylene naphthalate, polypropylene terephthalate, polybutylene terephthalate, polyethylene isophthalate, polycyclohexanedimethanol terephthalate, polybutylene naphthalate, polycyclohexanedimethanol naphthalate, and copolymers and blends thereof.

96. The article of manufacture of claim 94, wherein the polymer backbone is ethylenic and the cyclic olefinic pendant groups are linked to the polymer backbone by linking groups selected from the group consisting of:
-O-(CHR)ₙ-;-(C=O)-O-(CHR)ₙ-; -NH-(CHR)ₙ-; -O-(C=O)-(CHR)ₙ-; -(C=O)-NH-(-CHR)ₙ-; and -(C=O)-O-CHOH-CH₂-O-; wherein R is hydrogen or an alkyl group selected from the group consisting of methyl, ethyl, propyl and butyl groups and where n is an integer in the range from 1 to 12.

97. The article of manufacture of claim 94, wherein the cyclic olefinic pendent groups have the structure (II) : 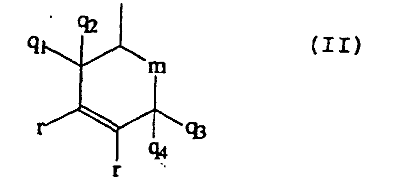 where q₁, q₂, q₃, q₄, and r are selected from the group consisting of -H, -CH₃, and -C₂H₅; and where m is -(CH₂)ₙ- where n is an integer in the range of from 0 to 4; and wherein, when r is -H, at least one of q₁, q₂, q₃ and q₄ is -H.

98. The article of manufacture of claim 96, wherein the polymeric backbone, linking groups and cyclic olefinic pendent groups comprise repeating units, each unit having a structure (III) as follows: 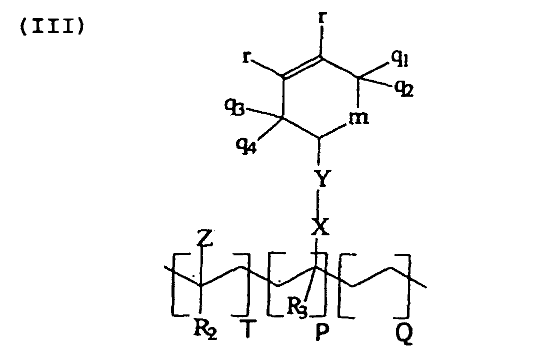 wherein P+T+Q is 100 mol % of the total composition; P is greater than 0 mol % of the total composition; Z is selected from the group consisting of an aryl group; -(C=O)OR₁;-O(C=O)R₁; and an alkyl aryl group, structure (IV) : 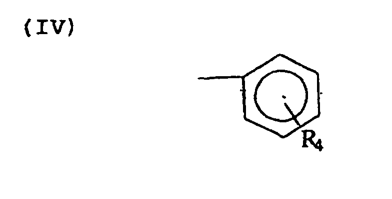 where R₄ is selected from the group consisting of -CH₃, -C₂H₅, and -H; R₁ is selected from the group consisting of -H, -CH₃, -C₂H₅, -C₃H₇ and -C₄H₉; R₂ and R₃ are selected from the group consisting of -H and -CH₃; X is selected from the group consisting of -O-, -NH-, -(C=O)O-, -(C=O)NH-, -(C=O)S-, -O(C=O)- and -(CHR)_{ℓ}-;ℓ is an integer in the range of from 1 to 6; Y is -(CHR)ₙ-, where n is an integer in the range from 0 to 12, R being selected from the group consisting of -H, -CH₃ and -C₂H₅; where q₁, q₂, q₃, q₄, and r are selected from the group consisting of -H, -CH₃, and -C₂H₅; and where m is -(CH₂)ₙ- and where n is an integer in the range of from 0 to 4; and wherein when r is -H, at least one of q₁, q₂, q₃ and q₄ is -H.

99. The article of manufacture of claim 94, wherein the cyclic olefinic pendent group is selected from the group consisting of cyclohexene-4-methylene radical, 1-methyl cyclohexene-4-methylene radical, 2-methyl cyclohexene-4-methylene radical, 5-methyl cyclohexene-4-methylene radical, 1,2-dimethyl cyclohexene-4-methylene radical, 1,5-dimethyl cyclohexene-4-methylene radical, 2,5-dimethyl cyclohexene-4-methylene radical, 1,2,5-trimethyl cyclohexene-4-methylene radical, cyclohexene-4-ethylene radical, 1-methyl cyclohexene-4-ethylene radical, 2-methyl cyclohexene-4-ethylene radical, 5-methyl cyclohexene-4-ethylene radical, 1,2-dimethyl cyclohexene-4-ethylene radical, 1,5-dimethyl cyclohexene-4-ethylene radical,, 2,5-dimethyl cyclohexene-4-ethylene radical, 1,2,5-trimethyl cyclohexene-4-ethylene radical, cyclohexene-4-propylene radical, 1-methyl cyclohexene-4-propylene radical, 2-methyl cyclohexene-4-propylene radical, 5-methyl cyclohexene-4-propylene radical, 1,2-dimethyl cyclohexene-4-propylene radical, 1,5-dimethyl cyclohexene-4-propylene radical, 2,5-dimethyl cyclohexene-4-propylene radical, and 1,2,5-trimethyl cyclohexene-4-propylene radical.

100. The article of manufacture of claim 94, wherein the oxygen scavenging composition is selected from the group consisting of an ethylene/methyl acrylate/cyclohexenyl methyl acrylate terpolymer, a cyclohexenyl methyl acrylate/ethylene copolymer, a cyclohexenyl methyl methacrylate/styrene copolymer, a cyclohexenyl methyl acrylate homopolymer and a methyl acrylate/cyclohexenyl methyl acrylate copolymer.

101. The article of manufacture of claim 94, wherein the outer layer comprises polyethylene terephthalate, polyethylene naphthalate, or a mixture of polyethylene terephthalate and polyethylene naphthalate.

102. The article of manufacture of claim 94, wherein the composition further comprises a first tie layer between the core layer and the inner layer, and a second tie layer between the core layer and the outer layer.

103. The article of manufacture of claim 94, wherein the transition metal catalyst is a metal salt.

104. The article of manufacture of claim 103, wherein the metal in the metal salt is cobalt.

105. The article of manufacture of claim 104, wherein the metal salt is selected from the group consisting of cobalt neodecanoate, cobalt 2-ethylhexenoate, cobalt oleate, and cobalt stearate.

106. The article of manufacture of claim 94, wherein the oxygen scavenging composition further comprises at least one triggering material to enhance initiation of oxygen scavenging.

107. The article of manufacture of claim 94, wherein the triggering material is a photoinitiator.

108. The article of manufacture of claim 107, wherein the photoinitiator has an ultraviolet absorption window above 320 nm.

109. The article of manufacture of claim 94, wherein the rigid container is suitable for packaging oxygen sensitive beverages for extended freshness and shelf life.

110. The article of manufacture of claim 109, wherein the oxygen sensitive beverage is beer, wine or fruit juice.

## Patentansprüche

1. Zusammensetzung, die sich als Sauerstofffänger eignet, umfassend ein Gemisch aus a) einem Polymer oder Oligomer, das ein Polymergerüst enthält, cycloolefinische Seitengruppen sowie Linkergruppen, welche die olefinischen Seitengruppen mit dem Polymergerüst verbinden, wobei das Polymergerüst, die Linkergruppen und die cycloolefinischen Seitengruppen Wiederholungseinheiten beinhalten, die jeweils eine Struktur (III) wie folgt besitzen 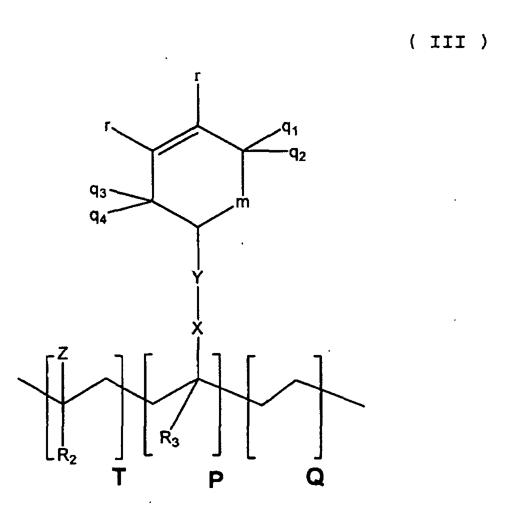 worin ist:
P+T+Q 100 Molprozent der Gesamtzusammensetzung;
P größer als 0 Molprozent der Gesamtzusammensetzung;
Z ausgewählt aus der Gruppe Arylgruppe, -(C=O)OR₁, -O(C=O)R₁ und Alkylarylgruppe der Struktur 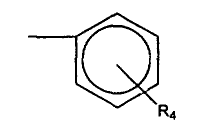 wobei R₄ ausgewählt ist aus der Gruppe -CH₃, -C₂H₅ und -H und R₁ aus der Gruppe -H, -CH₃, -C₂H₅, -C₃H₇, und -C₄H₉;
R₂ und R₃ ausgewählt aus der Gruppe -H und CH₃;
X ausgewählt aus der Gruppe -O-, -NH-, -(C=O)O-, -(C=O)NH-, -(C=O)S-, -O(C=O)- und -(CHR)_{ℓ}, wobei ℓ eine ganze Zahl von 1 bis 6 ist;
Y -(CHR)ₙ- oder, wenn X gleich -(C=O)O- , gleich -(CHR)ₙ- oder CHOH-CH₂-O-, wobei n eine ganze Zahl von 0 bis 12 ist und R aus der Gruppe -H, -CH₃ und C₂H₅ ausgewählt ist,
q₁, q₂, q₃, q₄ und r ausgewählt aus der Gruppe -H, -CH₃ und C₂H₅;
m gleich -(CH₂)ₙ-, wobei n eine ganze Zahl von 0 bis 4 ist , und wenn r gleich -H ist, mindestens ein q₁, q₂, q₃, q₄ gleich -H ist; und
b) einem Obergangsmetallkatalysator.

2. Zusammensetzung nach Anspruch 1, wobei das Polymer oder Oligomer mit einem Trägerharz gemischt ist.

3. Zusammensetzung nach Anspruch 2, wobei das Gemisch zudem mindestens einen Photoinitiator enthält.

4. Zusammensetzung nach Anspruch 1, wobei die Verknüpfung -Y-X- Ester, Ether, Amid, Imid, Urethan oder Acetalgruppe umfasst.

5. Zusammensetzung nach Anspruch 1, wobei das Übergangsmetall aus Mangan, Kobalt, Nickel, Kupfer, Rhodium oder Ruthen ausgewählt ist.

6. Zusammensetzung nach Anspruch 4, zudem umfassend eine auslöseverstärkende Komponente, die den Fänger empfänglich macht gegenüber einer Auslösung durch ein externes Ereignis.

7. Zusammensetzung nach Anspruch 6, wobei die auslöseverstärkende Komponente ausgewählt ist aus der Gruppe Benzophenon oder substituiertes Benzophenon.

8. Zusammensetzung nach Anspruch 6, wobei das äußere Ereignis die Strahlung einer elektromagnetischen Bestrahlung ist.

9. Zusammensetzung nach Anspruch 6, wobei das äußere Ereignis eine Bestrahlung mit UV-Licht ist.

10. Zusammensetzung nach Anspruch 5, wobei das Material mit einem Trägerharz gemischt ist.

11. Zusammensetzung nach Anspruch 5, wobei die Sauerstofffänger-Zusammensetzung in Form eines Kunststoffharzes vorliegt.

12. Zusammensetzung nach Anspruch 11, wobei das Kunststoffharz ein Polyesterharz umfasst.

13. Zusammensetzung nach Anspruch 11, wobei das Kunststoffharz ein Harz umfasst, das sich zur Herstellung von Kunststofffilmen eignet.

14. Zusammensetzung nach Anspruch 5, wobei die Zusammensetzung hergestellt wird, durch eine Umsetzung von Tetrahydrophthalsäureanhydrid mit mindestens einem Stoff aus i) einem Diol; ii) einer Hydroxyverbindung; oder iii) einer Polyhydroxyverbindung.

15. Zusammensetzung nach Anspruch 14, wobei die Zusammensetzung hergestellt wird durch Erwärmen von Tetrahydrophthalsäureanhydrid in einem Lösungsmittel mit mindestens einem Stoff aus i) einem Diol; ii) einer Hydroxyverbindung; oder iii) einer Polyhydroxyverbindung.

16. Sauerstofffangende Zusammensetzung nach Anspruch 14, wobei das Anhydrid 1, 2, 3, 6-Tetrahydrophthalsäureanhydrid enthält oder von Butadien ableitbares Tetrahydrophthalsäureanhydridmonomer.

17. Zusammensetzung nach Anspruch 14, wobei die Zusammensetzung mit einem reaktiven Extruderverfahren hergestellt wird.

18. Zusammensetzung nach Anspruch 5, hergestellt durch Umsetzung eines Tetrahydrobenzylalkohols mit ein oder mehreren Verbindungen, die ein oder mehrere der folgenden Funktionalitäten besitzen: i) Carbonsäure; ii) Säurehalid; iii) Ester; iv) Anhydrid; und v) Isocyanat.

19. Sauerstofffangende Zusammensetzung nach Anspruch 18, wobei die Zusammensetzung hergestellt wird durch ein reaktives Extruderverfahren.

20. Sauerstofffangende Zusammensetzung nach Anspruch 18, wobei die Zusammensetzung hergestellt wird durch die Umsetzung von Tetrahydrobenylalkohol mit einem Ester in einer Transester-Umsetzung.

21. Sauerstofffangende Zusammensetzung nach Anspruch 18, wobei die Verbindung mit der Anhydridfunktionalität Styrol/Maleinsäureanhydrid-Copolymer enthält.

22. Sauerstofffangende Zusammensetzung nach Anspruch 18, wobei die Verbindung mit der Isocyanatfunktionalität ein polyfunktionelles Isocyanat enthält.

23. Sauerstofffangende Zusammensetzung nach Anspruch 5, umfassend einen Polyester, wobei die Zusammensetzung hergestellt wird aus Cyclohexendimethanol.

24. Sauerstofffangende Zusammensetzung nach Anspruch 5, wobei die Zusammensetzung hergestellt wird aus Tetrahydrobenzoesäure und einem Material mit einer Hydroxylfunktion.

25. Sauerstofffangende Zusammensetzung nach Anspruch 5, wobei die Zusammensetzung hergestellt wird aus Tetrahydrobenzoesäure und einem Material mit einer Hydroxylfunktion.

26. Sauerstofffangende Zusammensetzung nach Anspruch 5, wobei die Zusammensetzung hergestellt wird aus Tetrahydrobenzaldehyd und einem Material mit einer Hydroxylfunktion.

27. Sauerstofffangende Zusammensetzung nach Anspruch 5, umfassend ein Polymer oder Oligomer mit mindestens einer Cyclohexengruppe, wobei einige Kohlenstoffe der Cyclohexengruppe Bestandteile sind von weiteren Ringstrukturen innerhalb des Polymers oder Oligomers.

28. Sauerstofffangende Zusammensetzung nach Anspruch 5, umfassend eine Cycloalken-Seitengruppe, wobei die Zusammensetzung hergestellt wird mit einem Verfahren, bei dem einige Kohlenstoffe der Cyclohexengruppe ein Teil des Gerüsts des Polymers oder Oligomers bilden.

29. Sauerstofffangende Zusammensetzung nach Anspruch 5, umfassend eine Cyclohexen-Seitengruppe, wobei die Zusammensetzung hergestellt wird mit einem Verfahren, das eine Diels-Alder-Additionsreaktion beinhaltet.

30. Sauerstofffangende Zusammensetzung nach Anspruch 5, wobei die Zusammensetzung in einem Kissen enthalten ist.

31. Zusammensetzung nach Anspruch 1, wobei das Polymergerüst ethylenisch ist und die Linkergruppen ausgewählt sind aus der Gruppe:
-O-(CHR)ₙ-; -(C=O)-O-(CHR)ₙ-; -NH-(CHR)ₙ-; -O-(C=O)-(CHR)ₙ-;
-(C=O)-NH-(-CHR)ₙ-; und -(C=O)-O-CHOH-CH₂-O-;
wobei R Wasserstoff oder eine Alkylgruppe ist, ausgewählt aus der Gruppe Methyl-, Ethyl-, Propyl- und Butylgruppen und n eine ganze Zahl von 1 bis 12 ist.

32. Zusammensetzung nach Anspruch 1, wobei die cycloolefinischen Seitengruppen die Struktur (II) besitzen: 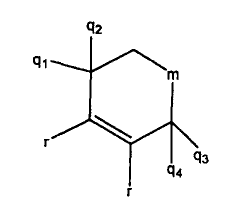 worin q₁, q₂, q₃, q₄ und r ausgewählt sind aus der Gruppe -H, -CH₃ und -C₂H₅; und wenn m gleich -(CH₂)ₙ- ist, n eine ganze Zahl von 0 bis 4 ist, und wenn r gleich -H ist, mindestens eines der q₁, q₂, q₃ und q₄ gleich -H ist.

33. Zusammensetzung nach Anspruch 1, wobei die cycloolefinischen Seitengruppen gepfropft sind auf die Linkergruppen des Polymergerüsts durch eine Veresterungs-, Transester-, Amidierungs-, oder eine Transamidierungsreaktion.

34. Zusammensetzung nach Anspruch 33, wobei die Veresterungs-, Transester-, Amidierungs- oder Transamidierungsreaktion eine Lösungsmittelreaktion oder eine reaktive Extrusion ist.

35. Zusammensetzung nach Anspruch 33, wobei die Veresterungs-, Transester-, Amidierungs- oder Transamidierungsreaktion katalysiert wird von einem Katalysator, ausgewählt aus der Gruppe starke nicht-oxidierende Säuren, tertiäre Amine, Gruppe-I-Alkoxide, Gruppe-IVB-Alkoxide und Gruppe-IVA-Organometalle.

36. Zusammensetzung nach Anspruch 35, wobei der Katalysator ausgewählt ist aus der Gruppe Toluolsulfonsäure, Natriummethoxid, Tetrabutyltitanat, Tetraisobutyltitanat, Tetra-n-butyltitanat, Tetraethyltitanat, 2-Hydroxypyridin und Dibutyldilaurat.

37. Zusammensetzung nach Anspruch 1, wobei die cycloolefinischen Seitengruppen ausgewählt sind aus der Gruppe Cyclohexen-4-methylen-Radikal, 1-Methylcyclohexen-4-methylen-Radikal, 2-Methylcyclohexen-4-methylen-Radikal, 5-Methylcyclohexen-4-methylen-Radikal, 1,2-Dimethylcyclohexen-4-methylen-Radikal, 1,5-Dimethylcyclohexen-4-methylen-Radikal, 2,5-Dimethylcyclohexen-4-methylen-Radikal, 1,2,5-Trimethylcyclohexen-4-methylen-Radikal, Cyclohexen-4-ethylen-Radikal, 1-Methylcyclohexen-4-ethylen-Radikal, 2-Methylcyclohexen-4-ethylen-Radikal, 5-Methylcyclohexen-4-ethylen-Radikal, 1,2-Dimethylcyclohexen-4-ethylen-Radikal, 1,5-Dimethylcyclohexen-4-ethylen-Radikal, 2,5-Dimethylcyclohexen-4-ethylen-Radikal, 1,2,5-Trimethylcyclohexen-4-ethylen-Radikal, Cyclohexen-4-propylen-Radikal, 1-Methylcyclohexen-4-propylen-Radikal, 2-Methylcyclohexen-4-propylen-Radikal, 5-Methylcyclohexen-4-propylen-Radikal, 1,2-Dimethylcyclohexen-4-propylen-Radikal, 1,5-Dimethylcyclohexen-4-propylen-Radikal, 2,5-Dimethylcyclohexen-4-propylen-Radikal, 1,2,5-Trimethylcyclohexen-4-propylen-Radikal, Cyclopenten-4-methylen-Radikal, 1-Methylcyclopenten-4-methylen-Radikal, 3-Methylcyclopenten-4-methylen-Radikal, 1,2-Dimethylcyclopenten-4-methylen-Radikal, 3,5-Dimethylcyclopenten-4-methylen-Radikal, 1,3-Dimethylcyclopenten-4-methylen-Radikal, 2,3-Dimethylcyclopenten-4-methylen-Radikal, 1,2,3-Trimethylcyclopenten-4-methylen-Radikal, 1,2,3,5-Tetramethylcyclopenten-4-methylen-Radikal, Cyclopenten-4-ethylen-Radikal, 1-Methylcyclopenten-4-ethylen-Radikal, 3-Methylcyclopenten-4-ethylen-Radikal, 1,2-Dimethylcyclopenten-4-ethylen-Radikal, 3,5-Dimethylcyclopenten-4-ethylen-Radikal, 1,3-Dimethylcyclopenten-4-ethylen-Radikal, 2,3-Dimethylcyclopenten-4-ethylen-Radikal, 1,2,3-Trimethylcyclopenten-4-ethylen-Radikal, 1,2,3,5-Tetramethylcyclopenten-4-ethylen-Radikal, Cyclopenten-4-propylen-Radikal, 1-Methylcyclopenten-4-propylen-Radikal, 3-Methylcyclopenten-4-propylen-Radikal, 1,2-Dimethylcyclopenten-4-propylen-Radikal, 3,5-Dimethylcyclopenten-4-propylen-Radikal, 1,3-Dimethylcyclopenten-4-propylen-Radikal, 2,3-Dimethylcyclopenten-4-propylen-Radikal, 1,2,3-Trimethylcyclopenten-4-propylen-Radikal and 1,2,3,5-Tetramethylcyclopenten-4-propylen-Radikal.

38. Zusammensetzung nach Anspruch 1, wobei die Zusammensetzung ein Ethylen/Methylacrylat/Cyclohexenyl-methylacryl-Terpolymer ist, ein Cyclohexenylmethylacrylat/Ethylen-Copolymer, ein Cyclohexenylmethylmetacrylat/Styrol-Copolymer, ein Cyclohexenylmethylacrylat-Homopolymer oder ein Methylacrylat/Cyclohexenylmethylacrylat-Copolymer.

39. Zusammensetzung nach Anspruch 1, wobei die Geruchs- und die Geschmackseigenschaften der Erzeugnisse, die mit dem Material verpackt werden, das die Zusammensetzung enthält, nicht durch eine Oxidation mit der Zusammensetzung verfälscht werden.

40. Zusammensetzung nach Anspruch 1, wobei keine signifikante Fragmentierung der olefinischen Seitengruppen und der Linkergruppen des Polymergerüsts erfolgt, wenn die Zusammensetzung oxidiert wird.

41. Zusammensetzung nach Anspruch 1, wobei der Übergangsmetallkatalysator ein Metallsalz ist.

42. Zusammensetzung nach Anspruch, 41, wobei das Metall des Metallsalzes Kobalt ist.

43. Zusammensetzung nach Anspruch 41, wobei das Metallsalz ausgewählt ist aus der Gruppe Kobaltneodecanoat, Kobalt-2-ethylhexanoat, Kobaltoleat und Kobaltstearat.

44. Zusammensetzung nach Anspruch 1, zudem umfassend mindestens eine Auslösesubstanz zur Verstärkung der Initiation des Sauerstoffeinfangs.

45. Zusammensetzung nach Anspruch 44, wobei das Ausiösematerial ein Photoinitiator ist.

46. Hergestellter Gegenstand, der als Behälter geeignet ist, wobei der Behälter die Oxidation des Inhalts des Behälters inhibiert, indem Sauerstoff aus dem Behälter entfernt wird und durch Hemmung des Sauerstoffzutritts in den Behälter von außerhalb des Behälters, wobei der Gegenstand eine sauerstofffangende Zusammensetzung nach Anspruch 1 enthält.

47. Herstellungsgegenstand nach Anspruch 46, wobei die Geruchs- und die Geschmackseigenschaften der Erzeugnisse, die mit dem Material verpackt werden, das die Zusammensetzung enthält, nicht durch eine Oxidation der Zusammensetzung verfälscht werden.

48. Herstellungsgegenstand nach Anspruch 46, wobei keine signifikante Fragmentierung der olefinischen Seitengruppen und Linkergruppen des Polymergerüsts durch die Oxidation der Zusammensetzung folgt.

49. Herstellungsgegenstand nach Anspruch 46, wobei der Gegenstand eine Verpackung ist.

50. Herstellungsgegenstand nach Anspruch 49, wobei die Verpackung einen flexiblen Film mit einer Dicke von höchstens 10 mil oder eine flexible Lage mit einer Dicke von mindestens 10 mil besitzt.

51. Herstellungsgegenstand nach Anspruch 49, wobei das sauerstofffangende System der Verpackung mindestens eine weitere Schicht, ausgewählt aus Sauerstoffsperrschicht, selektiven Polymerschichten und Heißsiegelschicht umfasst.

52. Herstellungsgegenstand nach Anspruch 49, wobei der Gegenstand eine Verpackung ist mit einem Lebensmittelerzeugnis, das sich in der Verpackung befindet.

53. Herstellungsgegenstand nach Anspruch 49, wobei der Gegenstand eine Verpackung ist zum Verpacken von kosmetischen, chemischen, elektronischen Erzeugnissen, Pestiziden oder einer pharmazeutischen Zusammensetzung.

54. Mehrlagenfilm, umfassend einen Herstellungsgegenstand nach Anspruch 46 und mindestens eine weitere funktionelle Lage.

55. Mehrlagenfilm, nach Anspruch 54, wobei mindestens eine weitere Lage ausgewählt ist aus Sauerstoffsperrschichten, selektiven Polymersperrschichten, Strukturschichten und Heißsiegelschichten.

56. Mehrlagenfilm nach Anspruch 54, wobei mindestens eine weitere Lage eine Sauerstoffsperrschicht ist.

57. Mehrlagenfilm nach Anspruch 56, wobei mindestens eine selektive Polymersperrschicht enthalten ist.

58. Mehrlagenfilm nach Anspruch 56, der zudem mindestens eine Heißsiegelschicht enthält.

59. Mehrlagenfilm nach Anspruch 56, der zudem mindestens eine Strukturschicht enthält.

60. Gegenstand nach Anspruch 46, wobei der Gegenstand ein starrer Behälter ist, ein Dichtflansch, ein Flecken, eine Behälterverschlussvorrichtung, eine Flaschenkappe, ein Flaschenkappeneinsatz oder eine gegossene oder thermogeformte Form.

61. Gegenstand nach Anspruch 60, wobei die gegossene oder thermogeformte Form eine Flasche oder eine Schale ist.

62. Sauerstofffangende Zusammensetzung nach irgendeinem der Ansprüche 39 bis 42, die in Form einer Lage vorliegt.

63. Lage nach Anspruch 62, wobei die Schicht zudem ein Polymerverdünnungsmittel enthält.

64. Lage nach Anspruch 63, wobei das Verdünnungsmitttel ein thermoplastisches Polymer ist.

65. Lage nach Anspruch 62, wobei die Lage benachbart ist zu einem oder mehreren Lagen.

66. Lage nach Anspruch 65, wobei mindestens eine weitere Lage eine Sauerstoffsperre ist.

67. Lage nach Anspruch 66, wobei die Sauerstoffsperre umfasst ein Mitglied der Gruppe Poly(ethylenvinylalkohol), Polyacrylnitril, Polyvinylchlorid, Polyamide, Polyvinylidendichlorid, Polyethylenterephthalat, Silica, Metallfilm und metallisierte Polymerfilme.

68. Lage nach Anspruch 65, wobei ein oder mehrere weitere Lagen zusammen mit der Schicht extrudiert werden.

69. Lage nach Anspruch 65, wobei ein oder mehrere weitere Lagen oder Schichten auf die Lage laminiert werden.

70. Lage nach Anspruch 65, wobei ein oder mehrere weitere Lagen oder Schichten auf die Lage beschichtet werden.

71. Lage nach Anspruch 65, wobei die Lage flexibel ist.

72. Lage nach Anspruch 65, wobei die Lage transparent ist.

73. Verpackungsgegenstand, wobei der Gegenstand eine Lage nach Anspruch 62 umfasst.

74. Verfahren zur Herstellung eines Polymermaterials in einem Verfahren, ausgewählt aus der Gruppe Veresterung, Transveresterung, Amidierung, Transamidierung und Direktpolymerisation, wobei das Polymermaterial ein Polymergerüst umfasst, cycloolefinische Seitengruppen, und Linkergruppen, die das Gerüst mit den Seitengruppen verknüpfen, wobei das Polymergerüst, die Linkergruppen und die zyklischen Seitengruppen Wiederholungseinheiten umfassen, wobei diese jeweils die Struktur (III) wie folgt besitzen: 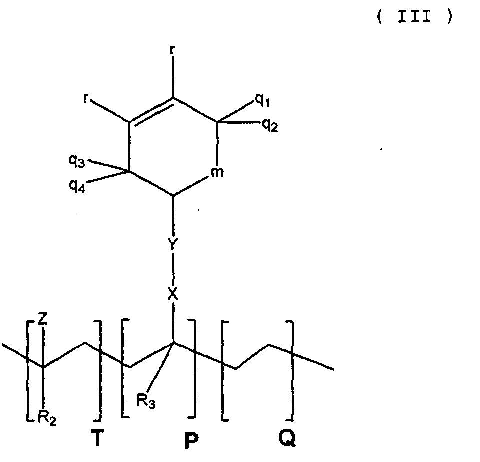 worin ist
P+T+Q 100 Molprozent der Gesamtzusammensetzung,
P größer als 0 Molprozent der Gesamtzusammensetzung;
Z ausgewählt aus der Gruppe Arylgruppe; -(C=O)CR₁; -O(C=O)R₁; und einer Alkylarylgruppe der Struktur: 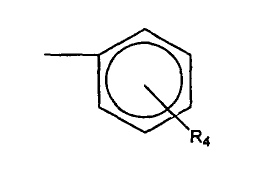 wobei R₄ ausgewählt ist aus der Gruppe -CH₃, -C₂H₅ und R₁ ausgewählt aus der Gruppe -H, -CH₃, -C₂H₅, -C₃H₇, und -C₄H₉;
R₂ und R₃ ausgewählt aus der Gruppe -H und -CH₃;
X ausgewählt aus der Gruppe -O-, -NH-, -(C=)O-, -(C=O)NH-, -(C=O)S- - O(C=O)- und -(CHR)_{ℓ}, wobei ℓ eine ganze Zahl von 1 bis 6 ist;
Y gleich -(CHR)ₙ- oder, wenn X gleich -(C=O)O-, gleich -(CHR)ₙ- oder -CHOH-CH₂-O-, wobei n eine ganze Zahl von 0 bis 12 ist und R ausgewählt aus der Gruppe -H, -CH₃ und -C₂H₅;
q₁, q₂, q₃, q₄ und r ausgewählt aus der Gruppe -H, -CH₃ und -C₂H₅,
m gleich -(CH₂)ₙ-, wobei n eine ganze Zahl von 0 bis 4 ist, und, wenn r gleich -H ist, mindestens eines der q₁, q₂, q₃, q₄ gleich -H ist.

75. Verfahren nach Anspruch 74, wobei die Herstellung des Polymermaterials die Schritte umfasst:
a) Auswählen eines Polymers aus der Gruppe Styrol/Maleinsäureanhydrid, Ethylen/Maleinsäureanhydrid, Ethylen/Acrylsäure, Ethylen/Methacrylsäure, Acrylsäure, Methacrylsäure, Styrol/Methacrylsäure, Ethylen/Methacryl, Ethylen/Ethylacrylat, Ethylen/Butylacrylat, Methylmetacrylat, Methylacrylat und Styrol/Methylmethacrylat unter Bildung eines Gemisches und Vereinigen des Polymers mit einer veresternden/transesternden Verbindung, ausgewählt aus der Gruppe Cyclohexen-4-methanol, 1-Methylcyclohexen-4-methanol, 2-Methylcyclohexen-4-methanol, 5-Methylcyclohexen-4-methanol, 1,2-Dimethylcyclohexen-4-methanol, 1,5-Dimethylcyclohexen-4-methanol, 2,5-Dimethylcyclohexen-4-methanol, 1,2,5-Trimethylcyclohexen-4-methanol, Cyclohexen-4-ethanol, 1-Methylcyclohexen-4-ethanol, 2-Methylcyclohexen-4-ethanol, 5-Methylcyclohexen-4-ethanol, 1,2-Dimethylcyclohexen-4-ethanol, 1,5-Dimethylcyclohexen-4-ethanol, 2,5-Dimethylcyclohexen-4-ethanol, 1,2,5-Trimethylcyclohexen-4-ethanol, Cyclohexen-4-propanol, 1-Methylcyclohexen-4-propanol, 2-Methylcyclohexen-4-propanol, 5-Methylcyclohexen-4-propanol, 1,2-Dimethylcyclohexen-4-propanol, 1,5-Dimethylcyclohexen-4-propanol, 2,5-Dimethylcyclohexen-4-propanol, 1,2,5-Trimethylcyclohexen-4-propanol, Cyclopenten-4-methanol, 1-Methylcyclopenten-4-methanol, 3-Methylcyclopenten-4-methanol, 1,2-Dimethylcyclopenten-4-methanol, 3,5-Dimethylcyclopenten-4-methanol, 1,3-Dimethylcyclopenten-4-methanol, 2,3-Dimethylcyclopenten-4-methanol, 1,2,3-Trimethylcyclopenten-4-methanol, 1,2,3,5-Tetramethylcyclopenten-4-methanol, Cyclopenten-4-ethanol, 1-Methylcyclopenten-4-ethanol, 3-Methylcyclopenten-4-ethanol, 1,2-Dimethylcyclopenten-4-ethanol, 3,5-Dimethylcyclopenten-4-ethanol, 1,3-Dimethylcyclopenten-4-ethanol, 2,3-Dimethylcyclopenten-4-ethanol, 1,2,3-Trimethylcyclopenten-4-ethanol, 1,2,3,5-Tetramethylcyclopenten-4-ethanol, Cyclopenten-4-propanol, 1-Methylcyclopenten-4-propanol, 3-Methylcyclopenten-4-propanol, 1,2-Dimethylcyclopenten-4-propanol, 3,5-Dimethylcyclopenten-4-propanol, 1,3-Dimethylcyclopenten-4-propanol, 2,3-Dimethylcyclopenten-4-propanol, 1,2,3-Trimethylcyclopenten-4-propanol, 2,3-Dimethylcyclopenten-4-propanol, 1,2,3-Trimethylcyclopenten-4-propanol und 1,2,3,5-Tetramethylcyclopenten-4-propanol;
b) Erwärmen der Polymere und der veresternden/transesternden Verbindungen, ausgewählt in Schritt a) unter Bildung einer Polymerschmelze;
c) Prozessieren der Schmelze in einem Extruder unter Veresterungs- und Transester-Bedingungen mit einem Veresterungs-/Transester-Katalysator und Antioxidiermitteln, welche die Schmelze vor einer Oxidation bei ihrer Extrusion schützen, so dass die Polymerschmelze eine Veresterung der polymeren Anhydride mit cycloolefinischen Seitengruppen erfährt, einer Veresterung der Polymersäuren mit Cycloolefinseitengruppen oder dem Austausch von Alkylgruppen der Polymerester mit Cycloolefinseitengruppen; und
d) Entfernen der flüchtigen organischen Produkte und Nebenprodukten aus der Schmelze.

76. Verfahren nach Anspruch 74, wobei das Herstellen des Polymermaterials die Schritte umfasst:
a) Auswählen eines Polymers aus der Gruppe Styrol/Maleinsäureanhydrid, Ethylen/Maleinsäureanhydrid, Ethylen/Acrylsäure, Ethylen/Methacrylsäure, Acrylsäure, Methacrylsäure, Styrol/Methacrylsäure, Ethylen/Methacryl, Ethylen/Ethylacrylat, Ethylen/Butylacrylat, Methylmetacrylat, Methylacrylat und Styrol/Methylmethacrylat unter Bildung eines Gemisches und Vereinigen des Polymers mit einer amidierenden/transamidierenden Verbindung, ausgewählt aus der Gruppe Cyclohexen-4-methylamin, 1-Methylcyclohexen-4-methylamin, 2-Methylcyclohexen-4-methylamin, 5-Methylcyclohexen-4-methylamin, 1,2-Dimethylcyclohexen-4-methylamin, 1,5-Dimethylcyclohexen-4-methylamin, 2,5-Dimethylcyclohexen-4-methylamin, 1,2,5-Trimethylcyclohexen-4-methylamin, Cyclohexen-4-ethylamin, 1-Methylcyclohexen-4-ethylamin, 2-Methylcyclohexen-4-ethylamin, 5-Methylcyclohexen-4-ethylamin, 1,2-Dimethylcyclohexen-4-ethylamin, 1,5-Dimethylcyclohexen-4-ethylamin, 2,5-Dimethylcyclohexen-4-ethylamin, 1,2,5-Trimethylcyclohexen-4-ethylamin, Cyclohexen-4-propylamin, 1-Methylcyclohexen-4-propylamin, 2-Methylcyclohexen-4-propylamin, 5-Methylcyclohexen-4-propylamin, 1,2-Dimethylcyclohexen-4-propylamin, 1,5-Dimethylcyclohexen-4-propylamin, 2,5-Dimethylcyclohexen-4-propylamin, 1,2,5-Trimethylcyclohexen-4-propylamin, Cyclopenten-4-methylamin, 1-Methylcyclopenten-4-methylamin, 3-Methylcyclopenten-4-methylamin, 1,2-Dimethylcyclopenten-4-methylamin, 3,5-Dimethylcyclopenten-4-methylamin, 1,3-Dimethylcyclopenten-4-methylamin, 2,3-Dimethylcyclopenten-4-methylamin, 1,2,3-Trimethylcyclopenten-4-methylamin, 1,2,3,5-Tetramethylcyclopenten-4-methylamin, Cyclopenten-4-ethylamin, 1-Methylcyclopenten-4-ethylamin, 3-Methylcyclopenten-4-ethylamin, 1,2-Dimethylcyclopenten-4-ethylamin, 3,5-Dimethylcyclopenten-4-ethylamin, 1,3-Dimethylcyclopenten-4-ethylamin, 2,3-Dimethylcyclopenten-4-ethylamin, 1,2,3-Trimethylcyclopenten-4-ethylamin, 1,2,3,5-Tetramethylcyclopenten-4-ethylamin, Cyclopenten-4-propylamin, 1-Methylcyclopenten-4-propylamin, 3-Methylcyclopenten-4-propylamin, 1,2-Dimethylcyclopenten-4-propylamin, 3,5-Dimethylcyclopenten-4-propylamin, 1,3-Dimethylcyclopenten-4-propylamin, 2,3-Dimethylcyclopenten-4-propylamin, 1,2,3-Trimethylcyclopenten-4-propylamin, 2,3-Dimethylcyclopenten-4-propylamin, 1,2,3-Trimethylcyclopenten-4-propylamin und 1,2,3,5-Tetramethylcyclopenten-4-propylamin;
b) Erwärmen der Polymere und der amidierenden/transamidierenden Verbindungen, ausgewählt in Schritt a) unter Bildung einer Polymerschmelze;
c) Prozessieren der Schmelze in einem Extruder unter Amidierungss- und Transamidierungsbedingungen mit einem Amidierungs-/Transamidierungs-Katalysator und Antioxidiermitteln, welche die Schmelze vor einer Oxidation bei ihrer Extrusion schützen, so dass die Polymerschmelze eine Amidierung der polymeren Anhydride mit cycloolefinischen Seitengruppen erfährt, einer Amidierung der Polymersäuren mit Cycloolefinseitengruppen oder dem Austausch von Alkylgruppen der Polymerester mit Cycloolefinseitengruppen; und
d) Entfernen der flüchtigen organischen Produkte und Nebenprodukten aus der Schmelze.

77. Verfahren nach Anspruch 74, wobei das Herstellen des Polymermaterials die Schritte umfasst:
(a) Zusetzen zu einem Autoklaven von, Ethylen und einem Vinylmonomer, das Cyclohexen-Seitengruppen aufweist;
(b) Rühren des Ethylen und des Vinylmonomers im Autoklaven, so dass man ein Gemisch erhält;
(c) Zusetzen eines Polymerisationsinitiators vor, während oder nach dem Rührschritt;
(d) Polymerisieren des Gemisches, so dass man ein Polymer erhält; und
(e) Isolieren und Aufreinigen des Polymers.

78. Verfahren nach Anspruch 77, wobei in Schritt (a) ein Alphaolefin zum Autoklaven zugesetzt wird zusammen mit dem Ethylen und dem Vinylmonomer und in Schritt (b) das Alphaolefin gerührt wird mit dem Ethylen und dem Vinylmonomer, so dass man das Gemisch erhält.

79. Verfahren nach Anspruch 79, wobei das Polymergerüst ethylenisch ist und die Linkergruppen ausgewählt sind aus den Gruppen
-O-(CHR)ₙ; -(C=O)-O-(CHR)ₙ-; -NH-(CHR)ₙ-;
-O-(C=O)-(CHR)ₙ-; -(C=O)-NH-(-CHR)ₙ-;
und
-(C=O)-O-CHOH-CH₂-O-;
wobei R Wasserstoff ist oder eine Alkylgruppe, ausgewählt aus der Gruppe Methyl-, Ethyl-, Propyl- und Butylgruppen, wobei n eine ganze Zahl von 1 bis 12 ist.

80. Verfahren nach Anspruch 76, wobei das Polymergerüst ein ethylenisches Gerüst und die Linkergruppe
-(C=O)-NH-(CHR)ₙ
ist,
wobei R Wasserstoff ist oder eine Akylgruppe, ausgewählt aus der Gruppe Methyl-, Ethyl-, Propyl- und Butylgruppen und wobei n eine ganze Zahl von 1 bis 12 ist.

81. Verfahren nach Anspruch 74, wobei das Material eine sauerstofffangende Zusammensetzung ist, die zudem einen Übergangsmetallkatalysator enthält.

82. Verfahren nach Anspruch 81, wobei der Übergangsmetallkatalysator ein Metallsalz ist.

83. Verfahren nach Anspruch 82, wobei das Metall im Metallsalz Kobalt ist.

84. Verfahren nach Anspruch 82, wobei das Metallsalz ausgewählt ist aus der Gruppe Kobaltneodecanoat, Kobalt-2-ethylhexanoat, Kobaltoleat und Kobaltstearat.

85. Verfahren nach Anspruch 81, wobei die sauerstofffangende Zusammensetzung zudem mindestens eine Auslösesubstanz enthält zur Verbesserung des Start des Sauerstoffeinfangs.

86. Verfahren nach Anspruch 85, wobei das Auslösematerial ein Photoinitiator ist.

87. Verfahren nach Anspruch 74, wobei die cycloolefinischen Seitengruppen die Struktur (II) besitzen 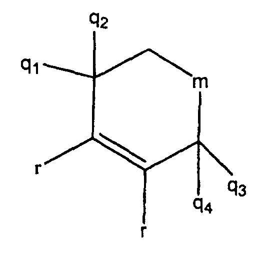 wobei q₁, q₂, q₃, q₄ und r ausgewählt sind aus der Gruppe -H, -CH₃ und -C₂H₅, m gleich -(CH₂)ₙ- ist und n eine ganze Zahl von 0 bis 4 und, wenn r gleich -H ist, mindestens eines der q₁, q₂, q₃ und q₄ gleich -H ist.

88. Verfahren nach Anspruch 74, wobei die funktionellen Gruppen mit den anhängenden cycloolefinischen Seitengruppen auf das Linkergerüst gepfropft sind durch eine Veresterungs-, Transester-, Amidierungs- oder Transamidierungsreaktion.

89. Verfahren nach Anspruch 74, wobei die Reaktion eine Lösungsmittelreaktion oder eine reaktive Extrusion ist.

90. Verfahren nach Anspruch 74, wobei die Reaktion zur Veresterung, Transveresterung, Amidierung oder Transamidierung katalysiert wird von einem Katalysator, der ausgewählt ist. aus der Gruppe starke nichtoxidierende Säuren, tertiäre Amine, Gruppe-I-Alkoxide, Gruppe-IVB-Alkoxide, Gruppe-IVA-Organometalle.

91. Verfahren nach Anspruch 90, wobei der Katalysator ausgewählt ist aus der Gruppe Toluolsulfonsäure, Natriummethoxid, Tetrabutyltitanat, Tetraisobutyltitanat, Tetra-n-propyltitanat, Tetraethyltitanat, 2-Hydroxypyridin und Dibutylzinndilaurat.

92. Verfahren nach Anspruch 74, wobei die cycloolefinischen Seitengruppen ausgewählt sind aus der Gruppe: Cyclohexen-4-methylen-Radikal, 1-Methylcyclohexen-4-methylen-Radikal, 2-Methylcyclohexen-4-methylen-Radikal, 5-Methylcyclohexen-4-methylen-Radikal, 1,2-Dimethylycyclohexen-4-methylen-Radikal, 1,5-Dimethylcyclohexen-4-methylen-Radikal, 2,5-Dimethylcyclohexen-4-methylen-Radikal, 1,2,5-Trimethylcyclohexen-4-methylen-Radikal, Cyclohexen-4-ethylen-Radikal, 1-Methylcyclohexen-4-ethylen-Radikal, 2-Methylcyclohexen-4-ethylen-Radikal, 5-Methylcyclohexen-4-ethylen-Radikal, 1,2-Dimethylcyclohexen-4-ethylen-Radikal, 1,5-Dimethylcyclohexen-4-ethylen-Radikal, 2,5-Dimethylcyclohexen-4-ethylen-Radikal, 1,2,5-Trimethylcyclohexen-4-ethylen-Radikal, Cyclohexen-4-propylen-Radikal, 1-Methylcyclohexen-4-propylen-Radikal, 2-Methylcyclohexen-4-propylen-Radikal, 5-Methylcyclohexen-4-propylen-Radikal, 1,2-Dimethylcyclohexen-4-propylen-Radikal, 1,5-Dimethylcyclohexen-4-propylen-Radikal, 2,5-Dimethylcyclohexen-4-propylen-Radikal, 1,2,5-Trimethylcyclohexen-4-propylen-Radikal, Cyclopenten-4-methylen-Radikal, 1-Methylcyclopenten-4-methylen-Radikal, 3-Methylcyclopenten-4-methylen-Radikal, 1,2-Dimethylcyclopenten-4-methylen-Radikal, 3,5-Dimethylcyclopenten-4-methylen-Radikal, 1,3-Dimethylcyclopenten-4-methylen-Radikal, 2,3-Dimethylcyclopenten-4-methylen-Radikal, 1,2,3-Trimethylcyclopenten-4-methylen-Radikal, 1,2,3,5-Tetramethylcyclopenten-4-methylen-Radikal, Cyclopenten-4-ethylen-Radikal, 1-Methylcyclopenten-4-ethylen-Radikal, 3-Methylcyclopenten-4-ethylen-Radikal, 1,2-Dimethylcyclopenten-4-ethylen-Radikal, 3,5-Dimethylcyclopenten-4-ethylen-Radikal, 1,3-Dimethylcyclopenten-4-ethylen-Radikal, 2,3-Dimethylcyclopenen-4-ethylen-Radikal, 1,2,3-Trimethylcyclopenten-4-ethylen-Radikal, 1,2,3,5-Tetramethylcyclopenten-4-ethylen-Radikal, Cyclopenten-4-propylen-Radikal, 1-Methylcyclopenten-4-propylen-Radikal, 3-Methylcyclopenten-4-propylen-Radikal, 1,2-Dimethylcyclopenten-4-propylen-Radikal, 3,5-Dimethylcyclopenten-4-propylen-Radikal, 1,3-Dimethylcyclopenten-4-propylen-Radikal, 2,3-Dimethylcyclopenten-4-propylen-Radikal, 1,2,3-Trimethylcyclopenten-4-propylen-Radikal und 1,2,3,5-Tetramethylcyclopenten-4-propylen-Radikal.

93. Verfahren nach Anspruch 74, wobei die Zusammensetzung Ethylen/Methylacrylat/Cyclohexenylmethylacrylat-Terpolymer ist, Cyclohexenylmethylacrylat/Ethylen-Copolymer, Cyclohexenylmethylmethacrylat/Styrol-Copolymer, Cyclohexenylmethylacrylat-Homopolymer oder ein Methylacrylat/Cyclohexenylmethylacrylat-Copolymer.

94. Herstellungsgegenstand nach Anspruch 46, wobei der Gegenstand ein mehrlagiger starrer Behälter ist für die Verpackung von Nahrungsmitteln oder Getränken, umfassend mindestens eine Innenlage, eine Außenlage und eine Kernlage zwischen der Innenlage und der Außenlage, wobei die Innen- und Außenlagen bestehen aus aromatischen Polyestern oder Copolyestern und wobei die Kernlage besteht aus der sauerstofffangenden Zusammensetzung.

95. Herstellungsgegenstand nach Anspruch 94, wobei die Innenlage und die Außenlage aromatische Polyester oder Copolyester enthält, ausgewählt aus der Gruppe Polyethylenterephthalat, Polyethylennaphthalat, Polypropylenterephthalat, Polybutylenterephthalat, Polyethylenisophthalat, Polycyclohexandimetanolterephthalat, Polybutylennaphthalat, Polycyclohexandimethanolnaphthalat und Copolymeren und Gemischen davon.

96. Herstellungsgegenstand nach Anspruch 94, wobei das Polymergerüst ethylenisch ist und die cycloolefinische Seitengruppen verknüpft sind mit dem Polymergerüst über Linkergruppen, ausgewählt aus der Gruppe -O-(CHR)ₙ-; -(C=O)-O-(CHR)ₙ-; -NH-(CHR)ₙ-; -O-(C=O)-(CHR)ₙ-; -(C=O)-NH-(-CHR)ₙ- und -(C=O)-O-CHOH-CH₂-O-; wobei R Wasserstoff oder eine Alkylgruppe ist, ausgewählt aus der Gruppe Methyl-, Ethyl-, Propyl- und Butylgruppen und n eine ganze Zahl von 1 bis 12 ist.

97. Herstellungsgegenstand nach Anspruch 94, wobei die cycloolefinischen Seitengruppen die Struktur (II) besitzen: 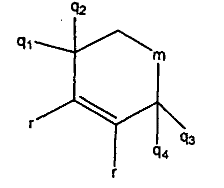 wobei q₁, q₂, q₃, q₄ und r ausgewählt sind aus der Gruppe -H, -CH₃ und -C₂H₅, und m gleich -(CH₂)ₙ- ist, wobei n eine ganze Zahl von 0 bis 4 ist, und wenn r gleich -H, mindestens eines der q₁, q₂, q₃, q₄ gleich -H ist.

98. Herstellungsgegenstand nach Anspruch 96, wobei das Polymergerüst, die Linkergruppen und die cycloolefinischen Seitengruppen Wiederholungseinheiten umfassen, wobei die Einheiten jeweils die Struktur (III) wie folgt besitzen: 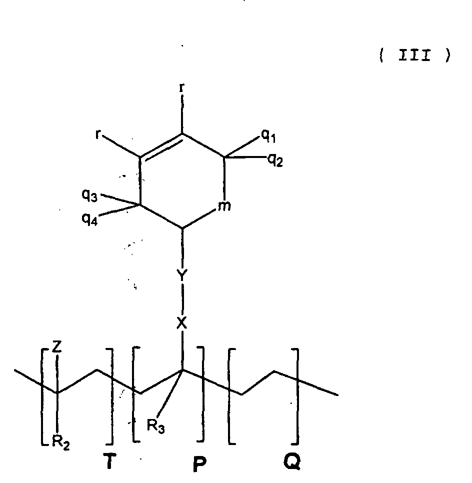 worin ist
P+T+Q gleich 100 Molprozent der Gesamtzusammensetzung,
P größer als 0 Molprozent der Gesamtzusammensetzung;
Z ausgewählt aus der Gruppe Arylgruppe; -(C=O)OR₁; -O(C=O)R₁; und einer Alkylarylgruppe der Struktur IV 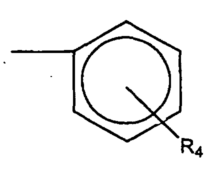 wobei R₄ ausgewählt ist aus der Gruppe -CH₃, -C₂H₅, und -H und R₁ ausgewählt ist aus der Gruppe -H, -CH₃, -C₂H₅, -C₃H₇ und -C₄H₉;
R₂ und R₃ ausgewählt aus der Gruppe -H und -CH₃;
X ausgewählt aus der Gruppe -O-, -NH-, -(C=O)O-, -(C=O)NH-, -(C=O)S-, -O(C=O)- und -(CHR)_{ℓ}, wobei ℓ eine ganze Zahl von 1 bis 6 ist,
Y gleich -(CHR)ₙ-, wobei n eine ganze Zahl von 0 bis 12 ist, R ausgewählt ist aus der Gruppe -H, -CH₃ und -C₂H₅;
q₁, q₂, q₃, q₄ und r ausgewählt aus der Gruppe -H, -CH₃ und -C₂H₅;
m gleich -(CH₂)ₙ, wobei n eine ganze Zahl von 0 bis 4 ist und, wenn r gleich -H ist, mindestens eines der q₁, q₂, q₃, q₄ gleich -H ist.

99. Herstellungsgegenstand nach Anspruch 94, wobei die cycloolefinische Seitengruppen ausgewählt sind aus der Gruppe: Cyclohexen-4-methylen-Radikal, 1-Methylcyclohexen-4-methylen-Radikal, 2-Methylcyclohexen-4-methylen-Radikal, 5-Methylcyclohexen-4-methylen-Radikal, 1,2-Dimethylcyclohexen-4-methylen-Radikal, 1,5-Dimethylcyclohexen-4-methylen-Radikal, 2,5-Dimethylcyclohexen-4-methylen-Radikal, 1,2,5-Trimethylcyclohexen-4-methylen-Radikal, Cyclohexen-4-ethylen-Radikal, 1-Methylcyclohexen-4-ethylen-Radikal, 2-Methylcyclohexen-4-ethylen-Radikal, 5-Methylcyclohexen-4-ethylen-Radikal, 1,2-Dimethylcyclohexen-4-ethylen-Radikal, 1,5-Dimethylcyclohexen-4-ethylen-Radikal, 2,5-Dimethylcyclohexen-4-ethylen-Radikal, 1,2,5-Trimethylcyclohexen-4-ethylen-Radikal, Cyclohexen-4-propylen-Radikal, 1-Methylcyclohexen-4-propylen-Radikal, 2-Methylcyclohexen-4-propylen-Radikal, 5-Methylcyclohexen-4-propylen-Radikal, 1,2-Dimethylcyclohexen-4-propylen-Radikal, 1,5-Dimethylcyclohexen-4-propylen-Radikal, 2,5-Dimethylcyclohexen-4-propylen-Radikal und 1,2,5-Trimethylcyclohexen-4-propylen-Radikal.

100. Herstellungsgegenstand nach Anspruch 94, wobei die sauerstofffangende Zusammensetzung ausgewählt ist aus der Gruppe Ethylen/Methylacrylat/Cyclohexenylmethylacrylat-Terpolymer, Cyclohexenylmethylacrylat/Ethylen-Copolymer, Cyclohexenylmethylmethacrylat/Styrol-Copolymer, Cyclohexenylmethylmethacrylat-Hhomopolymer und Methylmethacrylat/Cyclohexenylmethacrylat-Copolymer.

101. Herstellungsgegenstand nach Anspruch 94, wobei die Außenlage Polyethylenterephthalat enthält, Polyethylennaphthalat oder ein Gemisch von Polyethylenterephthalat und Polyethylennaphthalat.

102. Herstellungsgegenstand nach Anspruch 94, wobei die Zusammensetzung zudem mindestens eine Klebeschicht enthält zwischen der Kernlage und der Innenlage und eine zweite Klebeschicht zwischen der Kernlage und der Außenlage.

103. Herstellungsgegenstand nach Anspruch 94, wobei der Übergangsmetallkatalysator ein Metallsalz ist.

104. Herstellungsgegenstand nach Anspruch 103, wobei das Metall in dem Metallsalz Kobalt ist.

105. Herstellungsgegenstand nach Anspruch 104, wobei das Metallsalz ausgewählt ist aus Kobaltneodecanoat, Kobalt-2-ethylhexanoat, Kobaltoleat und Kobaltstearat.

106. Herstellungsgegenstand nach Anspruch 94, wobei die sauerstofffangende Zusammensetzung zudem mindestens einen Auslösestoff enthält zur Verstärkung des Starts des Sauerstoffeinfangs.

107. Herstellungsgegenstand nach Anspruch 94, wobei der Auslösestoff ein Photoinitiator ist.

108. Herstellungsgegenstand nach Anspruch 107, wobei der Photoinitiator ein ultraviolettes Absorptionsfenster oberhalb 320 nm besitzt.

109. Herstellungsgegenstand nach Anspruch 94, wobei der starre Behälter geeignet ist zum Verpacken von sauerstoffempfindlichen Getränken für eine längere Frische und Lagerdauer.

110. Herstellungsgegenstand nach Anspruch 109, wobei das sauerstoffempfindliche Getränk Bier, Wein oder Fruchtsaft ist.

## Revendications

1. Composition convenable pour piéger l'oxygène, comprenant un mélange :
(a) d'un polymère ou oligomère comprenant un squelette polymère, des groupes pendants oléfiniques cycliques et des groupes de liaison liant des groupes pendants oléfiniques au squelette polymère, le squelette polymère, les groupes de liaison et les groupes pendants oléfiniques cycliques comprenant des motifs répétés, chaque motif ayant une structure (III) suivante : 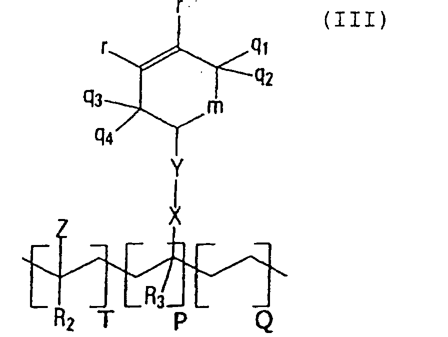 dans laquelle P+T+Q est égal à 100 % en moles de la composition totale ; P est supérieur à 0 % en moles de la composition totale, Z est choisi dans le groupe consistant en un groupe aryle, un groupe -(C=O)OR₁ ; -O(C=O)R₁ ; et un groupe alkylaryle de structure : 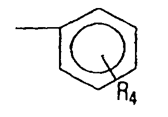 dans laquelle
R₄ est choisi dans le groupe consistant en des groupes -CH₃, -C₂H₅ et -H ; R₁ est choisi dans le groupe consistant en des groupes -H, -CH₃, -C₂H₅, -C₃H₇ et -C₄H₉ ; R₂ et R₃ sont choisis dans le groupe consistant en des groupes -H et -CH₃ ; X est choisi dans le groupe consistant en des groupes -O-, -NH-, -(C=O)O-, -(C=O)NH-, -(C=O)S-, -O(C=O)- et (CHR)_{ℓ} ; ℓ représente un nombre entier de 1 à 6 ; Y représente un groupe -(CHR)ₙ- ou, lorsque X représente un groupe -(C=O)O-, Y représente un groupe -(CHR)ₙ- ou CHOH-CH₂-O-, dans lequel n représente un nombre entier de 0 à 12, R étant choisi dans le groupe consistant en des groupes -H, -CH₃ et -C₂H₅ ; q₁, q₂, q₃, q₄ et r sont choisis dans le groupe consistant en des groupes -H, -CH₃ et -C₂H₅ ; et m représente un groupe -(CH₂)ₙ- dans lequel n représente un nombre entier de 0 à 4 ; et, lorsque r représente -H, au moins un de q₁, q₂, q₃ et q₄ représente un groupe -H ;
(b) un catalyseur à base de métal de transition.

2. Composition suivant la revendication 1, dans laquelle le polymère ou l'oligomère est mélangé à une résine de support.

3. Composition suivant la revendication 2, dans laquelle ledit mélange contient en outre un photo-initiateur.

4. Composition suivant la revendication 1, dans laquelle la liaison -Y-X- comprend un groupe ester, éther, amide, imide, uréthanne ou acétal.

5. Composition suivant la revendication 1, dans laquelle le métal de transition est choisi entre le manganèse, le cobalt, le nickel, le cuivre, le rhodium et le ruthénium.

6. Composition suivant la revendication 5, comprenant en outre un constituant augmentant le déclenchement qui rend l'agent de piégeage sensible au déclenchement par un événement extérieur.

7. Composition suivant la revendication 6, dans laquelle le constituant augmentant le déclenchement est choisi dans le groupe consistant en benzophénone et une benzophénone substituée.

8. Composition suivant la revendication 6, dans laquelle l'événement extérieur est une irradiation par un rayonnement électromagnétique.

9. Composition suivant la revendication 6, dans laquelle l'événement extérieur est une irradiation par de la lumière UV.

10. Composition suivant la revendication 5, dans laquelle la matière est mélangée à une résine de support.

11. Composition suivant la revendication 5, dans laquelle la composition piégeant l'oxygène est sous forme d'une résine plastique.

12. Composition suivant la revendication 11, dans laquelle la résine plastique comprend une résine polyester.

13. Composition suivant la revendication 11, dans -laquelle la résine plastique comprend une résine apte à l'utilisation dans la production de films en matière plastique.

14. Composition suivant la revendication 5, ladite composition étant préparée par réaction d'un anhydride tétrahydrophtalique avec au moins un des agents consistant en :
i) un diol ;
ii) un composé hydroxylique ; ou
iii) un composé polyhydroxylique.

15. Composition suivant la revendication 14, ladite composition étant préparée en chauffant de l'anhydride tétrahydrophtalique avec au moins un des agents consistant en :
i) un diol ;
ii) un composé hydroxylique ; ou
iv) un composé polyhydroxylique, dans un solvant.

16. Composition piégeant l'oxygène suivant la revendication 14, dans laquelle l'anhydride comprend l'anhydride 1, 2, 3, 6-tétrahydrophtalique, ou un monomère anhydride tétrahydrophtalique pouvant être dérivé du butadiène.

17. Composition suivant la revendication 14, ladite composition étant préparée par un procédé d'extrusion réactive.

18. Composition suivant la revendication 5, préparée par réaction d'un alcool tétrahydrobenzylique avec un ou plusieurs composés ayant une ou plusieurs des fonctionnalités suivantes :
i) acide carboxylique ;
ii) halogénure d'acide ;
iii) ester ;
iv) anhydride ; et
v) isocyanate.

19. Composition piégeant l'oxygène suivant la revendication 18, ladite composition étant préparée par un procédé d'extrusion réactive.

20. Composition piégeant l'oxygène suivant la revendication 18, ladite composition étant préparée par réaction d'un alcool tétrahydrobenzylique avec un ester par un procédé de transestérification.

21. Composition piégeant l'oxygène suivant la revendication 18, dans laquelle le composé à fonctionnalité anhydride comprend un copolymère styrène-anhydride maléique.

22. Composition piégeant l'oxygène suivant la revendication 18, dans laquelle le composé à fonctionnalité isocyanate comprend un isocyanate polyfonctionnel.

23. Composition piégeant l'oxygène suivant la revendication 5, comprenant un polyester, ladite composition étant préparée à partir de cyclohexènediméthanol.

24. Composition piégeant l'oxygène suivant la revendication 5, ladite composition étant préparée à partir d'acide tétrahydrobenzoïque et d'une matière à fonctionnalité hydroxyle.

25. Composition piégeant l'oxygène suivant la revendication 5, ladite composition étant préparée à partir d'acide tétrahydrobenzoïque et d'une matière à fonctionnalité hydroxyle.

26. Composition piégeant l'oxygène suivant la revendication 5, ladite composition étant préparée à partir de tétrahydrobenzaldéhyde et d'une matière à fonctionnalité hydroxyle.

27. Composition piégeant l'oxygène suivant là revendication 5, comprenant un polymère ou un oligomère ayant au moins un groupe cyclohexène, où certains atomes de carbone du groupe cyclohexène font partie d'autres structures cycliques dans le polymère ou l'oligomère.

28. Composition piégeant l'oxygène suivant la revendication 5, comprenant un groupe alcène cyclique pendant, la composition étant préparée par un procédé dans lequel certains atomes de carbone du groupe cyclohexène font partie du squelette du polymère ou de l'oligomère.

29. Composition piégeant l'oxygène suivant la revendication 5, comprenant un groupe cyclohexène pendant, ladite composition étant préparée par un procédé comprenant une réaction d'addition de Diels Alder.

30. Composition piégeant l'oxygène suivant la revendication 5, la composition étant incorporée dans un sachet.

31. Composition suivant la revendication 1, dans laquelle le squelette polymère est éthylénique et les groupes de liaison sont choisis dans le groupe consistant en :
-O-(CHR)ₙ- ; -(C=O)-O-(CHR)ₙ- ; -NH-(CHR)ₙ- ; -O-(C=O)-(CHR)ₙ- ;
-(C=O)-NH-(-CHR)ₙ- et -(C=O)-O-CHOH-CH₂-O- ;
dans lesquels R représente un atome d'hydrogène ou un groupe alkyle choisi dans le groupe consistant en les groupes méthyle, éthyle, propyle et butyle et n est un nombre entier de 1 à 12.

32. Composition suivant la revendication 1, dans laquelle les groupes pendants oléfiniques cycliques ont la structure (II) : 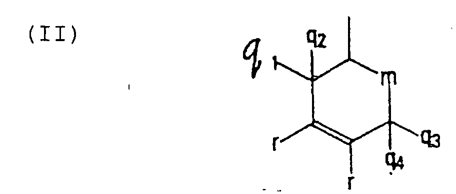 dans laquelle q₁, q₂, q₃, q₄ et r sont choisis dans le groupe consistant en des groupes -H, -CH₃ et -C₂H₅ ; et m représente un groupe -(CH₂)ₙ- dans lequel n est un nombre entier de 0 à 4 ; et lorsque r représente un groupe -H, au moins un de q₁, q₂, q₃ et q₄ représente un groupe -H.

33. Composition suivant la revendication 1, dans laquelle les groupes pendants oléfiniques cycliques sont greffés sur les groupes de liaison du squelette polymère par une réaction d'estérification, de transestérification, d'amidation ou de transamidation.

34. Composition suivant la revendication 33, dans laquelle la réaction d'estérification, de transestérification, d'amidation ou de transamidation est une réaction en solution ou une extrusion réactive.

35. Composition suivant la revendication 33, dans laquelle la réaction d'estérification, de transestérification, d'amidation ou de transamidation est catalysée par un catalyseur choisi dans le groupe consistant en des acides forts non oxydants, des amines tertiaires, des alcoolates du Groupe I, des alcoolates du Groupe IVB et des composés organométalliques du Groupe IVA.

36. Composition suivant la revendication 35, dans laquelle le catalyseur est choisi dans le groupe consistant en acide toluènesulfonique, méthylate de sodium, titanate de tétrabutyle, titanate de tétra-isopropyle, titanate de tétra-n-propyle, titanate de tétra-éthyle, 2-hydroxypyridine et dilaurate de dibutylétain.

37. Composition suivant la revendication 1, dans laquelle les groupes pendants oléfiniques cycliques sont choisis dans le groupe consistant en le radical cyclohexène-4-méthylène, le radical 1-méthylcyclohexène-4-méthylène, le radical 2-méthylcyclohexène-4-méthylène, le radical 5-méthylcyclohexène-4-méthylène, le radical 1,2-diméthyl-cyclohexène-4-méthylène, le radical 1,5-diméthylcyclohexène-4-méthylène, le radical 2,5-diméthylcyclohexène-4-méthylène, le radical 1,2,5-triméthylcyclohexène-4-méthylène, le radical cyclohexène-4-éthylène, le radical 1-méthylcyclohexène-4-éthylène, le radical 2-méthylcyclohexène-4-éthylène, le radical 5-méthylcyclohexène-4-éthylène, le radical 1,2-diméthyl-cyclohexène-4-éthylène, le radical 1,5-diméthylcyclohexène-4-éthylène, le radical 2,5-diméthylcyclohexène-4-éthylène, le radical 1,2,5-triméthylcyclohexène-4-éthylène, le radical cyclohexène-4-propylène, le radical 1-méthylcyclohexène-4-propylène, le radical 2-méthylcyclohexène-4-propylène, le radical 5-méthylcyclohexène-4-propylène, le radical 1,2-diméthyl-cyclohexène-4-propylène, le radical 1,5-diméthylcyclohexène-4-propylène, le radical 2,5-diméthylcyclohexène-4-propylène, le radical 1,2,5-triméthylcyclohexène-4-propylène, le radical cyclopentène-4-méthylène, le radical 1-méthylcyclopentène-4-méthylène, le radical 3-méthylcyclopentène-4-méthylène, le radical 1,2-diméthylcyclopentène-4-méthylène, le radical 3,5-diméthylcyclopentène-4-méthylène, le radical 1,3-diméthyl-cyclopentène-4-méthylène, le radical 2,3-diméthylcyclopentène-4-méthylène, le radical 1,2,3-triméthylcyclopentène-4-méthylène, le radical 1,2,3,5-tétraméthylcyclopentène-4-méthylène, le radical cyclopentène-4-éthylène, le radical 1-méthylcyclopentène-4-éthylène, le radical 3-méthyl-cyclopentène-4-éthylène, le radical 1,2-diméthylcyclopentène-4-éthylène, le radical 3,5-diméthylcyclopentène-4-éthylène, le radical 1,3-diméthylcyclopentène-4-éthylène, le radical 2,3-diméthylcyclopentène-4-éthylène, le radical 1,2,3-triméthylcyclopentène-4-éthylène, le radical 1,2,3,5-tétraméthylcyclopentène-4-éthylène, le radical cyclopentène-4-propylène, le radical 1-méthylcyclopentène-4-propylène, le radical 3-méthylcyclopentène-4-propylène, le radical 1,2-diméthylcyclopentène-4-propylène, le radical 3,5-diméthylcyclopentène-4-propylène, le radical 1,3-diméthyl-cyclopentène-4-propylène, le radical 2, 3-diméthylcyclopentène-4-propylène, le radical 1,2,3-triméthylcyclopentène-4-propylène et le radical 1,2,3,5-tétraméthylcyclopentène-4-propylène.

38. Composition suivant la revendication 1, ladite composition étant un terpolymère éthylène/acrylate de méthyle/acrylate de cyclohexénylméthyle, un copolymère acrylate de cyclohexénylméthyle/éthylène, un copolymère méthacrylate de cyclohexénylméthyle/styrène, un homopolymère d'acrylate de cyclohexényl-méthyle ou un copolymère acrylate de méthyle/acrylate de cyclohexénylméthyle.

39. Composition suivant la revendication 1, dans laquelle les caractéristiques d'odeur et de goût des produits emballés avec le matériau constitué de la composition ne sont pas altérés en résultat de l'oxydation de la composition.

40. Composition suivant la revendication 1, dans laquelle il n'existe aucune fragmentation significative des groupes pendants oléfiniques et groupes de liaison du squelette polymère en résultat de l'oxydation de la composition.

41. Composition suivant la revendication 1, dans laquelle le catalyseur à base de métal de transition est un sel métallique.

42. Composition suivant la revendication 41, dans laquelle le métal dans le sel métallique est le cobalt.

43. Composition suivant la revendication 41, dans laquelle le sel métallique est choisi dans le groupe consistant en néodécanoate de cobalt, 2-éthylhexanoate de cobalt, oléate de cobalt et stéarate de cobalt.

44. Composition suivant la revendication 1, comprenant en outre au moins une matière de déclenchement pour amplifier l'initiation de piégeage de l'oxygène.

45. Composition suivant la revendication 44, dans laquelle la matière de déclenchement est un photo-initiateur.

46. Article manufacturé convenable comme récipient, récipient qui inhibe l'oxydation du contenu du récipient en éliminant l'oxygène du récipient et en inhibant la pénétration d'oxygène dans le récipient depuis l'extérieur du récipient, ledit article comprenant une composition piégeant l'oxygène suivant la revendication 1.

47. Article manufacturé suivant la revendication 46, dans lequel les caractéristiques d'odeur et de goût des produits emballés avec un matériau constitué de la composition ne sont pas altérés en résultat de l'oxydation de la composition.

48. Article manufacturé suivant la revendication 46, dans lequel il n'existe aucune fragmentation significative des groupes pendants oléfiniques et des groupes de liaison du squelette polymère en résultat de l'oxydation de la composition.

49. Article manufacturé suivant la revendication 46, ledit article étant un emballage.

50. Article manufacturé suivant la revendication 49, dans lequel l'emballage comprend un film flexible ayant une épaisseur d'au plus 10 mil ou une feuille flexible ayant une épaisseur d'au moins 10 mil.

51. Article manufacturé suivant la revendication 49, dans lequel le système piégeant l'oxygène de l'emballage comprend au moins une couche supplémentaire choisie entre des couches faisant barrière à l'oxygène, des couches sélectives polymères et des couches thermosoudables.

52. Article manufacturé suivant la revendication 49, ledit article étant un emballage avec un produit alimentaire présent dans l'emballage.

53. Article manufacturé suivant la revendication 49, ledit article étant un emballage pour emballer un produit cosmétique, un produit chimique, un dispositif électronique, un pesticide ou une composition pharmaceutique.

54. Film multicouche comprenant l'article manufacturé suivant la revendication 46 et au moins une couche fonctionnelle supplémentaire.

55. Film multicouche suivant la revendication 54, dans lequel au moins une couche supplémentaire est choisie entre des couches faisant barrière à l'oxygène, des couches polymères jouant le rôle de barrières sélectives, des couches structurales et des couches thermosoudables.

56. Film multicouche suivant la revendication 54, dans lequel ladite au moins une couche supplémentaire est une couche faisant barrière à l'oxygène.

57. Film multicouche suivant la revendication 56, comprenant en outre au moins une couche polymère jouant le rôle de barrière sélective.

58. Film multicouche suivant la revendication 56, comprenant en outre au moins une couche thermosoudable.

59. Film multicouche suivant la revendication 56, comprenant en outre au moins une couche structurale.

60. Article suivant la revendication 46, ledit article étant un récipient rigide, un joint d'étanchéité, un timbre, un dispositif de fermeture de récipient, une capsule de bouteille, un insert de capsule de bouteille ou une pièce façonnée, moulée ou thermoformée.

61. Article suivant la revendication 60, dans lequel la pièce façonnée, moulée ou thermoformée, est une bouteille ou une barquette.

62. Composition piégeant l'oxygène suivant l'une quelconque des revendications 39 à 42, qui est sous forme d'une couche.

63. Couche suivant la revendication 62, ladite couche comprenant en outre un diluant polymère.

64. Couche suivant la revendication 63, dans laquelle ledit diluant est un polymère thermoplastique.

65. Couche suivant la revendication 62, ladite couche étant adjacente à une ou plusieurs couches supplémentaires.

66. Couche suivant la revendication 65, dans laquelle au moins une couche supplémentaire est une barrière à l'oxygène.

67. Couche suivant la revendication 66, dans laquelle ladite barrière à l'oxygène comprend un membre du groupe consistant en poly(éthylène-alcool vinylique), polyacrylonitrile, poly(chlorure de vinyle), polyamides, poly(dichlorure de vinylidène), poly(téréphtalate d'éthylène), silice, une feuille métallique et des films polymères métallisés.

68. Couche suivant la revendication 65, dans laquelle une ou plusieurs de ladite ou desdites couches supplémentaires est coextrudée avec ladite couche.

69. Couche suivant la revendication 65, dans laquelle une ou plusieurs de ladite ou desdites couches supplémentaires sont stratifiées sur ladite couche.

70. Couche suivant la revendication 65, dans laquelle une ou plusieurs de ladite ou desdites couches supplémentaires sont appliquées sous forme de revêtement sur ladite couche.

71. Couche suivant la revendication 65, ladite couche étant flexible.

72. Couche suivant la revendication 65, ladite couche étant transparente.

73. Article d'emballage, ledit article comprenant une couche suivant la revendication 62.

74. Procédé pour la production d'une matière polymère par un procédé choisi dans le groupe consistant en une estérification, une transestérification, une amidation, une transamidation, une polymérisation directe, dans lequel la matière polymère comprend un squelette polymère, des groupes pendants oléfiniques cycliques et des groupes de liaison liant le squelette aux groupes pendants, ledit squelette polymère, lesdits groupes de liaison et lesdits groupes pendants cycliques comprenant des motifs répétés, chaque motif ayant une structure (III) suivante : 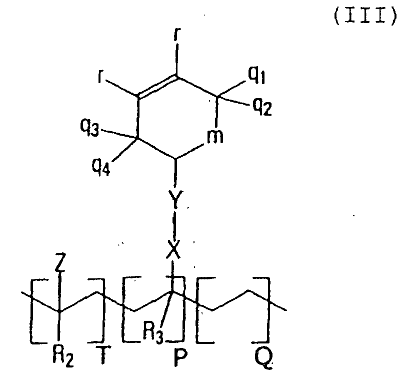 dans laquelle P+T+Q est égal à 100 % en moles de la composition totale ; P est supérieur à 0 % en moles de la composition totale, Z est choisi dans le groupe consistant en un groupe aryle ; un groupe -(C=O)OR₁ ; -O(C=O)R₁ ; et un groupe alkylaryle de structure : 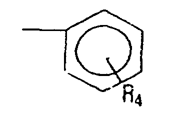 dans laquelle R₄ est choisi dans le groupe consistant en des groupes -CH₃, -C₂H₅ et -H ; R₁ est choisi dans le groupe consistant en des groupes -H, -CH₃, -C₂H₅, -C₃H₇ et -C₄H₉ ; R₂ et R₃ sont choisis dans le groupe consistant en des groupes -H, et -CH₃ ; X est choisi dans le groupe consistant en des groupes -O-, -NH-, -(C=O)O-, -(C=O)NH-, -(C=O)S-, -O(C=O)-et -(CHR)_{ℓ} ; ℓ représente un nombre entier de 1 à 6 ; Y représente un groupe -(CHR)ₙ- ou, lorsque X représente un groupe -(C=O)O-, Y représente un groupe -(CHR)ₙ- ou CHOH-CH₂-O-, dans lequel n représente un nombre entier de 0 à 12, R étant choisi dans le groupe consistant en des groupes -H, -CH₃ et -C₂H₅ ; q₁, q₂, q₃, q₄ et r sont choisis dans le groupe consistant en des groupes -H, -CH₃ et -C₂H₅ ; et m représente un groupe -(CH₂)ₙ- dans lequel n représente un nombre entier de 0 à 4 ; et, lorsque r représente -H, au moins un de q₁, q₂, q₃ et q₄ représente un groupe -H.

75. Procédé suivant la revendication 74, dans lequel la préparation de la matière polymère comprend les étapes consistant :
a) à choisir des polymères dans le groupe consistant en styrène/anhydride maléique, éthylène/anhydride maléique, éthylène/acide acrylique, éthylène/acide méthacrylique, acide acrylique, acide méthacrylique, styrène/acide méthacrylique, éthylène/acrylate de méthyle, éthylène/acrylate d'éthyle, éthylène/acrylate de butyle, méthacrylate de méthyle, acrylate de méthyle et styrène/méthacrylate de méthyle pour former un mélange, et à combiner les polymères avec un composé estérifiant/transestérifiant choisi dans le groupe consistant en cyclohexène-4-méthanol, 1-méthylcyclohexène-4-méthanol, 2-méthylcyclohexène-4-méthanol, 5-méthylcyclohexène-4-méthanol, 1,2-diméthylcyclohexène-4-méthanol, 1, 5-diméthyl-cyclohexène-4-méthanol, 2,5-diméthylcyclohexène-4-méthanol, 1,2,5-triméthylcyclohexène-4-méthanol, cyclohexène-4-éthanol, 1-méthylcyclohexène-4-éthanol, 2-méthylcyclohexène-4-éthanol, 5-méthylcyclohexène-4-éthanol, 1,2-diméthylcyclohexène-4-éthanol, 1,5-diméthylcyclohexène-4-éthanol, 2,5-diméthylcyclohexène-4-éthanol, 1,2,5-triméthylcyclohexène-4-éthanol, cyclohexène-4-propanol, 1-méthylcyclohexène-4-propanol, 2-méthylcyclohexène-4-propanol, 5-méthylcyclohexène-4-prophanol, 1,2-diméthylcyclohexène-4-propanol, 1,5-diméthylcyclohexène-4-propanol, 2,5-diméthylcyclohexène-4-propanol, 1,2,5-triméthylcyclohexène-4-propanol, cyclopentène-4-méthanol, 1-méthylcyclopentène-4-méthanol, 3-méthylcyclopentène-4-méthanol, 1,2-diméthyl-cyclopentène-4-méthanol, 3,5-diméthylcyclopentène-4-méthanol, 1,3-diméthylcyclopentène-4-méthanol, 2,3-diméthylcyclopentène-4-méthanol, 1,2,3-triméthylcyclopentène-4-méthanol, 1,2,3,5-tétraméthylcyclopentène-4-méthanol, cyclopentène-4-éthanol, 1-méthylcyclopentène-4-éthanol, 3-méthylcyclopentène-4-éthanol, 1,2-diméthylcyclopentène-4-éthanol, 3,5-diméthylcyclopentène-4-éthanol, 1,3-diméthylcyclopentène-4-éthanol, 2,3-diméthyl-cyclopentène-4-éthanol, 1,2,3-triméthylcyclopentène-4-éthanol, 1,2,3,5-tétraméthylcyclopentène-4-éthanol, cyclopentène-4-propanol, 1-méthylcyclopentène-4-propanol, 3-méthylcyclopentène-4-propanol, 1,2-diméthylcyclopentène-4-propanol, 3,5-diméthyl-cyclopentène-4-propanol, 1,3-diméthylcyclopentène-4-propanol, 2,3-diméthylcyclopentène-4-propanol, 1,2,3-triméthylcyclopentène-4-propanol et 1,2,3,5-tétraméthylcyclopentène-4-propanol ;
b) à chauffer les polymères et les composés estérifiants/transestérifiants choisis en (a) pour former une masse polymère fondue ;
c) à traiter la masse fondue dans une extrudeuse dans des conditions d'estérification/transestérification avec des catalyseurs d'estérification/transestérification et des antioxydants protégeant la masse fondue contre l'oxydation au cours de l'extrusion, de telle sorte que la masse polymère fondue subisse une estérification des anhydrides polymères avec les groupes pendants oléfiniques cycliques, une estérification des acides polymères avec les groupes pendants oléfiniques cycliques ou un échange des groupes alkyle des esters polymères avec des groupes pendants oléfiniques cycliques ; et
d) à éliminer les produits organiques volatils et sous-produits de la masse fondue.

76. Procédé suivant la revendication 74, dans lequel la préparation de la matière polymère comprend les étapes consistant :
a) à choisir des polymères dans le groupe consistant en styrène/anhydride maléique, éthylène/anhydride maléique, éthylène/acide acrylique, éthylène/acide méthacrylique, acide acrylique, acide méthacrylique, styrène/acide méthacrylique, éthylène/acrylate de méthyle, éthylène/acrylate d'éthyle, éthylène/acrylate de butyle, méthacrylate de méthyle, acrylate de méthyle et styrène/méthacrylate de méthyle pour former un mélange, et à combiner les polymères avec un composé d'amidation/transamidation choisi dans le groupe consistant en cyclohexène-4-méthylamine, 1-méthylcyclohexène-4-méthylamine, 2-méthylcyclohexène-4-méthylamine, 5-méthylcyclohexène-4-méthylamine, 1,2-diméthylcyclohexène-4-méthylamine, 1,5-diméthylcyclohexène-4-méthylamine, 2,5-diméthylcyclohexène-4-méthylamine, 1,2,5-triméthylcyclohexène-4-méthylamine, cyclohexène-4-éthylamine, 1-méthylcyclohexène-4-éthylamine, 2-méthylcyclohexène-4-éthylamine, 5-méthylcyclohexène-4-éthylamine, 1,2-diméthylcyclohexène-4-éthylamine, 1,5-diméthylcyclohexène-4-éthylamine, 2,5-diméthylcyclohexène-4-éthylamine, 1,2,5-triméthylcyclohexène-4-éthylamine, cyclohexène-4-propylamine, 1-méthylcyclohexène-4-propylamine, 2-méthylcyclohexène-4-propylamine, 5-méthylcyclohexène-4-propylamine, 1,2-diméthylcyclohexène-4-propylamine, 1,5-diméthylcyclohexène-4-propylamine, 2,5-diméthylcyclohexène-4-propylamine, 1,2,5-triméthylcyclohexène-4-propylamine, cyclopentène-4-méthylamine, 1-méthyl-cyclopentène-4-méthylamine, 3-méthylcyclopentène-4-méthylamine, 1,2-diméthylcyclopentène-4-méthylamine, 3,5-diméthylcyclopentène-4-méthylamine, 1,3-diméthylcyclopentène-4-méthylamine, 2,3-diméthylcyclopentène-4-méthylamine, 1,2,3-triméthylcyclopentène-4-méthylamine, 1,2,3,5-tétraméthylcyclopentène-4-méthylamine, cyclopentène-4-éthylamine, 1-méthylcyclopentène-4-éthylamine, 3-méthylcyclopentène-4-éthylamine, 1,2-diméthylcyclopentène-4-éthylamine, 3,5-diméthylcyclopentène-4-éthylamine, 1,3-diméthylcyclopentène-4-éthylamine, 2,3-diméthylcyclopentène-4-éthylamine 1,2,3-triméthylcyclopentène-4-éthylamine, 1,2,3,5-tétraméthylcyclopentène-4-éthylamine, cyclopentène-4-propylamine, 1-méthylcyclopentène-4-propylamine, 3-méthylcyclopentène-4-propylamine, 1,2-diméthylcyclopentène-4-propylamine, 3,5-diméthyl-cyclopentène-4-propylamine, 1,3-diméthylcyclopentène-4-propylamine, 2,3-diméthylcyclopentène-4-propylamine, 1,2,3-triméthylcyclopentène-4-propylamine et 1,2,3,5-tétraméthyl-cyclopentène-4-propylamine ;
b) à chauffer les polymères et les composés d'amidation/transamidation choisis en (a) pour former une masse polymère fondue ;
c) à traiter la masse fondue dans une extrudeuse dans des conditions d'amidation/transamidation avec des catalyseurs d'amidation/transamidation et des antioxydants protégeant la masse fondue contre l'oxydation au cours de l'extrusion, de telle sorte que la masse polymère fondue subisse une amidation des anhydrides polymères avec des groupes pendants oléfiniques cycliques, une amidation des acides polymères avec des groupes pendants oléfiniques cycliques ou un échange des groupes alkyle des esters polymères avec des groupes pendants oléfiniques cycliques ; et
d) à éliminer les produits organiques volatils et sous-produits de la masse fondue.

77. Procédé suivant la revendication 74, dans lequel la préparation de la matière polymère comprend les étapes consistant :
(a) à introduire dans un autoclave de l'éthylène et un monomère vinylique comprenant un groupe cyclohexane pendant ;
(b) à agiter l'éthylène et le monomère vinylique dans l'autoclave pour obtenir un mélange ;
(c) à ajouter un initiateur de polymérisation avant, pendant ou après l'étape d'agitation ;
(d) à polymériser le mélange pour obtenir un polymère ; et
(e) à isoler et purifier le polymère.

78. Procédé suivant la revendication 77, dans lequel, dans l'étape (a), une alpha-oléfine est introduite dans l'autoclave avec l'éthylène et le monomère vinylique et, dans l'étape (b), l'alpha-oléfine est agitée avec l'éthylène et le monomère vinylique pour obtenir le mélange.

79. Procédé suivant la revendication 75, dans lequel le squelette polymère est éthylénique et les groupes de liaison sont choisis dans le groupe consistant en :
-O-(CHR)ₙ- ; -(C=O)-O-(CHR)ₙ , -NH-(CHR)ₙ- ;
-O-(C=O)-(CHR)ₙ- ; -(C=O)-NH-(-CHR)ₙ- ;
et
-(C=O)-O-CHOH-CH₂-O- ;
dans lequel R représente un atome d'hydrogène ou un groupe alkyle choisi dans le groupe consistant en les groupes méthyle, éthyle, propyle et butyle et n représente un nombre entier de 1 à 12.

80. Procédé suivant la revendication 76, dans lequel le squelette polymère est un squelette éthylénique et le groupe de liaison est un groupe :
-(C=O)-NH-(-CHR)ₙ
dans lequel R représente un atome d'hydrogène ou un groupe alkyle choisi dans le groupe consistant en les groupes méthyle, éthyle, propyle et butyle et n représente un nombre entier de 1 à 12.

81. Procédé suivant la revendication 74, dans lequel la matière est une composition piégeant l'oxygène comprenant en outre un catalyseur à base de métal de transition.

82. Procédé suivant la revendication 81, dans lequel le catalyseur à base de métal de transition est un sel métallique.

83. Procédé suivant la revendication 82, dans lequel le métal dans le sel métallique est le cobalt.

84. Procédé suivant la revendication 82, dans lequel le sel métallique est choisi dans le groupe consistant en néodécanoate de cobalt, 2-éthylhexanoate de cobalt, oléate de cobalt et stéarate de cobalt.

85. Procédé suivant la revendication 81, dans lequel la composition piégeant l'oxygène comprend en outre au moins une matière de déclenchement pour amplifier l'initiation de piégeage de l'oxygène.

86. Procédé suivant la revendication 85, dans lequel la matière de déclenchement est un photo-initiateur.

87. Procédé suivant la revendication 74, dans lequel les groupes pendants oléfiniques cycliques ont la structure (II) : 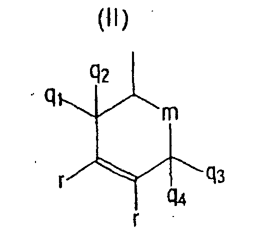 dans laquelle q₁, q₂, q₃, q₄ et r sont choisis dans le groupe consistant en des groupes -H, -CH₃ et -C₂H₅ ; et m représente un groupe -(CH₂)ₙ-, dans lequel n représente un nombre entier de 0 à 4 ; et, lorsque r représente un groupe -H, au moins un de q₁, q₂, q₃ et q₄ représente un groupe -H.

88. Procédé suivant la revendication 74, dans lequel les groupes fonctionnels avec des groupes pendants oléfiniques cycliques fixés sont greffés sur le squelette de liaison par une réaction d'estérification, de transestérification, d'amidation ou de transamidation.

89. Procédé suivant la revendication 74, dans lequel, la réaction est une réaction en solution ou une extrusion réactive.

90. Procédé suivant la revendication 74, dans lequel la réaction d'estérification, de transestérification, d'amidation ou de transamidation est catalysée par un catalyseur choisi dans le groupe consistant en des acides forts non oxydants, des amines tertiaires, des alcoolates de Groupe I, des alcoolates du Groupe IVB et des composés organométalliques du Groupe IVA.

91. Procédé suivant la revendication 90, dans lequel le catalyseur est choisi dans le groupe consistant en acide toluènesulfonique, méthylate de sodium, titanate de tétrabutyle, titanate de tétra-isopropyle, titane de tétra-n-propyle, titanate de tétra-éthyle, 2-hydroxypyridine et dilaurate de dibutylétain.

92. Procédé suivant la revendication 74, dans lequel les groupes pendants oléfiniques cycliques sont choisis dans le groupe consistant en le radical cyclohexène-4-méthylène, le radical 1-méthylcyclohexène-4-méthylène, le radical 2-méthylcyclohexène-4-méthylène, le radical 5-méthylcyclohexène-4-méthylène, le radical 1,2-diméthylcyclohexène-4-méthylène, le radical 1,5-diméthylcyclohexène-4-méthylène, le radical 2,5-diméthylcyclohexène-4-méthylène, le radical 1,2,5-triméthylcyclohexène-4-méthylène, le radical cyclohexène-4-éthylène, le radical 1-méthylcyclohexène-4-éthylène, le radical 2-méthylcyclohexène-4-éthylène, le radical 5-méthylcyclohexène-4-éthylène, le radical 1,2-diméthyl-cyclohexène-4-éthylène, le radical 1,5-diméthylcyclohexène-4-éthylène, le radical 2,5-diméthylcyclohexène-4-éthylène, le radical 1,2,5-triméthylcyclohexène-4-éthylène, le radical cyclohexène-4-propylène, le radical 1-méthylcyclohexène-4-propylène, le radical 2-méthylcyclohexène-4-propylène, le radical 5-méthylcyclohexène-4-propylène, le radical 1,2-diméthyl-cyclohexène-4-propylène, le radical 1,5-diméthylcyclohexène-4-propylène, le radical 2,5-diméthylcyclohexène-4-propylène, le radical 1,2,5-triméthylcyclohexène-4-propylène, le radical cyclopentène-4-méthylène, le radical 1-méthylcyclopentène-4-méthylène, le radical 3-méthylcyclopentène-4-méthylène, le radical 1,2-diméthylcyclopentène-4-méthylène, le radical 3,5-diméthylcyclopentène-4-méthylène, le radical 1,3-diméthyl-cyclopentène-4-méthylène, le radical 2,3-diméthylcyclopentène-4-méthylène, le radical 1,2,3-triméthylcyclopentène-4-méthylène, le radical 1,2,3,5-tétraméthylcyclopentène-4-méthylène, le radical cyclopentène-4-éthylène, le radical 1-méthylcyclopentène-4-éthylène, le radical 3-méthyl-cyclopentène-4-éthylène, le radical 1,2-diméthylcyclopentène-4-éthylène, le radical 3,5-diméthylcyclopentène-4-éthylène, le radical 1,3-diméthylcyclopentène-4-éthylène, le radical 2,3-diméthylcyclopentène-4-éthylène, le radical 1,2,3-triméthylcyclopentène-4-éthylène, le radical 1,2,3,5-tétraméthylcyclopentène-4-éthylène, le radical cyclopentène-4-propylène, le radical 1-méthylcyclopentène-4-propylène, le radical 3-méthylcyclopentène-4-propylène, le radical 1,2-diméthylcyclopentène-4-propylène, le radical 3,5-diméthylcyclopentène-4-propylène, le radical 1,3-diméthyl-cyclopentène-4-propylène, le radical 2, 3-diméthylcyclopentène-4-propylène, le radical 1,2,3-triméthylcyclopentène-4-propylène et le radical 1,2,3,5-tétraméthylcyclopentène-4-propylène.

93. Procédé suivant la revendication 74, dans lequel la composition est un terpolymère éthylène/acrylate de méthyle/acrylate de cyclohexénylméthyle, un copolymère acrylate de cyclohexénylméthyle/éthylène, un copolymère méthacrylate de cyclohexénylméthyle/styrène, un homopolymère d'acrylate de cyclohexénylméthyle ou un copolymère acrylate de méthyle/acrylate de cyclohexénylméthyle.

94. Article manufacturé suivant la revendication 46, ledit article étant un récipient rigide multicouche pour l'emballage de boissons ou d'aliments, comprenant au moins une couche intérieure, une couche extérieure et une couche centrale entre la couche intérieure et la couche extérieure, dans lequel les couches intérieure et extérieure sont constituées de polyesters ou copolyesters aromatiques, et dans lequel la couche centrale est constituée de la composition piégeant l'oxygène.

95. Article manufacturé suivant la revendication 94, dans lequel la couche intérieure et la couche extérieure comprennent des polyesters ou copolyesters aromatiques choisis dans le groupe consistant en poly(téréphtalate d'éthylène), poly(naphtalate d'éthylène), poly(téréphtalate de propylène), poly(téréphtalate de butylène), poly(isophtalate d'éthylène), poly(téréphtalate de cyclohexanediméthanol), poly(naphtalate de butylène), poly(naphtalate de cyclohexanediméthanol) et leurs copolymères et mélanges.

96. Article manufacturé suivant la revendication 94, dans lequel le squelette polymère est éthylénique et les groupes pendants oléfiniques cycliques sont liés au squelette polymère par des groupes de liaison choisis dans le groupe consistant en des groupes :
-O-(CHR)ₙ- ; -(C=O)-O-(CHR)ₙ- ; -NH-(CHR)ₙ- ; -O-(C=O)-(CHR)ₙ- ;
-(C=O)-NH-(-CHR)ₙ- et - (C=O) -O-CHOH-CH₂-O- ;
dans lesquels R représente un atome d'hydrogène ou un groupe alkyle choisi dans le groupe consistant en les groupes méthyle, éthyle, propyle et butyle et n représente un nombre entier de 1 à 12.

97. Article manufacturé suivant la revendication 94, dans lequel les groupes pendants oléfiniques cycliques ont la structure (II) : 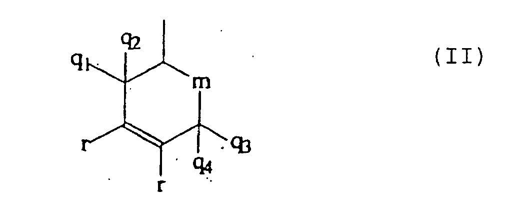 dans laquelle q₁, q₂, q₃, q₄ et r sont choisis dans le groupe consistant en des groupes -H, -CH₃ et -C₂H₅ ; et m représente un groupe -(CH₂)ₙ- dans lequel n représente un nombre entier de 0 à 4 ; et, lorsque r représente -H, au moins un de q₁, q₂, q₃ et q₄ représente un groupe -H.

98. Article manufacturé suivant la revendication 96, dans lequel le squelette polymère, les groupes de liaison et les groupes pendants oléfiniques cycliques comprennent des motifs répétés, chaque motif ayant une structure (III) suivante : 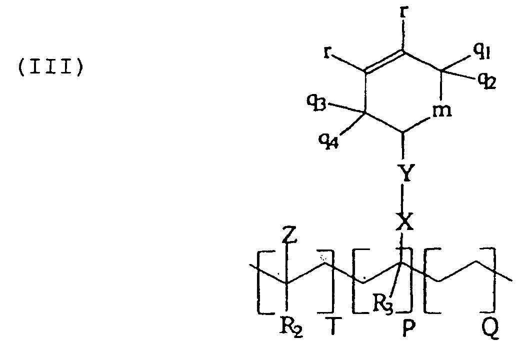 dans laquelle P+T+Q est égal à 100 % en moles de la composition totale ; P est supérieur à 0 % en moles de la composition totale, Z est choisi dans le groupe consistant en un groupe aryle, un groupe -(C=O)OR₁ ; -O(C=O)R₁ ; et un groupe alkylaryle de structure (IV) : 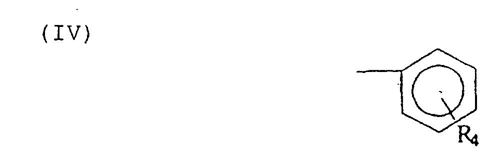 dans laquelle R₄ est choisi dans le groupe consistant en des groupes -CH₃, -C₂H₅ et -H ; R₁ est choisi dans le groupe consistant en des groupes -H, -CH₃, -C₂H₅, -C₃H₇ et -C₄H₉ ; R₂ et R₃ sont choisis dans le groupe consistant en des groupes -H, et -CH₃ ; X est choisi dans le groupe consistant en des groupes -O-, -NH-, -(C=O)O-, -(C=O)NH-, -(C=O)S-, -O(C=O)- et (CHR)ℓ ; ℓ représente un nombre entier de 1 à 6 ; Y représente un groupe -(CHR)ₙ- dans lequel n représente un nombre entier de 0 à 12, R étant choisi dans le groupe consistant en des groupes -H, -CH₃ et -C₂H₅ ; q₁, q₂, q₃, q₄ et r sont choisis dans le groupe consistant en des groupes -H, -CH₃ et -C₂H₅ ; et m représente un groupe -(CH₂)ₙ- dans lequel n est un nombre entier de 0 à 4 ; et, lorsque r représente -H, au moins un de q₁, q₂, q₃ et q₄ représente un groupe -H.

99. Article manufacturé suivant la revendication 94, dans lequel le groupe pendant oléfinique cyclique est choisi dans le groupe consistant en le radical cyclohexène-4-méthylène, le radical 1-méthylcyclohexène-4-méthylène, le radical 2-méthylcyclohexène-4-méthylène, le radical 5-méthylcyclohexène-4-méthylène, le radical 1,2-diméthyl-cyclohexène-4-méthylène, le radical 1,5-diméthylcyclohexène-4-méthylène, le radical 2,5-diméthylcyclohexène-4-méthylène, le radical 1,2,5-triméthylcyclohexène-4-méthylène, le radical cyclohexène-4-éthylène, le radical 1-méthylcyclohexène-4-éthylène, le radical 2-méthylcyclohexène-4-éthylène, le radical 5-méthylcyclohexène-4-éthylène, le radical 1,2-diméthyl-cyclohexène-4-éthylène, le radical 1,5-diméthylcyclohexène-4-éthylène, le radical 2,5-diméthylcyclohexène-4-éthylène, le radical 1,2,5-triméthylcyclohexène-4-éthylène, le radical cyclohexène-4-propylène, le radical 1-méthylcyclohexène-4-propylène, le radical 2-méthylcyclohexène-4-propylène, le radical 5-méthylcyclohexène-4-propylène, le radical 1,2-diméthyl-cyclohexène-4-propylène, le radical 1,5-diméthylcyclohexène-4-propylène, le radical 2,5-diméthylcyclohexène-4-propylène et le radical 1,2,5-triméthylcyclohexène-4-propylène.

100. Article manufacturé suivant la revendication 94, dans lequel la composition piégeant l'oxygène est choisie dans le groupe consistant en un terpolymère éthylène/acrylate de méthyle/acrylate de cyclohexényl-méthyle, un copolymère acrylate de cyclohexényl-méthyle/éthylène, un copolymère méthacrylate de cyclohexényl-méthyle/styrène, un homopolymère d'acrylate de cyclohexényl-méthyle ou un copolymère acrylate de méthyle/acrylate de cyclohexénylméthyle.

101. Article manufacturé suivant la revendication 94, dans lequel la couche extérieure comprend du poly-(téréphtalate d'éthylène), du poly(naphtalate d'éthylène) ou un mélange de poly(téréphtalate d'éthylène) et de poly(naphtalate d'éthylène).

102. Article manufacturé suivant la revendication 94, dans lequel la composition comprend en outre une première couche de liaison entre la couche centrale et la couche intérieure, et une seconde couche de liaison entre la couche centrale et la couche extérieure.

103. Article manufacturé suivant la revendication 94, dans lequel le catalyseur à base de métal de transition est un sel métallique.

104. Article manufacturé suivant la revendication 103, dans lequel le métal dans le sel métallique est le cobalt.

105. Article manufacturé suivant la revendication 104, dans lequel le sel métallique est choisi dans le groupe consistant en néodécanoate de cobalt, 2-éthylhexénoate de cobalt, oléate de cobalt et stéarate de cobalt.

106. Article manufacturé suivant la revendication 94, dans lequel la composition piégeant l'oxygène comprend en outre au moins une matière de déclenchement pour amplifier l'initiation de piégeage de l'oxygène.

107. Article manufacturé suivant la revendication 94, dans lequel la matière de déclenchement est un photo-initiateur.

108. Article manufacturé suivant la revendication 107, dans lequel le photo-initiateur a une plage d'absorption de lumière ultraviolette supérieure à 320 nm.

109. Article manufacturé suivant la revendication 94, dans lequel le récipient rigide convient à l'emballage de boissons sensibles à l'oxygène, pour de longues durées de fraîcheur et de conservation.

110. Article manufacturé suivant la revendication 109, dans lequel la boisson sensible à l'oxygène est de la bière, du vin ou un jus de fruit.
